(19) Europäisches Patentamt
European Patent Office
Office européen des brevets

(11) EP 0 759 041 B1

(12) **EUROPÄISCHE PATENTSCHRIFT**

(45) Veröffentlichungstag und Bekanntmachung des Hinweises auf die Patenterteilung:
**11.08.1999 Patentblatt 1999/32**

(21) Anmeldenummer: **95919400.2**

(22) Anmeldetag: **05.05.1995**

(51) Int Cl.⁶: **C08G 18/08**, C08G 18/63, C08G 18/70, D21H 17/57

(86) Internationale Anmeldenummer:
**PCT/EP95/01702**

(87) Internationale Veröffentlichungsnummer:
**WO 95/31492 (23.11.1995 Gazette 1995/50)**

(54) **HILFSMITTEL FÜR DIE PAPIERVEREDLUNG**

PAPER FINISHING AID

AUXILIAIRES POUR LE FINISSAGE DU PAPIER

(84) Benannte Vertragsstaaten:
**AT BE CH DE ES FR GB IT LI NL PT SE**

(30) Priorität: **11.05.1994 DE 4416621**
**30.05.1994 DE 4418836**
**30.05.1994 DE 4418835**
**03.06.1994 DE 4419572**

(43) Veröffentlichungstag der Anmeldung:
**26.02.1997 Patentblatt 1997/09**

(73) Patentinhaber: **BAYER AG**
**51368 Leverkusen (DE)**

(72) Erfinder:
- **REINERS, Jürgen**
**D-51373 Leverkusen (DE)**
- **KOPP, Jürgen**
**D-51519 Odenthal (DE)**
- **KÖNIG, Joachim**
**D-51519 Odenthal (DE)**
- **TRÄUBEL, Harro**
**D-51373 Leverkusen (DE)**
- **WENDEROTH, Eckhard**
**D-51381 Leverkusen (DE)**
- **JANSEN, Bernhard**
**D-51061 Köln (DE)**
- **PROBST, Joachim**
**D-51375 Leverkusen (DE)**

(56) Entgegenhaltungen:
**EP-A- 0 024 296**
**EP-A- 0 234 459**
**EP-A- 0 564 912**
**DE-A- 3 718 520**
**FR-A- 2 360 714**
**US-A- 3 589 978**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 759 041 B1

Printed by Jouve, 75001 PARIS (FR)

## Beschreibung

Die Erfindung betrifft Hilfsmittel für die Papierveredlung, d.h. Leimungsmittel, Naß- und Trockenfestmittel, auf Basis ionischer Gruppen und/oder Polyethergruppen enthaltender Polyisocyanate, vorzugsweise in Form wäßriger Dispersionen.

Polyamin-Epichlorhydrin-Harze und Polyamidamin-Epichlorhydrin-Harze werden seit langem zur Verbesserung der Trocken- und Naßfestigkeit von Papier eingesetzt. Kationische Polykondensate mit hydrophoben Resten, z. B. auf Basis fettsäuremodifizierter Polyamine sind auch als Leimungsmittel für Papier geeignet. Es ist weiter bekannt, daß die Festigkeit von Papier im trockenen Zustand durch Stärke-Applikation erhöht werden kann.

Der Einsatz von Stärke auf der Oberfläche verbessert auch die Bedruckbarkeit von Papier und erhöht generell die Oberflächenfestigkeit.

Aus den DE-OS 42 11 480 und 42 26 110 sind Methoden zur chlorfreien Naßfestausrüstung mit wasserdispergierbaren Polyisocyanaten bekannt.

Aus der US 3 531 429 sind Bindersysteme für die Papierimprägnierung bekannt, die Polyisocyanate in blokkierter Form enthalten. Die Freisetzung einer Spaltgruppe ist aus arbeitshygienischer Sicht für den Anwender unbefriedigend.

In der US 3 325 346 werden Reaktionsprodukte aus Polyethyleniminen und Polyisocyanaten zur Verbesserung der Naßsteifigkeit und Trockenfestigkeit vorgeschlagen.

Aus US 3,589,978 ist ein Verfahren zur Herstellung von naßfestem Papier durch Behandeln der Zellulosefasern mit (1) einem organischen Polyisocyanat, welches durch polymere Fettsäure modifiziert ist und (2) einem kationischen Gummi-Ether bekannt.

EP-A 0 24 296 offenbart ein Verfahren zur Herstellung von stabilen wäßrigen Dispersionen von Oligo- oder Polyurethanen.

Aus DE-A 37 18 520 sind Emulsionspolymerisate bekannt, die erhältlich sind durch radikalisch initiierte Polymerisation von Monomeren A) Acrylnitril, Methacrylnitril und Styrol und B) Acryl- und Methacrylsäureester.

Wäßrige polyisocyanathaltige Leimflottendispersionen enthaltend Stärke und Mehle sind aus EP-A 234 459 bekannt.

In der DE 2 633 396 werden anionische wäßrige PU-Dispersionen zur Griffverbesserung von Papier eingesetzt. Das mehrstufige Verfahren ist allerdings sehr aufwendig. Das Produkt enthält keine reaktiven NCO-Gruppen.

Aus der JP 80597 (800617) (Textilbericht Referat Nr.576 / 1981) sind Streichfarben aus Acryl-Copolymeren und Vernetzungsmitteln auf Basis von z.B. Polyisocyanaten bekannt.

In der EP 250 598 sind druckempfindliche Aufzeichnungsmaterialien für den mehrfachen Gebrauch beschrieben, bei denen Copolymere mit OH-Gruppen und Polyisocyanate als Klebstoffe eingesetzt werden.

Die JP 04119195 schlägt Kombinationen von Alkydharzen und Polyisocyanat-Vernetzern zur Herstellung von transparentem Papier vor. In der JP 04146296 werden auch Kombinationen aus Styrol-Acrylat-Dispersionen beschrieben, die dem gleichen Zweck dienen und dem Papier eine erhöhte Festigkeit verleihen. Auch dort werden Polyisocyanate als Vernetzer eingesetzt.

Die JP 05050778 und die JP 05051896 schlagen blockierte Polyisocyanate ($NaHSO_3$-Addukte) für die Verbesserung von Trocken- und Naßfestigkeit von Papier vor. Problematisch ist hier die Abgabe von $SO_2$ an die Umgebungsluft und Korrosion an Maschinenteilen. Außerdem kann die Cellulosefaser geschädigt werden.

Kombinationen aus Isocyanat und Stärke oder Polyvinylalkohol sind z.B. aus der JP 80/159993 bekannt.

In der FR-A 2 360 714 wird zur Beschichtung von Papier ein Zwei-Komponenten-System vorgeschlagen, bestehend aus einem polyfunktionellen Isocyanat und einer gegenüber Isocyanaten reaktiven, aktiven Wasserstoff enthaltenden Verbindung Das fertige Papier enthält 0,5 bis 35 Gew.-% ausreagiertes Polyurethan. Die polyfunktionellen Isocyanate haben jedoch den Nachteil, daß organische Hilfslösungsmittel zugesetzt werden müssen. um eine ausreichende Dispergierung in Wasser zu erreichen.

Aus der DE-OS 2 557 409 sind Harzsäureisocyanate bekannt, die sich in Gegenwart nichtionischer und anionischer Emulgatoren in Wasser dispergieren lassen.

Die in der DE-OS 2 839 310 vorgeschlagenen Dispersionen oder Emulsionen von Carbamoylsulfonaten aus Isocyanaten und Alkali- und Ammoniumbisulfiten können als Leimungsmittel eingesetzt werden.

Aus der US-PS 4 505 778 sind Masse- und Oberflächenleimungsmittel bekannt, die aus Mischungen von aromatischen Polyisocyanaten bestehen, die 1 - 10 Gew.-% eines Isocyanat-Präpolymers enthalten, das z. B. durch Umsetzung von aromatischen Polyisocyanaten mit monofunktionellen Polyethern erhalten wird.

Außerdem sind verschiedene Polyurethan- oder Polyharnstoff-Dispersionen bekannt, die als Leimungsmittel eingesetzt werden können Diese meist anionischen Produkte (vgl. DE-OS-2 457 972) weisen jedoch keine reaktiven Gruppen in Form von Isocyanatgruppen auf. Beispiele für solche Produkte finden sich in folgenden Dokumenten: FR-A 1 496 584, US-PS 3 989 659, DE-OS 2 537 653, EP-A 37 379, DE-OS 3 438 5632 und EP-A 207 414.

Die Probleme bei Alkyl-Ketendimer als Leimungsmittel bestehen vor allem in der geringen Eigenretention

und der schlechten Leimungsabstufung. Kationische Zusätze sind erforderlich. um die Eigenretention des Harzes zu verbessern. In der EP-A 74 544 sind Dispersionen beschrieben, die eine disperse Phase aus 1, verstärktem Harzleim und 2. hydrophobem Ketendimer oder hydrophoben Isocyanaten mit mindestens 12 C-Atomen enthalten, wobei zu Verbesserung der Eigenschaften ein kationisches Dispergiermittel (unter anderem ein Polyamidamin-Epichlorhydrin-Harz) eingesetzt wird.

Darüber hinaus wäre es für den Anwender vorteilhaft, ein Hilfsmittel system zu haben, das dem Papier Naß- und Trockenfestigkeit und gleichzeitig auch gut abgestufte Teilhydrophobie verleiht, d. h. als Masse- oder Oberflächenleimungsmittel geeignet ist. Für Streichrohpapiere mit niedrigem Flächengewicht etc. wird oft auch eine Erhöhung der Spaltfestigkeit und der Weiterreißarbeit gewünscht. Es bestand daher die Aufgabe, ein neues Verfahren zur Naß- und Trockenfestausrustung und/oder Leimung von cellulosehaltigem Material mittels eines chlorfreien Produktes auf Basis unblockierter Polyisocyanate bereitzustellen, die sich ohne Zusatz von Emulgatoren in Wasser emulgieren lassen und in Masse und Oberfläche eingesetzt werden können.

Weiter bestand die Aufgabe, die Leimungswirkung besser steuern zu können. Es sollten weiter die Gebrauchseigenschaften von LWC-Streichrohpapieren und Zeitungsdruckpapieren verbessert werden. Aufgrund der immer geringer werdenden Flächengewichte besteht großer Bedarf an Produkten, die die Weiterreißarbeit, Trocken- und Naßfestigkeit erhöhen und außerdem die Bedruckbarkeit/Beschreibbarkeit verbessern.

Es wurde überraschend gefunden, daß mit Hilfsmitteln auf Basis von bestimmten Polyisocyanaten diese Aufgaben gelöst werden können und hervorragende Leimungseffekte im Sinne einer Teilhydrophobierung und Papiere mit verbesserten Eigenschaften hinsichtlich Bedruckbarkeit und Festigkeit erhalten werden. Die erfindungsgemäßen Hilfsmittel werden vorzugsweise in Form wäßriger Dispersionen sowohl für den Masse-Einsatz als auch für den Oberflächen-Einsatz bei der Papierherstellung verwendet.

Gegenstand der Erfindung sind also Mittel, vorzugsweise in Form wäßriger Dispersionen, enthaltend

(M) Polyisocyanat (PI) mit (cyclo)aliphatisch gebundenen Isocyanatgruppen und ionischen Gruppen und/oder Polyethergruppen und mindestens ein Mitglied der Gruppen bestehend aus

(N) natürlichem Polymer (NP) aus der Gruppe der Polysaccharide,

(P) Polysiloxan-Pfropfcopolymer (SP 1),

(Q) wasserverdünnbarem synthetischem Copolymerisat (SP2) von olefinisch ungesättigten Verbindungen mit

a) einem Gehalt an eingebauten, zu 10 bis 100 % neutralisierten COOH-Gruppen von insgesamt 60 bis 250 Milliäquivalenten pro 100 g Feststoff und

b) einem Gehalt an chemisch eingebauten, Teil einer Estergruppe bildenden Resten der Formel -OR von 15 bis 20 Gew.-%, wobei R für einen ein- oder mehrfach olefinisch ungesättigten aliphatischen Kohlenwasserstoffrest mit 12 bis 22 C-Atomen steht, und

(R) Hydroxylgruppenhaltigem Vinylpolymerisat (SP3), welches erhältlich ist durch Polymerisation von Monomermischungen aus

a) mindestens 5 Gew.-% Styrol und/oder α-Methylstyrol, Methacrylnitril, Acrylnitril bzw. Gemische dieser Monomeren,

b) mindestens 5 Gew.-% (Meth)Acrylsäureester von monofunktionellen Alkoholen mit 1 bis 12 C-Atomen,

c) 0,1 bis 35 Gew.-% eines oder mehrerer Vinylmonomere der Formel

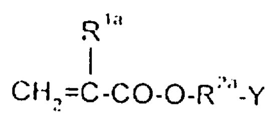

und/oder

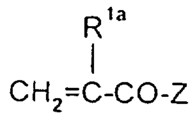

wobei

$R^{1a}$ für ein H-Atom oder eine Methylgruppe,

$R^{2a}$ für einen unverzweigten oder verzweigten Alkylenrest mit 1 bis 18 C-Atomen,

Y für ein H-Atom oder die Gruppen $-OR^{5a}$ und

Z für eine Gruppe -OH oder $-NR^{3a}R^{4a}$ steht, wobei $R^{3a}$, $R^{4a}$ und $R^{5a}$ für Wasserstoff oder einen Alkylrest mit 1 bis 4 C-Atomen stehen und die Summe a) + b) + c) 100 Gew.-% beträgt,

oder

(M) Polyisocyanat (PI) wie oben,

(N) natürliches Polymer (NP) wie oben und mindestens ein Mitglied der Gruppe bestehend aus (P), (Q) und (R) - jeweils wie oben.

Besonders überraschend ist, daß die oben beschriebenen Effekte synergistisch sind, weil die Einzelkomponenten der Hilfsmittel keine hydrophoben Eigenschaften ergeben. So werden bei der Anwendung der Einzelkomponenten Cobb-Werte > 70 $g/m^2$ erzielt. Von einer signifikanten Leimung kann man aber erst bei Werten < 40 $g/m^2$ (Wasseraufnahme) sprechen.

Im Sinne der Erfindung geeignete wasserdispergierbare Polyisocyanate (M) sind:

(Ma) Polyisocyanatgemische aus

1) von Polyethergruppen freien, tertiäre Amino- und/oder Ammoniumgruppen enthaltenden Polyisocyanaten und

2) von ionischen Gruppen, tertiären Aminogruppen und Polyethergruppen freien Polyisocyanaten E),

(Mb) Polyisocyanatgemische aus

1) von Polyethergruppen freien, tertiäre Amino- und/oder Ammoniumgruppen enthaltenden Polyisocyanaten,

2) von tertiären Aminogruppen, ionischen Gruppen und Polyethergruppen freien Polyisocyanaten E),

3) tertiäre Amino- und/oder Ammoniumgruppen und Polyethergruppen enthaltenden Polyisocyanaten und

4) von tertiären Aminogruppen und ionischen Gruppen freien, Polyethergruppen enthaltenden Polyisocyanaten,

(Mc) Polyisocyanatgemische aus

1) von tertiären Aminogruppen und ionischen Gruppen freien, Polyethergruppen enthaltenden Polyisocyanaten und

2) von tertiären Aminogruppen, ionischen Gruppen und Polyethergruppen freien Polyisocyanaten E),

oder Gemische der Polyisocyanatgemische (Ma) bis (Mb).

Bevorzugt werden Polyisocyanate (M) mit

α) einem Gehalt an Isocyanatgruppen von 10 - 700 Milliäquivalenten pro 100 g Polyisocyanat,

β) einer mittleren NCO-Funktionalität von ≥ 1,0,

γ) einem Gehalt an Ethylenoxid-Einheiten von 0 bis 30 Gew.-%, bezogen auf Polyisocyanat, wobei die Polyethylenoxidketten ein mittleres Molgewicht (Zahlenmittel) von 100 - 3 500, bevorzugt 100 - 1 000, besonders bevorzugt 100 - 600 g/mol haben, und

δ) einem Gehalt an tertiären Aminogruppen und/oder Ammoniumgruppen von 50 - 5 000 Milliäquivalenten pro 100 g Polyisocyanat

eingesetzt.

Bevorzugt werden auch Polyisocyanate (M) mit

α) einem Gehalt an Isocyanatgruppen von 10 - 500 Milliäquivalenten pro 100 g Polyisocyanat,

β) einer mittleren NCO-Funktionalität von 1,0 bis 5,0,

γ) einem Gehalt an Ethylenoxid-Einheiten von 7 bis 30 Gew.-%, bezogen auf Polyisocyanat, wobei die Polyethylenoxidketten ein mittleres Molgewicht (Zahlenmittel) von 100 - 3 500, bevorzugt 100 - 1 000, besonders bevorzugt 100 - 600 g/mol haben, und

δ) einem Gehalt an tertiären Aminogruppen und/oder Ammoniumgruppen von 0 - 1 000 Milliäquivalenten pro 100 g Polyisocyanat

eingesetzt.

In einer weiteren bevorzugten Ausführungsform werden Polyisocyanate (M) mit

α) einem Gehalt an Isocyanatgruppen von 47 - 595 Milliäquivalenten, vorzugsweise 238 bis 476 Milliäquivalenten, bezogen auf 100 g Polyisocyanat,

β) einer mittleren NCO-Funktionalität von 1,5 bis 4,2, vorzugsweise 2,0 - 4,2,

γ) einem Gehalt an Ethylenoxid-Einheiten von 7 bis 30 Gew.-%, bezogen auf Polyisocyanat, wobei die Polyethylenoxidketten ein mittleres Molgewicht (Zahlenmittel) von 100 - 3 500, bevorzugt 100 - 1 000, besonders bevorzugt 100 - 600 g/mol haben, und

δ) einem Gehalt an tertiären Aminogruppen und/oder Ammoniumgruppen von 1 - 500 Milliäquivalenten, vorzugsweise 5 - 300 Milliäquivalenten, pro 100 g Polyisocyanat

eingesetzt.

Die angegebenen Werte der NCO-Funktionalität der Polyisocyanate beziehen sich auf den Wert, der sich aus Art und Funktionalität der Ausgangskomponenten nach der Formel

$$f = \frac{\Sigma \text{ val NCO} - \Sigma \text{ val OH}}{\Sigma \text{ mol (NCO+OH)} - \Sigma \text{ val OH}}$$

errechnen läßt.

Der Gehalt an Isocyanatgruppen ist jeweils berechnet als NCO mit einem Molekulargewicht von 42 g/mol.

Die Polyisocyanate (M) sind erhältlich durch Umsetzung in beliebiger Reihenfolge von

(II) (cyclo)aliphatischen, gegebenenfalls Ether-, Ester- oder Amidgruppen enthaltenden Aminen, die mindestens eine gegenüber Isocyanaten reaktive Gruppe und mindestens eine tertiäre Aminogruppe und/oder Ammoniumgruppe enthalten, oder deren Gemischen und/oder

(III) von tertiären Aminogruppen und ionischen Gruppen freien, gegebenenfalls Estergruppen enthaltenden Polyalkylenoxidpolyetheralkoholen F), mit

(IV) von tertiären Aminogruppen, ionischen Gruppen und Polyethergruppen freien Polyisocyanaten E),

wobei das Äquivalentverhältnis von eingesetzten NCO-Gruppen der Komponente (IV) zu der Summe der gegenüber Isocyanaten reaktiven Gruppen der Komponenten (III) und (II) mindestens 1,05 : 1 bis ca. 1 000 : 1, vzw. 4 : 1 bis ca. 1 000 : 1, beträgt.

Vorzugsweise sind die eingesetzten Polyisocyanate (M) erhältlich durch Umsetzung von

(II)

A) Aminen, die eine gegenüber Isocyanaten reaktive Gruppe enthalten, der Formel

A1)

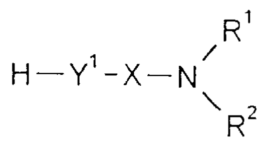

wobei

$Y^1$ für -O-, -NH- oder -$NR^3$-,

$R^3$ für Methyl oder Ethyl,

X für $C_2$- bis $C_{10}$-Alkylen, $C_5$- bis $C_{10}$-Cycloalkylen, einen Rest der Formel

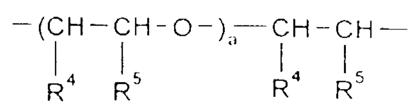

oder einen Rest der Formel

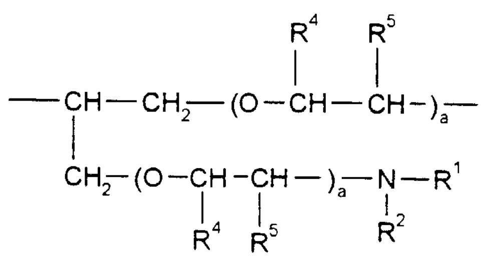

wobei

$R^4$, $R^5$ unabhängig voneinander Wasserstoff oder Methyl, mit der Bedingung, daß mindestens einer der Reste für Wasserstoff steht,

a Werte von 0 bis 10,

$R^1$ und $R^2$ a) unabhängig voneinander $C_1$-$C_4$-Alkyl oder $C_3$-$C_6$-Cycloalkyl,

b) unabhängig voneinander einen Rest der Formel

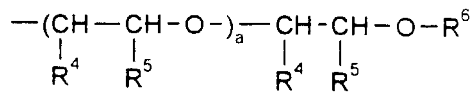

c) unabhängig voneinander einen durch eine oder mehrere tertiäre Aminogruppen und/oder Ammoniumgruppen substituierten $C_2$-$C_4$-Alkylrest der Formeln

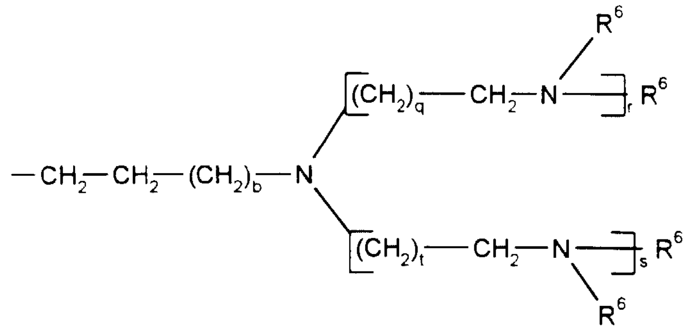

oder

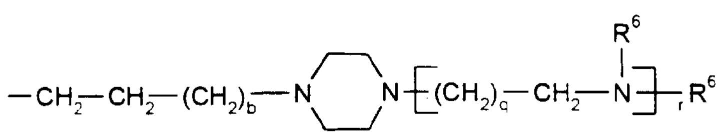

oder

d) gemeinsam mit dem N-Atom, an das sie gebunden sind, einen 5- oder 6-gliedrigen Ring der Formel

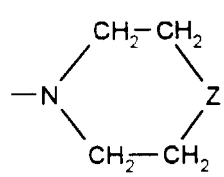

Z für

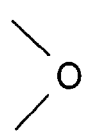 oder 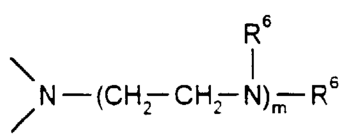

oder eine Einfachbindung oder

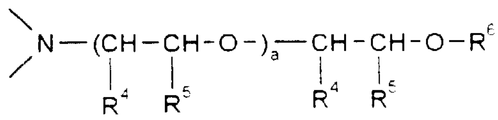

| | |
|---|---|
| $R^6$ | Methyl oder Ethyl, |
| b | Werte von 0 bis 2, |
| q, t | unabhängig voneinander Werte von 1 oder 2, |
| m, r, s | unabhängig voneinander Werte von 0 bis 3 bedeuten, |

oder
A 2) der Formel

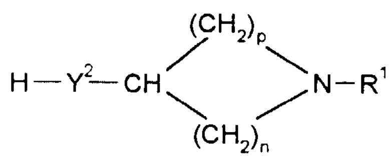

worin

| | |
|---|---|
| $Y^2$ | für -O-, -NH- oder $NR^3$- steht, wobei $R^3$ die obengenannte Bedeutung hat, |
| n und p | unabhängig voneinander Werte von 1 oder 2 annehmen |
| und $R^1$ | die obengenannte Bedeutung hat |

oder
A 3) der Formel

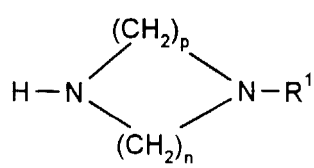

wobei n, p und $R^1$ die obengenannten Bedeutungen haben
oder
A 4) der Formel

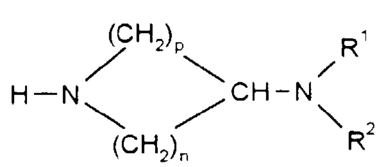

worin

n, p, $R^1$ und $R^2$ die obengenannten Bedeutungen haben, oder

B) Aminen, die mehr als eine gegenüber Isocyanaten reaktive Gruppe und gegebenenfalls Ether- und/oder Ester- und/oder Amidgruppen enthalten und ein Molgewicht unter 10 000 g/mol aufweisen

oder

C) den durch Umsetzung von A) oder B) durch Protonierung und/oder Quaternierung erhaltenen Ammoniumgruppen enthaltenden gegenüber Isocyanaten reaktiven Verbindungen
oder
beliebigen Gemischen aus A) bis C)

und/oder von

(III) ein- oder mehrwertigen, im statistischen Mittel 5,0 bis 70 Ethylenoxideinheiten aufweisenden, gegebenenfalls Estergruppen enthaltenden Polyalkylenoxidpolyetheralkoholen F),
mit

(IV) einem oder einem Gemisch aus mehreren von tertiären Aminogruppen, ionischen Gruppen und Polyethergruppen freien Polyisocyanaten E) mit

- einer mittleren NCO-Funktionalität von 2,0 bis 8,0, vorzugsweise 2,0 bis 6,0, besonders bevorzugt 2,1 - 4,4 und insbesondere von 2,3 bis 4,3, und

- einem Gehalt an Isocyanatgruppen von 10 bis 50 Gew.-%, vzw. 19 bis 24 Gew.-%, bezogen auf Komponente (IV),

in beliebiger Reihenfolge.
Die Polyisocyanate (M) sind wasserdispergierbar.
Der Begriff "wasserdispergierbar" im Zusammenhang mit den Polyisocyanaten (M) bedeutet, daß es sich um Polyisocyanate handelt, die in einer Konzentration von 0,1 bis 70 Gew.-%, vorzugsweise 0,1 bis 50 Gew.-%, speziell 0,1 bis 30 Gew.-%, in Wasser feinteilige Dispersionen mit mittleren Partikeldurchmessern (Ultrazentrifuge) < 500 nm ergeben, nicht sedimentieren und nicht aufrahmen.
Zur Durchführung des erfindungsgemäßen Verfahrens sind auch die entsprechenden, durch Protonierung und/oder Quaternierung der erfindungsgemäß einzusetzenden wasserdispergierbaren Polyisocyanate (M) erhältlichen Ammoniumgruppen aufweisenden Polyisocyanatgemische geeignet. Zur Quaternierung können Alkylierungsmittel, wie z. B. Dimethylsulfat, Diethylsulfat oder $C_1$-$C_4$-Alkylhalogenide und -sulfonate, verwendet werden.
Als Amine II A) seien beispielsweise genannt:
N,N-Dimethylethylendiamin, Dimethylaminohydroxyethan, Dimethylaminohydroxypropan, Diethylaminohydroxyethan, Dibutylaminohydroxyethan, Diethylaminoethoxyhydroxyethan, (2-Diethylaminoethoxy)-ethoxyhydroxyethan, N,N'-Triethyl-N'-[ω-hydroxy-tetraethoxyethyl]propylendiamin, N-Hydroxyethylpiperidin, N-Hydroxyethylpyrrolidin, 4-Hydroxy-1-dimethylaminocyclohexan, 1,3-Bis(dimethylamino-ethoxy)-2-hydroxypropan, 1,3-Bis(dimethylamino-propoxy)-2-hydroxypropan sowie die Amine der folgenden Formeln:
$(C_2H_5)_2N$-$(CH_2)_2$-$NH_2$,

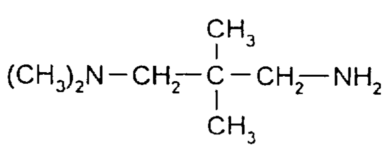 ,

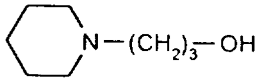 , 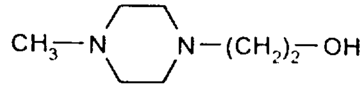 , 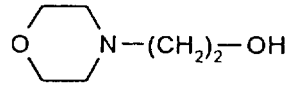 ,

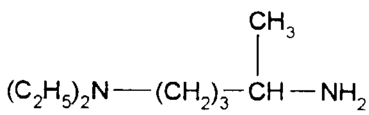 , 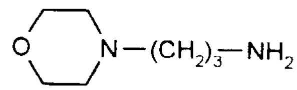 ,

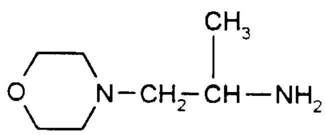 , 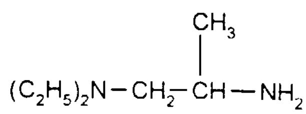 , 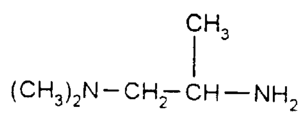 ,

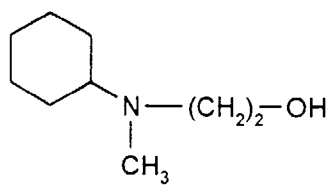 ,

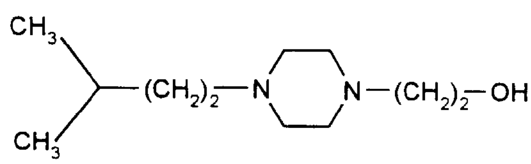

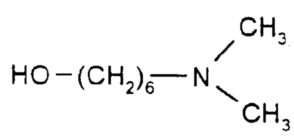

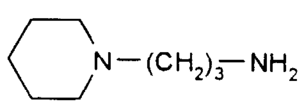 , 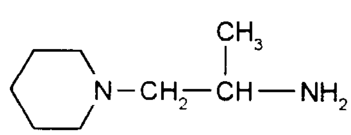 ,

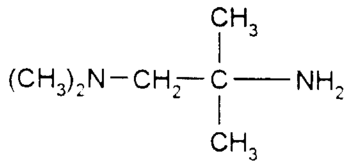 ,

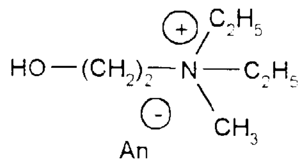

mit $An^{(-)} = CH_3OSO_3^{(-)}, Cl^{(-)}, Br^{(-)}$,

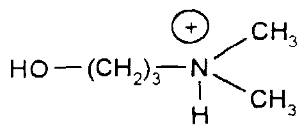 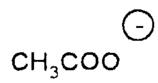 ,

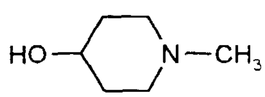 , 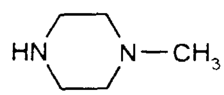 ,

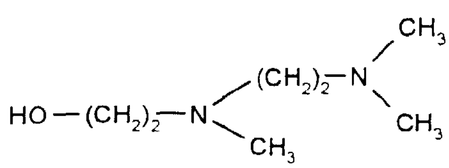 ,

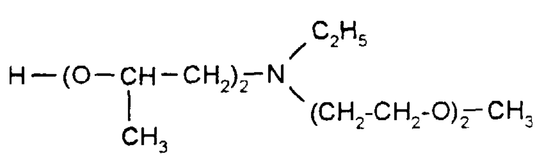 ,

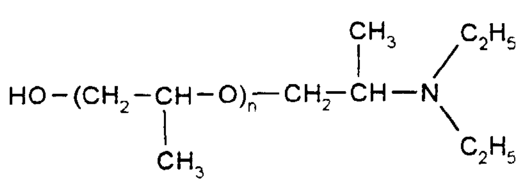 ,

mit n = 1 - 10

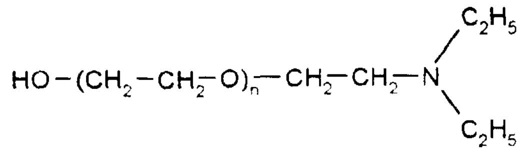
,

mit n = 1 - 10

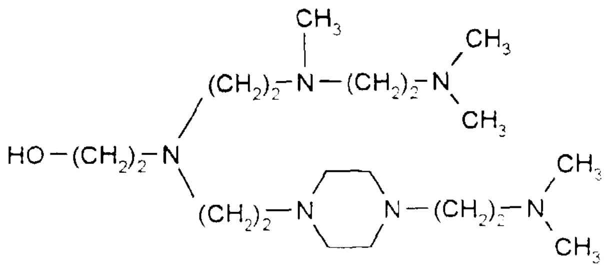
,

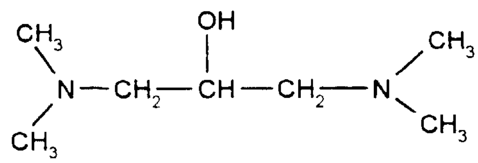
,

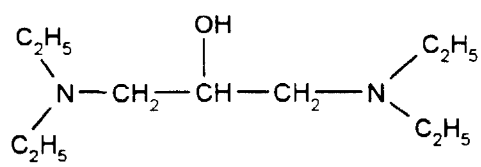
,

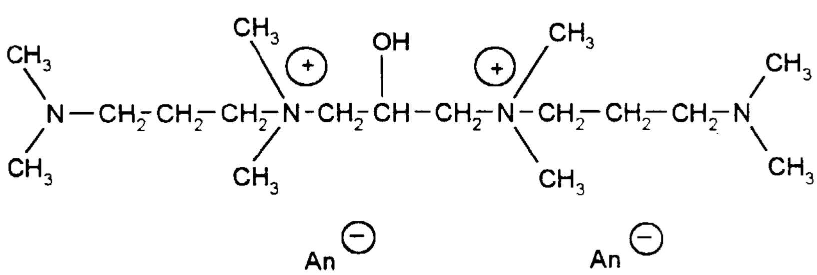
,

mit $An^{(-)} = Cl^{(-)}, Br^{(-)}, CH_3OSO_3^{(-)}$,

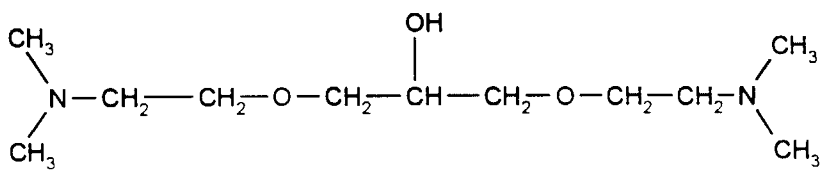

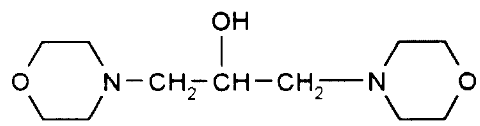

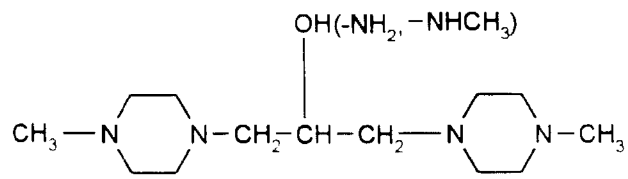

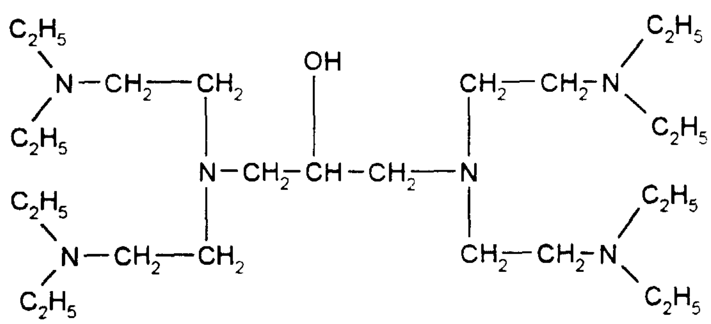

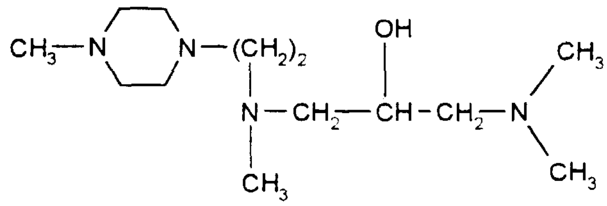

Die Amine II A) umfassen beispielsweise auch die folgenden Aminoalkohole:

Methyl-bis(2-hydroxyethyl)-amin, Methyl-bis(2-hydroxypropyl)-amin, N,N'-Bis(2-hydroxyethyl)-N,N'-dimethyl-ethylendiamin, N,N"-Bis(2-hydroxyethoxyethyl)-N,N',N"-trimethyl-diethyl entriamin, N'N-Dimethylamino-propyl-bis [ω -hydroxytetraethoxyethyl]amin, Triethanolamin, Umsetzungsprodukte von Triethanolamin mit 3 bis 20 mol Ethylenoxid und/oder Propylenoxid pro Mol Amin, Umsetzungsprodukte von Polyaminen wie Aminoethylpiperazin, Triethylentetramin, Bis-(2-aminoethyl)piperazin mit Ethylenoxid und/oder Propylenoxid, Diethylentriamin-bispropionamid, N,N'-Bis-propionylaminoethyl-N"-(2-hydroxyethyl)amin, Umsetzungsprodukte aus Tetramethylethylendiamin-Dichlorethan-Kondensaten mit Ethylenoxid und/oder Propylenoxid.

Geeignete Amine II) B) sind zum Beispiel die folgenden Polykondensate:

a) hydroxyterminierte Polyester, hergestellt durch Kondensation von $C_2$- bis $C_8$-Dicarbonsäuren, Polyethylenoxid und/oder Polypropylenoxid oder Mischpolyethern aus Ethylen- und Propylenoxid, und Dihydroxyalkylaminen, vorzugsweise N-Methyl-diethanolamin oder N-Methyl-diisopropanolamin, mit einer OH-Funktionalitat von 2,

b) hydroxyterminierte Polyester, hergestellt durch Kondensation von $C_2$- bis $C_8$-Dicarbonsäuren und den unter a) aufgeführten Dihydroxyalkylaminen, mit einer OH-Funktionalität von 2,

c) hydroxyterminierte oder aminoterminierte Polyesteramide aus $C_2$- bis $C_8$-Dicarbonsäuren, $C_2$- bis $C_6$-Diaminoalkanen, vorzugsweise Ethylendiamin, und den unter a) aufgeführten Dihydroxyalkylaminen, mit einer OH-Funktionalität von 2,

d) hydroxyterminierte Polyester, aus $C_2$- bis $C_8$-Dicarbonsäuren, Trihydroxyalkanen, vorzugsweise Trimethylolpropan und deren Umsetzungsprodukten mit 1-10 mol Ethylen- oder Propylenoxid, und den unter a) aufgeführten Dihydroxyalkylaminen, mit einer Funktionalität über 2,

e) hydroxyfunktionelle Polyamine, die durch Umsetzung von Ammoniak oder von linearen oder verzweigten (Poly) alkylenpolyaminen, wie z. B. Ethylendiamin, Diethylentriamin, Triethylentetramin, Bis(3-aminopropyl)-methylamin, a,ω-Polyetherdiaminen mit primärer oder sekundärer Aminogruppe oder deren Kondensaten mit einem Unterschuß an Dihalogenalkanen wie Dichlorethan, mit Alkylenoxiden erhältlich sind, vorzugsweise Triethanolamin, Tris (2-hydroxypropyl)amin, Tetrakis(2-hydroxypropyl)ethylendiamin,

f) hydroxyfunktionelle Polyamidamine, die durch Umsetzung von linearen oder verzweigten Polykondensaten aus $C_2$- bis $C_8$-Dicarbonsäuren, Diaminen und Polyaminen, die mindestens drei acylierbare Aminogruppen enthalten, wie Diethylentriamin oder Triethylentetramin, und/oder Polyaminen mit mindestens zwei acylierbaren Aminogruppen und weiteren tertiären Aminogruppen, wie Bis-(3-aminopropyl)methylamin, und gegebenenfalls Caprolactam oder gegebenenfalls Polyetherdiolen oder Polyetherdiaminen, mit Alkylenoxiden erhältlich sind, wobei pro primäre und sekundäre Aminogruppe im Polykondensat 1 - 3 mol an Alkylenoxid eingesetzt wird,

g) hydroxyfunktionelle Polyamidamine gemäß f), die Hydroxyethyl-Endgruppen enthalten und an Stelle der Umsetzung mit Alkylenoxiden durch Cokondensation mit Ethanolamin erhältlich sind,

h) Aminoalkohole der Formel

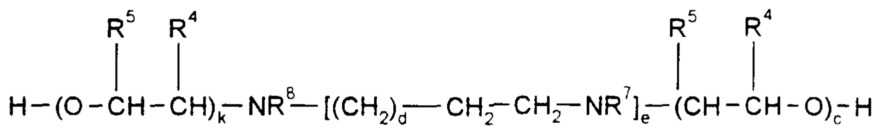

worin

$R^4$ und $R^5$ für Wasserstoff oder Methyl stehen mit der Bedingung, daß mindestens ein Rest für Wasserstoff steht,

$R^8$ und $R^7$ unabhängig voneinander für Methyl, Ethyl oder einen Rest der Formel

$$-(CHR^5\text{-}CHR^4\text{-}O)_f\text{-}H \text{ oder } [CH_2\text{-}(CH_2)_g\text{-}NR^1]_h R^2$$

stehen,
wobei

$R^1$, $R^2$, $R^4$, $R^5$ die oben angegebenen Bedeutungen haben und

g Werte von 1 bis 6 annimmt,

| | |
|---|---|
| h | für Null bis 4 steht, |
| k, c und f | Werte von 0 bis 20 annehmen, |
| e | Werte von 0 bis 3 annimmt und |
| d | Werte von 0 oder 1 annimmt. |

Die Amine II) B) besitzen bevorzugt ein mittleres Molgewicht unter 10 000 g/mol. Besonders bevorzugt sind solche mit einem mittleren Molgewicht unter 5 000 g/mol, insbesondere unter 3 000 g/mol.

Geeignete Amine II) C) sind beispielsweise die durch Umsetzung von Säuren oder Alkylierungsmitteln mit den Komponenten II) A) oder II) B) erhältlichen Amine, deren tertiäre Aminogruppen ganz oder zum Teil in Ammoniumgruppen umgewandelt wurden.

Für diese Umsetzung geeignete Säuren sind vorzugsweise Essigsäure, Ameisensäure, und HCl; als Alkylierungsmittel kommen beispielsweise $C_1$-$C_4$-Alkylchloride und -bromide sowie Dialkylsulfate wie Dimethylsulfat oder Diethylsulfat in Frage.

Es handelt sich bei den unter IV) genannten von tertiären Aminogruppen, ionischen Gruppen und Polyethergruppen freien Polyisocyanaten E) um beliebige, durch Modifizierung einfacher (cyclo)aliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-OS 1 670 666, 3 700 209 und 3 900 053 oder den EP-A 336 205 und 339 396 beispielhaft beschrieben sind. Geeignete Polyisocyanate E) sind auch estergruppenhaltige Polyisocyanate, z. B. die durch Umsetzung von Pentaerythrit- oder Trimethylolpropan-silylethern mit Isocyanatocapronsäurechlorid zugänglichen Tetrakis- bzw. Tris-isocyanate (vgl. DE-A 3 743 782). Außerdem ist es auch möglich, Triisocyanate wie z. B. Tris-isocyanatodicyclohexylmethan zu verwenden.

Geeignete Diisocyanate zur Herstellung der von tertiären Aminogruppen, ionischen Gruppen und Polyethergruppen freien Polyisocyanate E) sind grundsätzlich solche mit einem Molgewichtsbereich von 140 bis 400 mit (cyclo) aliphatisch gebundenen Isocyanatgruppen, wie z. B. 1,4-Diisocyanatobutan, 1,6-Diisocyanatohexan, 1,5-Diisocyanato-2,2-dimethylpentan, 2,2,4- bzw. 2,4,4-Trimethyl 1,6-diisocyanatohexan, 1,3- und 1,4-Diisocyanatocyclohexan, 1-Isocyanato-3,3,5-trimethyl-5-isocyanatomethyl-cyclohexan, 1-Isocyanato-1-methyl-4-isocyanatomethyl-cyclohexan und 4,4'-Diisocyanatodicyclohexyl-methan, oder beliebige Gemische solcher Diisocyanate.

Bevorzugt handelt es sich bei den von tertiären Aminogruppen, ionischen Gruppen und Polyethergruppen freien Polyisocyanaten E) um im wesentlichen aus trimerem 1,6-Diisocyanatohexan oder 1-Isocyanato-3,3,5-trimethyl-5-isocyanatomethyl-cyclohexan und gegebenenfalls dimerem 1,6-Diisocyanatohexan oder 1-Isocyanato-3,3,5-trimethyl-5-isocyanatomethyl-cyclohexan und den entsprechenden höheren Homologen bestehenden Isocyanuratgruppen und gegebenenfalls Uretdiongruppen aufweisenden Polyisocyanatgemischen mit einem NCO-Gehalt von 19 bis 24 Gew.-%. Besonders bevorzugt werden als Komponente E) die entsprechenden, weitgehend Uretdiongruppen-freien Isocyanuratgruppen aufweisenden Polyisocyanate des genannten NCO-Gehaltes eingesetzt, wie sie durch an sich bekannte, katalytische Trimerisierung und unter Isocyanurat-Bildung von 1,6-Diisocyanatohexan oder 1-Isocyanato-3,3,5-trimethyl-5-isocyanatomethylcyclohexan erhalten werden und die vorzugsweise eine (mittlere) NCO-Funktionalität von 3,2 bis 4,2 aufweisen. Bevorzugte Komponenten E) sind auch die durch Reaktion von 1,6-Diisocyanatohexan mit einem Unterschuß an Wasser in bekannter Weise erhaltenen, im wesentlichen Biuretgruppen aufweisenden trimeren Polyisocyanate mit einem NCO-Gehalt von 19 bis 24 Gew.-%. Bevorzugt sind auch Komponenten E) mit Allophanatgruppen und Isocyanuratgruppen, wie sie bei der katalytischen Trimerisierung von Urethan-Isocyanaten mit einem Diisocyanatüberschuß erhalten werden, sowie Oxadiazintrion-Strukturen enthaltende Polyisocyanate, wie z.B.

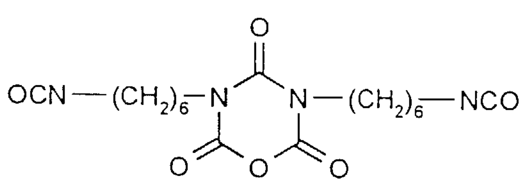 ,

und Trimerisate daraus.

Weiter geeignete, wenn auch nicht bevorzugte, Polyisocyanate E) sind aliphatische Diisocyanate wie Hexamethylendiisocyanat, und deren höhere Homologe mit Uretdion-, Isocyanurat-, Allophanat-, Biuretgruppen usw.

Bevorzugte Polyisocyanate E) sind auch solche, die in an sich bekannter Weise durch Trimerisierung/Allophanat-Bildung aus Diisocyanaten und deren Urethanderivaten erhalten werden. Diese haben eine besonders niedrige Viskosität < 5000 mPas/23 °C.

Besonders bevorzugt sind Polyisocyanate E), die bei 23 °C eine Viskosität < 4000 mPas, besonders < 2000 mPas besitzen.

Bei den unter III genannten Polyalkylenoxidpolyetheralkoholen F) handelt es sich um ein- oder mehrwertige im statistischen Mittel 5 bis 70, vorzugsweise 6 bis 60 Ethylenoxideinheiten pro Molekül enthaltende Polyalkylenoxidpolyetheralkohole, wie sie in an sich bekannter Weise durch Alkoxylierung geeigneter Startermoleküle zugänglich sind.

Zur Herstellung der Polyalkylenoxidpolyetheralkohole F) können beliebige ein- oder mehrwertige Alkohole des Molekulargewichtsbereichs 32 bis 150 g/mol, wie sie beispielsweise auch gemäß EP-A 206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen F) handelt es sich vorzugsweise entweder um reine Polyethylenoxidpolyether oder um gemischte Polyalkylenoxidpolyether, die mindestens eine Polyethersequenz aufweisen, die mindestens 5, im allgemeinen 5 bis 70, vorzugsweise 6 bis 60 und besonders bevorzugt 7 bis 20, Ethylenoxideinheiten besitzt und deren Alkylenoxideinheiten zu mindestens 60 Mol-%, vorzugsweise zu mindestens 70 Mol-%, aus Ethylenoxideinheiten bestehen.

Bevorzugte Polyalkylenoxidpolyetheralkohole F) sind monofunktionelle, auf einem aliphatischen, 1 bis 4 Kohlenstoffatome aufweisenden Alkohol gestartete Polyalkylenoxidpolyether, die im statistischen Mittel 6 bis 60 Ethylenoxideinheiten enthalten. Besonders bevorzugte Polyalkylenoxidpolyetheralkohole F) sind reine Polyethylenglykolmonomethyletheralkohole, die im statistischen Mittel 7 bis 20 Ethylenoxideinheiten aufweisen.

Geeignete <u>estergruppenhaltige</u> Polyalkylenoxidpolyether F) sind OH-terminierte Polyesterether, die durch Umsetzung von aliphatischen $C_2$- bis $C_8$-Dicarbonsäuren oder deren Estern oder Säurechloriden mit Polyethern aus der Gruppe der Polyethylenoxide, Polypropylenoxide oder deren Gemischen oder Mischpolyethern daraus, wobei pro OH-Äquivalent des Polyethers 0.6 bis 0,99 Aquivalente an Carboxylgruppen oder deren Derivaten eingesetzt werden. erhältlich sind und ein mittleres Molgewicht unter 10 000 g/mol, vorzugsweise unter 3000 g/mol aufweisen und Hydroxylendgruppen besitzen.

Für den Fall, daß die Amine bzw. Aminoalkohole II) A) bis II) C) Polyetherketten enthalten, kann auch eine Umsetzung von A) und/oder B) und/oder C) mit den Polyisocyanaten E) direkt zu wasserdispergierbaren Polyisocyanaten führen, so daß der Anteil an Komponente F) gegebenenfalls reduziert werden kann.

Die erfindungsgemäß einzusetzenden Polyisocyanate (M) können auch in Kombination mit externen ionischen oder nichtionischen Emulgatoren eingesetzt werden. Solche Emulgatoren sind beispielsweise in "Methoden der Organischen Chemie" (Houben-Weyl), Bd. XIV/1, Teil 1, Seiten 190 - 208, Georg Thieme-Verlag, Stuttgart (1961), in der US-PS 3 428 592 oder in EP-A 13 112 beschrieben. Die Emulgatoren werden in einer die Dispergierbarkeit gewährleistenden Menge eingesetzt.

Die Umsetzung der Komponenten A) und/oder B) und/oder C) und/oder F) mit den Komponenten E) wird in beliebiger Reihenfolge unter Ausschluß von Feuchtigkeit vorzugsweise ohne Lösungsmittel durchgeführt. Mit steigender Einsatzmenge an Alkohol-Komponente wird eine höhere Viskosität des Endproduktes erreicht, so daß in bestimmten nicht bevorzugten Fällen (wenn die Viskosität z. B. über 100 Pa.s ansteigt) ein Lösungsmittel zugesetzt werden kann, das vorzugsweise mit Wasser mischbar ist, aber gegenüber dem Polyisocyanat inert ist. Geeignete Lösungsmittel sind: Alkylether-acetate, Glykoldiester, Toluol, Carbonsäureester, Aceton, Methylethylketon, Tetrahydrofuran und Dimethylformamid. Durch die Mitverwendung an sich bekannter Katalysatoren wie Dibutylzinndilaurat, Zinn-(II)-octoat oder 1,4-Diazabicyclo[2,2,2]octan in Mengen von 10 bis 1 000 ppm, bezogen auf die Reaktionskomponenten, kann die Reaktion beschleunigt werden. Bevorzugt ist eine katalysatorfreie Reaktion.

Die Reaktion kann im Temperaturbereich bis 130 °C, vorzugsweise im Bereich zwischen 10 °C und 100 °C, besonders zwischen 20 °C und 80 °C, durchgeführt werden. Die Reaktion kann durch Titration des NCO-Gehaltes oder durch Messung der IR-Spektren und Auswertung der Carbonylbande bei ca. 2 100 $cm^{-1}$ verfolgt werden und ist beendet, wenn der Isocyanatgehalt nicht mehr als 0,1 Gew.-% oberhalb des Wertes liegt, der bei vorgegebener Stöchiometrie bei vollständigem Umsatz erreicht wird. In der Regel sind Reaktionszeiten von weniger als 24 Stunden ausreichend. Bevorzugt ist die lösungsmittelfreie Synthese der erfindungsgemäß einzusetzenden Polyisocyanate.

In einer nicht bevorzugten Ausführungsform ist es auch möglich, die erfindungsgemäß einzusetzenden Polyisocyanate (M) durch Mischen von

1) von tertiären Aminogruppen, ionischen Gruppen und Polyethergruppen freien Polyisocyanaten E),

2) Polyisocyanaten, die durch Umsetzung von Polyisocyanaten E) mit den unter II) genannten Aminen, wobei das Äquivalentverhältnis der gegenüber Isocyanaten reaktiven Gruppen von II) zu den eingesetzten NCO-Gruppen

der Komponente E) 1:1 bis 1:1000 beträgt, erhalten werden,
und

3) Polyisocyanaten, die durch Umsetzung von Polyisocyanaten E) mit Polyalkylenoxidpolyetheralkoholen F), wobei das Äquivalentverhältnis der gegenüber Isocyanaten reaktiven Gruppen der Komponente III) zu den eingesetzten NCO-Gruppen der Komponente E) 1:1 bis 1:1000 beträgt, erhalten werden, herzustellen.

Dabei sind die Anzahl der Aminäquivalente, der Polyethergehalt, der NCO-Gehalt und die NCO-Funktionalität durch entsprechende Einwaagen vom Fachmann so einzustellen, daß das erhaltene Gemisch die für die Wasserdispergierbarkeit erforderliche Zusammensetzung hat, wobei die bereits genannten Vorzugsbereiche gelten. Die Dispergierbarkeit ist aber nicht so gut wie bei Umsetzung im Gemisch.

Die Polyisocyanate (M) können auch anionisch modifiziert sein. Solche anionisch modifizierten Polyisocyanate sind beispielsweise durch Umsetzung von Hydroxycarbonsäuren oder Hydroxysulfonsäuren und gegebenenfalls den oben unter (III) beschriebenen Polyalkylenoxidpolyetheralkoholen F mit den oben unter (IV) beschriebenen Polyisocyanaten E erhältlich. Für diesen Zweck geeignete Hydroxycarbonsäuren und Hydroxysulfonsäuren umfassen z. B. die Verbindungen:

a) Hydroxycarbonsäuren wie Milchsäure, Trichlormilchsäure, Dimethylolpropionsäure, Äpfelsäure, Dioxymaleinsäure, Dioxyfumarsäure, Weinsäure, Dioxyweinsäure, Schleimsäure, Zuckersäure, Zitronensäure, und β-Oxypropionsäure,

b) Hydroxysulfonsäuren, wie 2-Hydroxyethansulfonsäure,

sowie Ethoxy- oder Polyethoxygruppen enthaltende Sulfonatalkohole, wie sie beispielsweise in der DE-OS 24 46 440 beschrieben sind. Ionische Gruppen enthaltende <u>ein</u>wertige Alkohole sind als Ausgangsmaterialien für die Herstellung kationisch und anionisch modifizierter Polyisocyanate (M) bevorzugt.

Die erfindungsgemäß einzusetzenden wasserdispergierbaren Polyisocyanate (M) sind technisch gut handhabbar und über Monate unter Ausschluß von Feuchtigkeit lagerstabil.

<u>Beschreibung der natürlichen Polymeren (NP)</u>

Die natürlichen Polymeren (NP) umfassen vorzugsweise Stärke, Cellulose, Hemicellulose, Chitosan, Xanthan, Agar, Galaktomannan, Carrageenan, Pektin, Alginat, Pflanzengummi und deren Derivate.

Geeignet sind <u>Stärke</u>-Typen aus Kartoffel, Mais, Weizen, deren kationische und anionische Derivate, ebenso amphotere Stärken und hydrophobmodifizierte Stärken. Weiterhin geeignet sind <u>Celluloseether,</u> die vorzugsweise kaltwasserlöslich sein sollten, z.B. Hydroxyethylcellulose, Carboxymethylcellulose, Hydroxypropylcellulose.

Geeignet sind auch Galaktomannane, Agar, Pektin, Alginate, Carrageenan, Chitosane, Xanthan, Pflanzengummi und deren Derivate. Besonders bevorzugt sind handelsübliche Stärke(-derivate) wie enzymatisch oder thermisch abgebaute native Stärke oder kationisch, anionisch bzw. amphoter modifizierte Stärken.

Methoden zur Stärkeaufbereitung sind aus der Literatur bekannt (vgl. z.B Wochenblatt für Papierfabrikation, Seiten 109 - 134 und 140 - 167 (1991)).

Bei Masse-Stärke beträgt der Einsatz ca. 1 Gew.-%, bezogen auf Papier, bei Oberflächen-Stärke ca. 5 Gew.-%, bezogen auf Papier.

Eine Übersicht über den Stärkeeinsatz in der Papierindustrie ist folgenden Literaturstellen zu entnehmen:

1) Ullmanns Enzyklopädie der technischen Chemie, Bd. 22, Seite 165 ff (1982)

2) Wochenblatt für Papierfabrikation <u>119(5)</u>, Seiten 149 - 156/157 - 160 (1991)

3) Das Papier, 10 A, Seiten V40 ff (1993).

Die Papierindustrie ist bei der Papier- und Kartonherstellung an speziellen Stärkeprodukten interessiert. Native Stärke ist z. B. sehr preiswert, neigt aber aufgrund ihres hohen Amyloseanteils zur Retrogradation; als Folge ergibt sich oft eine verminderte Filmstärke, hohe Schlammbildung und schnelle Verschmutzung der Auftragsaggregate. Zu hohe Viskosität der Stärke führt zu Auftragsproblemen (Spritzen), zu niedrige Viskosität ergibt bei Oberflächenauftrag eine vollständige Durchtränkung des Papiers und schlechte Oberflächeneigenschaften.

Bei Masse-Einsatz sind kationische Stärken bevorzugt, weil sie bis zu 90 % auf die Faser aufziehen können und geringe Belastung des Abwassers und des Papiermaschinenverlaufs ergeben.

Die Derivatisierung der Stärke ist jedoch mit Kosten verbunden. Vorteile ergeben sich dennoch bei kationischen Stärken dadurch. daß sie weniger CSB im Abwasser ergeben und bei der Wiederaufbereitung von Papierausschuß auf der Faser bleiben

Anionische Stärken wirken bei der Wiederaufbereitung des Papierausschusses im resultierenden Stoffsvstem wie Störstoffe

Es besteht deshalb weiter Bedarf an verbesserten Papierveredlungsmitteln, die die genannten Nachteile nicht aufweisen.

Es sind kationisch-hydrophobe Wachsmaisstärken bekannt (EP 277633, EP 406837), die die Vorteile kationischer Oberflächenstärken mit den Leimungseigenschaften gemäß dem Hercules-Size-Test und dem Cobb-Test verbinden. Durch eine Verringerung der Penetration der Streichfarbe läßt sich z. B. bei Streichrohpapieren teure Streichfarbe einsparen. Auch eine Erhöhung der Oberflächenfestigkeit kann mit solchen Stärketypen erzielt werden (R. Sirois, Wochenblatt für Papierfabrikation (10), Seite 402 ff (1993). Nachteilig ist, daß für jede Anforderung eine bestimmte Stärke-Vorbehandlung/-Derivatisierung erforderlich ist.

In Stoffsystemen mit hoher Störstofffracht sind kationische Stärken als Störstoffänger ungeeignet, da Substitutionsgrade viel höher sein müssen als bei handelsüblichen Stärken (N. O. Bergh et al, Wochenblatt für Papierfabrikation 5, S. 162 - 170 (1993). Es wird daher der Einsatz von kationischen Polymeren wie Poly-DADMAC als Störstoffänger vorgeschlagen.

In der JP 79/034408 sind Oberflächenleimungsmittel, bestehend aus einem Pfropfpolymer von Stärke und einem COOH-haltigen Vinylmonomer, beschrieben.

Als Kationisierungsreagenzien für Masse-Stärke werden häufig Verbindungen eingesetzt, die organisches Halogen enthalten. Daher sind besonders Methoden gefragt, die eine Derivatisierung von Stärke mit chlorfreien Reagenzien ermöglichen.

Das erfindungsgemäße Mittel ermöglicht breite Variationsmöglichkeiten, je nachdem, ob Leimungs- oder Festigkeitsverbesserungen oder beide erwünscht sind.

<u>Beschreibung der Synthetischen Polymeren (SP)</u>

Dispersionen von <u>Polysiloxan-Pfropfcopolpymeren</u> (SP 1) sind an sich bekannt und können gemäß EP-A 407 799 oder 421 588 hergestellt werden Zur Erläuterung der Erfindung sind zwei Beispiele fur erfindungsgemäße Komponenten SP 1 angeführt

Es handelt sich vorzugsweise um lineare Polysiloxane mit Mercapto-Gruppen als Substituenten in der Seitenkette, die als pfropfaktive Gruppen fungieren. Dieses Polysiloxan wird in wäßriger Emulsion in an sich bekannter Weise mit Vinylmonomeren in Gegenwart von Polymerisationsinitiatoren bepfropft. Geeignete Vinylmonomere sind Styrol, $\alpha$-Methylstyrol, Acrylnitril, Methacrylnitril, (Meth)Acrylsäureester, wie Methylmethacrylat, Hydroxypropylmethacrylat, Dimethylaminoethylmethacrylat, Methacrylsäure, Acrylsäure usw. Die Reaktionsbedingungen sind an sich bekannt und den o.g. Schriften zu entnehmen.

Bevorzugte Polysiloxan-Pfropfprodukte (SP 1) sind Produkte aus

a) 40 bis 70 Gew.-%, vorzugsweise 50 bis 65 Gew.-%, eines Hydroxylgruppen-terminierten Polysiloxans als Pfropfsubstrat enthaltend v Mol-% wiederkehrende Einheiten der Formel

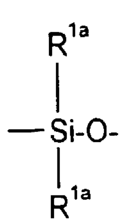

und w Mol-% wiederkehrende Einheiten der Formel

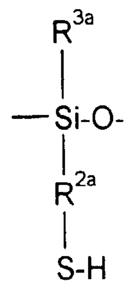

wobei

| | |
|---|---|
| $R^{1a}$ | für Alkylreste mit 1 bis 24 C-Atomen oder Arylreste mit 6 bis 10 C-Atomen, |
| $R^{2a}$ | für unverzweigte oder verzweigte Alkylenreste mit 1 bis 8 C-Atomen und |
| $R^{3a}$ | für Alkylreste mit 1 bis 24 C-Atomen, Arylreste mit 6 bis 10 C-Atomen, Alkoxyreste mit 1 bis 6 C-Atomen oder eine Hydroxygruppe steht oder |
| $R^{2a}$ und $R^{3a}$ | zusammen mit dem Si-Atom einen dreiwertigen 5- oder 6-gliedrigen Ring mit einem unverzweigten oder verzweigten Alkylenrest mit 4 bis 8 C-Atomen bilden können und |
| v | 80 bis 99 Mol-%, vorzugsweise 90 bis 97 Mol-%, |
| w | 1 bis 20 Mol-%, vorzugsweise 3 bis 10 Mol-% beträgt, wobei v + w 100 Mol-% ergibt, |

und die bei 25°C gemessene Viskosität des OH-terminierten Polysiloxans zwischen 100 und 100 000 mPa.s liegt, und

b) 30 bis 60 Gew.-%, vorzugsweise 35 bis 50 Gew.-% Pfropfmonomer aus der Reihe bestehend aus Styrol und/oder α-Methylstyrol, (Meth)Acrylsäureester, (Meth)Acrylnitril und Gemischen dieser Monomeren, wobei diese Reihe gegebenenfalls zusätzlich ein oder mehrere Vinylmonomere der Formeln

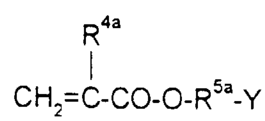

oder

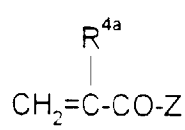

enthält, worin

| | |
|---|---|
| $R^{4a}$ | für ein H-Atom oder eine Methylgruppe, |
| $R^{5a}$ | für eine unverzweigte oder verzweigte Alkylengruppe mit 1 bis 18 C-Atomen. |
| Y | für ein H-Atom oder die Gruppen -OH oder $C_1$-$C_4$-Alkoxy und |

Z für eine Gruppe -OH oder $-NR_2^{4a}$ stehen.

Geeignete wasserverdünnbare synthetische Polymere (SP 2) sind Copolymerisate von olefinisch ungesättigten Verbindungen mit

a) einem Gehalt an eingebauten, zu 10 bis 100 % neutralisierten COOH-Gruppen von insgesamt 60 bis 250 Milliäquivalenten pro 100 g Feststoff und

b) einem Gehalt an chemisch eingebauten, Teil einer Estergruppe bildenden Resten der Formel -OR von 15 bis 20 Gew.-%, wobei R für einen ein- oder mehrfach olefinisch ungesättigten aliphatischen Kohlenwasserstoffrest mit 12 bis 22 C-Atomen steht.

"Wasserverdünnbar" im Sinne der Erfindung sind die Polymeren SP 2, sofern sie den oben unter a) angegebenen Gehalt an teilweise oder vollständig neutralisierten Carboxylgruppen besitzen.

Solche Produkte sind z.B. gemäß EP 350 684 erhältlich.

Es handelt sich um Copolymerisate, die durch a) Polymerisation von olefinisch ungesättigten Dicarbonsäureanhydriden mit anderen ungesättigten Monomeren, wobei Struktur-Einheiten der Formel

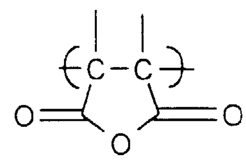

entstehen,

b) anschließende partielle Umsetzung mit einem einwertigen Alkohol R-OH (2 bis 50 %) und

c) Umsetzung der in b) erhaltenen COOH-Gruppen mit einer Epoxidverbindung zu 10 - 95 % und Neutralisation der verbleibenden COOH-Gruppen mit einer Base, erhältlich sind.

Vorzugsweise lassen sich die wasserverdünnbaren synthetischen Polymeren (SP 2) dadurch herstellen, daß man

a) durch radikalisch initiierte Copolymerisation von olefinisch ungesättigten Dicarbonsäureanhydriden mit anderen olefinisch ungesättigten Monomeren ein, intramolekulare Carbonsäureanhydridgruppen der Formel

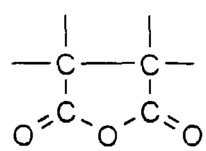

aufweisendes Copolymerisat des Molekulargewichts $\overline{M}w$ 5000 bis 80 000 und eines Anhydridäquivalentgewichts von 240 bis 1960 herstellt,

b) anschließend mindestens 50 % der in dem Copolymerisat vorliegenden Säureanhydridgruppen mit einwertigen Alkoholen der Formel

R-OH

mit einem Molekulargewicht über 183
unter ringöffnender Esterbildung zur Reaktion bringt, wobei gegebenenfalls vor, gleichzeitig oder im Anschluß

hieran eine analoge Umsetzung von bis zu 50 % der Anhydridgruppen mit einwertigen gesättigten Alkoholen eines unter 184 liegenden Molekulargewichts erfolgt und

c) die in dem Reaktionsprodukt gemäß Stufe b) vorliegenden Carboxylgruppen, gegebenenfalls nach Umsetzung einer Teilmenge der Carboxylgruppen mit organischen Epoxidverbindungen zu 10 bis 95 % (der dann noch vorliegenden Carboxylgruppen) durch Neutralisation mit einer Base in Carboxylatgruppen überführt.

Die in der Stufe a) hergestellten Copolymerisate weisen ein, nach der Methode der Gelpermeationschromatographie bestimmbares, Molekulargewicht $\overline{M}w$ von 5 000 bis 80 000, vorzugsweise 10 000 bis 50 000, und ein Anhydridäquivalentgewicht von 240 bis 1960, vorzugsweise 220 bis 980 auf. Unter "Anhydridäquivalentgewicht" ist hierbei das Gewicht in g zu verstehen, welches einem Mol an einpolymerisierten intramolekularen Säureanhydridgruppen entspricht.

Die Herstellung der Copolymerisate in der Stufe a) erfolgt durch Copolymerisation von olefinisch ungesättigten intramolekularen Dicarbonsäureanhydriden mit beliebigen anderen olefinisch ungesättigten copolymerisierbaren Monomeren.

Vorzugsweise gelangt bei dieser Copolymerisation ein Monomerengemisch bestehend aus

i) 5 bis 40 Gew.-Teilen copolymerisierbaren Dicarbonsäureanhydriden, wie z.B. Itaconsäureanhydrid oder Maleinsäureanhydrid, vorzugsweise Maleinsäureanhydrid,

ii) 45 bis 95 Gew.-Teilen Monomeren, ausgewählt aus der Gruppe bestehend aus Vinylaromaten, Isopropenylaromaten, Vinylestern, Vinylethern, Methacrylsäureestern mit 1 bis 6 Kohlenstoffatomen im Alkoholrest und beliebigen Gemischen derartiger Monomerer

und

iii) 0 bis 50 Gew.-Teilen an Monomeren, ausgewählt aus der Gruppe bestehend aus Acrylsäureestern mit 1 bis 18 Kohlenstoffatomen im Alkoholrest, Methacrylsäureestern mit 7 bis 18 Kohlenstoffatomen im Alkoholrest und beliebigen Gemischen derartiger Monomerer

zum Einsatz.

Geeignete Monomere aus der Gruppe ii) sind beispielsweise Styrol, α-Methylstyrol, Vinyltoluol am aromatischen Ring $C_1$-$C_4$-alkylsubstituierte Styrole, Vinylacetat, Vinylpropionat, Vinylbutyrat, Ethylvinylether, Butylvinylether, Methylmethacrylat, Ethylmethacrylat, n-Butylmethacrylat, iso-Butylmethacrylat n-Hexylmethacrylat oder Cyclohexylmethacrylat.

Geeignete Monomere aus der Gruppe iii) sind beispielsweise Ethylacrylat, n-Butylacrylat, iso-Butylacrylat, n-Propylacrylat, n-Pentylacrylat, iso-Propylacrylat, Hexylacrylat, 2-Ethylhexylacrylat, n-Octylacrylat, Laurylacrylat-, 2-Phenylethylacrylat, Benzylacrylat, Stearylacrylat, Cyclohexylacrylat, n-Octylmethacrylat, 2-Ethylhexylmethacrylat, Laurylmethacrylat, Caprinmethacrylat oder Stearylmethacrylat.

Bevorzugt werden zur Herstellung der Copolymerisate bei der Durchführung der Stufe a) des Verfahrens Monomerengemische folgender Zusammensetzung eingesetzt, wobei sich die nachstehenden Prozentangaben zu 100 ergänzen:

i) 10 bis 30 Gew.-% Maleinsäureanhydrid,

ii) 65 bis 90 Gew.-% Styrol, Vinyltoluol, Methylmethacrylat, n-Butylmethacrylat, iso-Butylmethacrylat, n-Hexylmethacrylat, Cyclohexylmethacrylat und

iii) 0 bis 25 Gew.-% n-Butylacrylat, 2-Ethylhexylacrylat, Laurylacrylat, Stearylacrylat, 2-Phenyl ethylacrylat, 2-Ethylhexylmethacrylat, Stearyl methacrylat, Laurylmethacrylat, Caprinmethacrylat.

Die Copolymerisation wird in allgemeinen bei einer Temperatur von 60 bis 160°C und vorzugsweise in mindestens 75 gew.-%iger Lösung durchgeführt, wobei üblicherweise das Lösungsmittel und gegebenenfalls ein Teil der Monomerenmischung vorgelegt und auf die gewünschte Reaktionstemperatur erwärmt wird. Die restliche Monomerenmischung und der Initiator werden während 3 bis 6 Stunden kontinuierlich zudosiert. Nach beendeter Polymerisation wird gegebenenfalls zumindest ein Teil des Lösungsmittels abdestilliert.

Die so hergestellten, intramolekulare Anhydridgruppen aufweisenden Copolymerisate werden dann in der Stufe b) mit Monoalkoholen umgesetzt, wobei mindestens 50%, vorzugsweise mindestens 85% der Anhydridgruppen

unter ringöffnender Veresterung in Halbester überführt werden und wobei gegebenenfalls vor, gleichzeitig mit und/ oder im Anschluß an diese Modifizierungsreaktion bis zu 50 %, vorzugsweise bis zu 15 % der Anhydridgruppen durch Umsetzung mit niedermolekularen, gesattigten einwertigen Alkoholen in Halbester überführt werden

Bei den Monoalkoholen handelt es sich vorzugsweise um ein- oder mehrfach olefinisch ungesättigte einwertige Alkohole eines über 183 liegenden Molekulargewichts der Formel

R-OH

wobei

R die bereits obengenannte Bedeutung hat und vorzugsweise für ein- oder mehrfach olefinisch ungesättigte aliphatische Kohlenwasserstoffreste mit 14 bis 18 Kohlenstoffatomen steht.

Geeignete derartige Alkohole sind beispielsweise Lauroleinalkohol, Oleylalkohol, Linoleylalkohol, Linolenylalkohol, Elaidylalkohol, Gadoleylalkohol, Arachidonalkohol, Erucaalkohol, Elupanodonalkohol und Gemische dieser Alkohole.

Bevorzugte Alkohole sind die aus natürlichen Ölen, wie z.B. Sojaöl oder Leinöl, durch Umesterung und Hydrierung erhaltenen Fettalkoholgemische.

Die Halbesterbildung wird üblicherweise im Anschluß an die Herstellung der Copolymerisate dermaßen durchgeführt, daß der Alkohol bzw. das Alkoholgemisch zu dem Copolymerisat, welches gegebenenfalls von eventuell vorliegenden Lösungsmitteln ganz oder teilweise befreit worden ist, zudosiert wird und die Reaktionsmischung bei 100 bis 160°C für 2 bis 10 Stunden, oder solange, bis die Gesamtsäurezahl konstant ist, gehalten wird.

Die genannten Alkohole werden bei der Stufe b) des Verfahrens in solchen Mengen eingesetzt, daß mindestens 50 %, vorzugsweise mindestens 85 % der in den Copolymerisaten der Stufe a) vorliegenden Säureanhydridgruppen unter ringöffnender Esterbildung in Halbestergruppen überführt werden, d.h. das Molverhältnis von Anhydridgruppen zu Hydroxylgruppen der Alkohole liegt bei der Durchführung der Stufe b) im allgemeinen bei 1:0,5 bis 1:1, vorzugsweise bei 1:0,85 bis 1:1. Nach der Durchführung der Stufe b) des Verfahrens liegen in den so modifizierten Copolymerisaten im allgemeinen zwischen 15 und 50 Gew.-%, vorzugsweise zwischen 20 und 40 Gew.-% an eingebauten Struktureinheiten der Formel

-O-R

vor.

Zur Gewährleistung der Wasserverdünnbarkeit der so erhaltenen, oxidativ trocknenden Bindemittel werden die vorliegenden Carboxylgruppen zumindest teilweise durch Neutralisation mit einer geeigneten Base in Carboxylatgruppen überführt.

Zur Neutralisation können wäßrige, anorganische Basen wie z.B. Natriumhydroxid, Kaliumhydroxid oder Ammoniak verwendet werden. Ebenfalls geeignet sind organische Amine wie z.B. Trimethylamin, Triethylamin, Diethanolamin, Methyldiethanolamin, Dimethylethanolamin, Diethylethanolamin, Triethanolamin, 2-Amino-2-methyl-1-propanol, sowie Mischungen dieser und anderer Neutralisationsmittel.

Bei der Durchführung der Neutralisationsreaktion werden bis zu 100 %, vorzugsweise 20 bis 80 %, der vorliegenden Carboxylgruppen durch Neutralisation in Carboxylatgruppen überführt.

Besonders bevorzugt sind die Produkte gemäß Beispiel 1 bis 5 der EP-B 350 684.

Die Reaktionsbedingungen sind an sich bekannt und der o.g. Patentschrift zu entnehmen.

Die <u>kationischen Hydroxylgruppen-haltigen Polymeren (SP 3)</u> umfassen Polymerisate, vorzugsweise aus den Gruppen

A) der Vinylpolymerisate (nachfolgend VPol genannt), die vorzugsweise dadurch erhalten werden, daß man Monomermischungen aus

a) mindestens 5 Gew.-% Styrol und/oder $\alpha$-Methylstyrol, Methacrylnitril, Acrylnitril bzw. Gemische dieser Monomeren,

b) mindestens 5 Gew.-% (Meth)Acrylsäureester von monofunktionellen Alkoholen mit 1 bis 12 C-Atomen

c) 0,1 bis 35 Gew.-% eines oder mehrerer Vinylmonomere der Formeln

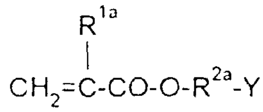

und/oder

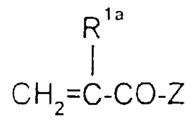

wobei

$R^{1a}$ für ein H-Atom oder eine Methylgruppe,

$R^{2a}$ für einen unverzweigten oder verzweigten Alkylenrest mit 1 bis 18 C-Atomen,

Y für ein H-Atom oder die Gruppe $-OR^{5a}$ und

Z für eine Gruppe -OH oder $-NR^{3a}R^{4a}$ steht wobei $R^{3a}$, $R^{4a}$ und $R^{5a}$ für Wasserstoff oder einen Alkylrest mit 1 bis 4 C-Atomen stehen und die Summe a) + b) + c) 100 Gew.-% beträgt (vorzugsweise in Gegenwart eines kationischen Emulgators) emulgiert und die erhaltene Emulsion einer radikalischen Polymerisation unterwirft.

Die kationischen Hydroxylgruppen-haltigen Polymeren (SP 3) bestehen aus mindestens einem Hydroxylgruppen aufweisenden Vinylpolymerisat eines über 500, vorzugsweise über 1500 liegenden Molekulargewichts $M_n$ und einer Hydroxyfunktionalität von mindestens 2, im allgemeinen von mindestens 3. Die Komponente SP 3 enthält zumindest teilweise, vorzugsweise ausschließlich solche höhermolekularen Komponenten, die einen die Löslichkeit oder Dispergierbarkeit der Komponente SP 3 in Wasser bewirkenden Gehalt an eingebauten Ammoniumgruppen aufweisen. Grundsätzlich möglich, im allgemeinen jedoch nicht bevorzugt, ist die Verwendung von Gemischen von solchen höhermolekularen Polyhydroxylverbindungen SP 3, die sowohl auf diese Weise kationisch modifizierte kationische Polyole als auch nicht ionisch modifizierte Polyole darstellen, vorausgesetzt, der Anteil der kationisch modifizierten Polyole ist ausreichend hoch, um die Dispergierbarkeit bzw. die Löslichkeit der Gesamtmischung zu gewährleisten. Der Gehalt der höhermolekularen Polyolkomponente SP 3 an chemisch eingebauten Ammoniumgruppen kann bei 8 bis 450, vorzugsweise 25 bis 250 Milliäquivalenten pro 100 g Feststoff liegen.

Die Molekulargewichte $M_n$ werden im Falle von Molekulargewichten von bis zu 5000 dampfdruckosmometrisch in Dioxan und Aceton und im Falle von Molekulargewichten von über 5000 membranosmometrisch in Aceton bestimmt.

Die kationische Modifizierung der höhermolekularen Polyhydroxylverbindungen erfolgt im allgemeinen durch Einbau von tertiären Stickstoffatomen und deren nachträgliche Überführung in Ammoniumgruppen durch Neutralisation mit einer Säure oder durch Quaternierung mit einem Quaternierungsmittel.

Als höhermolekulare Polyhydroxylverbindungen sind Polymerisationsprodukte, die den oben gemachten Definitionen entsprechen, geeignet. Oftmals enthalten diese Verbindungen Segmente, die durch eine Polymerisationsreaktion entstanden sind.

Beispiele für Verbindungen, die als Komponente SP 3 bzw. Teil der Komponente SP 3 verwendbar sind oder durch eine einfache Neutralisation oder Quaternierung in derartige Verbindungen überführt werden können, sind:

(iv) Den oben gemachten Ausführungen entsprechende hydroxygruppenhaltige Vinylpolymerisate, erhältlich durch an sich bekannte Copolymerisation von olefinisch ungesättigten Monomeren unter Mitverwendung von Monomeren, die Hydroxygruppen enthalten, und Monomeren, die tertiäre Stickstoffatome enthalten. Zur Herstellung derartiger Vinylpolymerisate geeignete Monomere sind beispielsweise $C_1$-$C_8$-, vorzugsweise $C_1$-$C_4$-Alkylmethacrylate, insbesondere Methylmethacrylat oder Ethylmethacrylat oder n-Butylmethacrylat; Styrol; $C_1$-$C_8$- Alkylacrylate wie Methyl-, Ethyl-, Isopropyl,- n-Butyl-, n-Hexyl-, 2-Ethylhexylacrylat; $C_2$-$C_8$-Hydroxyalkyl(meth)acrylate, vorzugs-

weise Hydroxyethylmethacrylat, 2-Hydroxypropylmethacrylat, 4-Hydroxybutylmethacrylat oder beliebige Gemische derartiger Monomerer; Vinyltoluole; Vinylester wie Vinylacetat; und tertiäre Stickstoffatome enthaltende Monomere wie Dimethylaminoethylmethacrylat, (Meth)Acrylsäureester von 2-Hydroxyethylmorpholin oder -piperidin, N,N-Dimethylaminoethanol; (Meth)Acrylnitril; (Meth)Acrylamid; Diallyldialkyl-ammonium-chlorid (Alkyl bevorzugt $C_1$-$C_4$-Alkyl); Methyl-acrylamidoglycolsäure-methylester (MAGME); Trimethylammonium-ethylmethacrylamid, -ester als Chlorid-Salz; tertiäre Stickstoffatome aufweisende Monomere, wie beispielsweise (Meth)Acrylsäureamide von tertiären Stickstoff aufweisenden Diaminen, wie N,N-Dimethyl-propylendiamin.

Prinzipiell möglich ist auch die Herstellung von tertiäre Stickstoffatome aufweisenden Vinylpolymerisaten durch Umsetzung von stickstofffreien Ausgangsmaterialien unter Einbau von tertiäre Stickstoffatome aufweisenden Alkoholen der oben beispielhaft genannten Art über Urethanbindungen, d.h. durch Umsetzung eines Teils der Hydroxylgruppen der Vinylpolymerisate mit tertiären Stickstoff enthaltenden Isocyanaten oder Isocyanato-Urethanen, die vorab beispielsweise durch Umsetzung von tertiäre Stickstoffatome aufweisenden einwertigen Alkoholen der beispielhaft genannten Art mit einem hohen Diisocyanat-Überschuß unter anschließender destillativer Entfernung des nicht umgesetzten Diisocyanats hergestellt worden sind. Es ist auch möglich, durch polymeranaloge Umsetzung von Polyacrylnitril-Copolymerisaten mit Aminen, die eine tertiäre Aminogruppe und eine primäre Aminogruppe enthalten, zu tertiären Aminogruppen enthaltenden Polymerisaten zu gelangen.

Besonders bevorzugte Komponenten SP 3 sind die zuletzt genannten Vinylpolymerpolyole (VPol).

Die Komponente SP 3 kann aus beliebigen Gemischen der beispielhaft genannten höhermolekularen Polyhydoxylverbindungen bestehen, vorausgesetzt, diese entsprechen bezüglich des Gehalts an Ammoniumgruppen den oben gemachten Ausführungen. Die Überführung der tertiären Stickstoffatome in Ammoniumionen erfolgt durch Neutralisation oder Quaternierung.

Zur Neutralisation der tertiären Sticksoffatomme geeignete Säure sind insbesondere aliphatische Säuren wie Essigsäure, Ameisensäure, Weinsäure, Methansulfonsäure, Äpfelsäure, Milchsäure, Malonsäure, Adipinsäure, Bernsteinsäure, Fumarsäure. Die Neutralisation kann in Substanz, in Wasser oder in organischer Phase erfolgen.

Zur Herstellung einer wäßrigen Dispersion der Komponente SP 3 genügt es oftmals, die tertiäre Stickstoffatome enthaltende Polyhydroxylverbindung mit einer wäßrigen Lösung einer zur Neutralisation geeigneten Säure zu vermischen. Falls wasserfreie, in Wasser lösliche oder dispergierbare Komponenten SP 3 hergestellt werden sollen, empfiehlt sich eine Neutralisation mit einer wasserfreien Säure wie beispielsweise Methansulfonsäure, so daß ein wasserfreies Salz entsteht, welches zu einem beliebigen Zeitpunkt durch einfaches Verrühren mit Wasser gelöst bzw. dispergiert werden kann. Auch die Mitverwendung von mit Wasser mischbaren Lösungsmitteln wie Aceton ist bei der Neutralisation denkbar. Acetonische Lösungen der zumindest teilweise neutralisierten Polyhydroxylverbindungen können auf besonders einfache Weise mit Wasser verrührt werden, worauf sich eine destillative Entfernung des Acetons anschließt.

Als Alkylierungsmittel eignen sich beispielsweise, Methylchlorid, Methylbromid, Methyljodid, Ethyljodid, Dimethylsulfat, Diethylsulfat, p-Toluolsulfonsäureethylester, Ethylenoxid, Propylenoxid. Die Alkylierung kann beispielsweise unter Mitverwendung von Lösungsmitteln wie Aceton, Dioxan, Acetonitril, Essigsäureethylester, tert.-Butanol bei 20 bis 100°C, gegebenenfalls unter Druck, mit anschließender Entfernung des Lösungsmittels durchgeführt werden. Man kann auch vorteilhaft in Gegenwart von geringen Mengen polarer, hochsiedender Lösungsmittel alkylieren, die dann nicht entfernt werden und gegebenenfalls als Koaleszenzmittel wirken, wie beispielsweise N-Methylpyrrolidon, und die Acetate von Propylenglykol und Glycerin.

Bevorzugte Ausführungsformen der Erfindung umfassen Mittel enthaltend die folgenden Zusammensetzungen:

A:

1. 10 bis 90 Gew.-Teile Polyisocyanat (PI),
2. 0 bis 450 Gew.-Teile natürliches Polvmer (NP) und
3. 10 bis 90 Gew.-Teile Polysiloxan-Pfropfcopolymer (SP 1) oder kationisches Hydroxylgruppen-haltiges Polymer (SP 3);

B:

1. 10 bis 90 Gew.-Teile Polyisocyanat (PI),
2. 0 bis 450 Gew.-Teile natürliches Polymer (NP) und

3. 0 bis 90 Gew.-Teile wasserverdünnbares synthetisches Polymer (SP 2)

mit der Maßgabe, daß die Komponente B2) mindestens 50 Gew.-Teile beträgt, sofern keine Komponente B3) vorhanden ist, und daß die Komponente B3) mindestens 10 Gew.-Teile beträgt, sofern die Komponente B2) nicht vorhanden ist.

Grundsätzlich ist anzumerken, daß erfindungsgemäß auch Mischungen der verschiedenen synthetischen Polymeren SP 1, SP 2, SP 3 eingesetzt werden können.

Die vorliegende Erfindung betrifft auch ein Verfahren zur Papierveredlung, d.h. zur Herstellung von trockenfest und/oder naßfest ausgerüstetem und/oder geleimtem cellulosehaltigem Material, dadurch gekennzeichnet, daß cellulosehaltiges Material mit einem der beschriebenen Mittel in Masse und/oder Oberfläche behandelt wird, wobei die Einzelkomponenten unabhängig voneinander dosiert werden können.

Cellulosehaltiges Material im Sinne der vorliegenden Erfindung sind Papierfaserstoffe auf Basis von Zellstoff, Holzschliff, Halbzellstoff, Altpapier, Baumwoll-Linters, Hanf, Jute, Flachs und anderer natürlicher Faserstoffe. Erfindungsgemäß können auch Mischungen der obengenannten Faserstoffe mit synthetischen Fasern eingesetzt werden. Der zur Herstellung von Papier, Pappe und Karton eingesetzte Faserbrei enthält gegebenenfalls übliche Füllstoffe wie Kaolin, China Clay, Kreide, Titandioxid usw. und Hilfsmittel wie Retentionsmittel, Entschäumer, Biocide usw..

<u>Anwendung</u>

Zur Durchführung des erfindungsgemäßen Verfahrens werden die Polyisocyanate (M) vorzugsweise ohne organische Lösungsmittel eingesetzt. Sie sind gegebenenfalls unter Zusatz von Säuren und/oder bei Temperaturen bis 100°C in Wasser sehr leicht zu emulgieren. Der Wirkstoffgehalt der Emulsion kann bis zu 70 Gew.-% betragen. Es ist aber vorteilhafter, Emulsionen mit einem Wirkstoffgehalt von 1 bis 30 Gew.-% herzustellen, die dann vor der Dosierstelle gegebenenfalls weiter verdünnt werden können. Zur Emulgierung eignen sich die in der Technik üblichen Mischaggregate (Rührer, Mischer mit Rotor-Stator-Prinzip und z. B. Hochdruckemulgiermaschinen). Die bevorzugten Polyisocyanate sind selbstemulgierend, d.h. sie lassen sich nach Zugabe zur Wasserphase auch ohne Einwirkung hoher Scherkräfte leicht emulgieren. In der Regel reicht ein Statischer Mischer aus. Die erhaltenen Emulsionen besitzen eine bestimmte Verarbeitungszeit, die von der Struktur der eingesetzten Polyisocyanate, insbesondere von deren Gehalt an basischen N-Atomen abhängt. Die Verarbeitungszeit einer solchen wäßrigen Emulsion beträgt bei Raumtemperatur in der Regel bis zu etwa 24 Stunden. Die Verarbeitungszeit ist als die Zeit definiert, in der das Optimum der Trocken- und Naßfestwirkung bzw. der Leimungswirkung erreicht wird. Kationische Polyisocyanat-Emulsionen haben eine Verarbeitungszeit von ca. 7 Stunden.

Zur Erleichterung der Einarbeitung in die wäßrige Phase kann es zweckmäßig sein, das erfindungsgemäß einzusetzende Polyisocyanat in einem gegenüber Isocyanatgruppen inerten Lösungsmittel gelöst einzusetzen. Geeignete Lösungsmittel sind beispielsweise Essigsäureethylester, Ethylenglykoldiacetat, Propylenglykoldiacetat, 2-Butanon, 1-Methoxypropyl-2-acetat, Toluol oder deren Gemische. Der Anteil der Lösungsmittel in der Lösung des Polyisocyanats sollte höchstens 80 Gew.-%, vorzugsweise höchstens 50 Gew.-% betragen. Besonders bevorzugt ist jedoch die Verwendung <u>lösungsmittelfreier</u> Polyisocyanate. Besonders bevorzugt sind dabei Polyisocyanate I mit einer Viskosität < 5000 mPa.s, vzw. < 2500, insbesondere < 1600 mPa.s, jeweils gemessen bei 25°C.

Die für das erfindungsgemäße Verfahren geeigneten cellulosehaltigen Materialien umfassen z. B. Papier oder papierähnliche Materialien wie Pappe oder Karton. Die Ausrüstung erfolgt in an sich bekannter Weise.

<u>Zur Durchführung des erfindungsgemäßen Verfahrens</u> werden die erfindungsgemäßen Mittel bzw. Dispersionen beispielsweise in der <u>Masse</u> eingesetzt. Geeignete Rohstoffe für die Herstellung der erfindungsgemäß ausgerüsteten Papiere in Masse sind gebleichte und ungebleichte Zellstoffe, Tissuestoffe, Holzschliff, Recycling- und Deinking-Stoffe, die zusätzlich Füllstoffe oder übliche Zuschlagstoffe enthalten können. Dabei kann man so vorgehen, daß man das Polyisocyanat bei einer Temperatur von 10 bis 80°C in Wasser emulgiert und mit den anderen Komponenten mischt und die dabei erhaltene Emulsion zu einer Suspension des Faserrohstoffs zugibt oder direkt in der Suspension der Faserstoffe dispergiert und aus dieser Suspension durch Entwässerung das Papier bildet, das anschließend getrocknet wird. Zur Emulgierung des Polyisocyanats ist es zweckmäßig, eine entsprechende Wassermenge vorzulegen Die Dispergierung wird vorzugsweise kontinuierlich in Dosier- und Dispergieraggregaten durchgeführt.

Beim Einsatz in der <u>Oberfläche</u> wird ein fertiges Rohpapier mit einer erfindungsgemäßen wäßrigen Dispersion behandelt und anschließend getrocknet. Für die Ausrüstung auf der Oberfläche sind übliche sauer und neutral gefertigte Rohpapiere aus den obengenannten Zellstoffsystemen geeignet, z.B. zur Herstellung von Hygienepapieren, Laminatpapieren, Streichrohpapieren, Druckpapier, Etikettenpapieren, Selbstdurchschreibepapieren, Verpackungspapieren und -kartonagen usw.

Die Papiere können übliche Füllstoffe wie Clay, Kreide, Titandioxid, Farbstoffe, Pigmente, Aufheller und übliche Papierhilfsmittel wie Leimungsmittel, Naßfestmittel, Retentionsmittel und Fixiermittel enthalten. Der Einsatz in

der Leimpresse, Filmpresse oder über Blades ist möglich. Dabei wird das in Wasser, wie bereits beschrieben, emulgierte Polyisocyanat zusammen mit den anderen Komponenten auf die fertige Papierbahn übertragen. Es ist auch ein Sprühauftrag möglich. Der erfindungsgemäße Effekt wird bereits sofort nach der Trocknung erzielt. Der durch Oberflächenbehandlung erzielbare Naßfesteffekt übersteigt das Niveau, das mit den bisher bekannten Naßfestmitteln bei gleicher Dosierung an Wirksubstanz erreichbar ist, wesentlich. Die Leimungswirkung ist durch das Verhältnis der Komponenten steuerbar.

Es ist ein großer Vorteil der erfindungsgemäßen Dispersionen, daß die Erhöhung der Naßfestigkeit, der Trokkenfestigkeit, des Weiterreißwiderstands und der Leimungswirkung durch die Einsatzmengen der Komponenten sehr gut in weitem Bereichen auch unabhängig voneinander einstellbar ist. Im folgenden werden Beispiele für besonders geeignete Dispersionen im Detail beschrieben.

Die erfindungsgemäßen Dispersionen werden im allgemeinen wie folgt hergestellt:

<u>Polyisocyanat (M) + Polysiloxan-Pfropfcopolymer (SP 1) + gegebenenfalls natürliches Polymer (NP)</u>

Das Polyisocyanat (M) wird wie oben beschrieben, in Wasser emulgiert. Die Emulsion wird auf eine Konzentration von 0,1 bis 10 Gew.-% verdünnt. Entsprechend wird eine Dispersion des Polysiloxan-Pfropfcopolymerisats in Wasser auf 0,1 bis 10 Gew.-% verdünnt. Die beiden Dispersionen werden dann gemischt und dann zur Behandlung des cellulosehaltigen Substrats in Masse und/oder Oberfläche eingesetzt. Sie können aber auch unabhängig voneinander in Masse und/oder Oberfläche eingesetzt werden. Eine gemeinsame Dosierung der zuvor erhaltenen Mischung ist im allgemeinen bevorzugt.

Es ist aber auch möglich, die Dispersion des Polyisocyanats (M) in der Masse und die Dispersion des Polysiloxan-Pfropfcopolymerisats in der Oberfläche einzusetzen oder umgekehrt.

Wird zusätzlich ein natürliches polymer (NP) verwendet, so ist es vorteilhaft, die Dispersion des Polyisocyanats (M) (PI) und des synthetischen Polymers (SP 1) in der vorbereiteten Stärkelösung zu dispergieren. Es kann aber auch in diesem Fall eine unabhängige Dosierung der Einzelkomponenten erfolgen.

Die Einsatzmengen der erfindungsgemäßen Dispersionen können, jeweils angegeben als Wirksubstanz, bezogen auf cellulosehaltiges Material,

0,005 - 10 Gew.-% Polyisocyanat (M) (PI),
0,005 - 10 Gew.-% des Polysiloxan-Pfropfcopolymers (SP 1)
und gegebenenfalls
0,005 - 10 Gew.-% des natürlichen Polymers (NP)

betragen.

Besonders bevorzugt ist ein Einsatz, bezogen auf cellulosehaltiges Material, von

0,05 - 5 Gew.-% Polyisocyanat (M) (PI),
0,05 - 5 Gew.-% des Polysiloxan-Pfropfcopolymers (SP 1) und gegebenenfalls
0,5 - 7 Gew.-% des natürlichen Polymers (NP).

Das Gewichtsverhältnis der Wirkstoffe von Polyisocyanat (PI) und Polysiloxan-Pfropfcopolymer (SP 1) soll vorzugsweise im Bereich PI : SP 1 = 1 : 20 bis 20 : 1, besonders bevorzugt zwischen 5 : 1 bis 1 : 5 liegen.

Im allgemeinen ist für den erfindungsgemäßen Effekt bei der Behandlung von Papier, Pappe oder Karton eine Einsatzmenge von maximal 2 Gew.-% Wirksubstanz Polyisocyanat I und maximal 1 Gew.-% Wirksubstanz Polysiloxan-Pfropfcopolymer SP 1 ausreichend; Stärke wird dabei üblicherweise in einer Menge von bis zu 5 Gew.-% Wirksubstanz eingesetzt.

Der Begriff "Wirksubstanz" bzw. "Wirkstoff" bezieht sich auf den Gehalt der Bestandteile PI, SP oder NP in der jeweiligen Komponente der Dispersion bzw. der gesamten Dispersion und entspricht in der Regel dem Feststoffgehalt, der sich nach Verdampfen des Wassers als Rückstand ergibt.

Die fertigen Papiere können darüberhinaus noch übliche <u>Füllstoffe</u> enthalten wie Kreide, Kaolin, Titandioxid, Eisenpigmente, Bentonit etc. Der Füllstoffanteil kann bis zu 40 %, bezogen auf Faserstoff, betragen.

Mit den erfindungsgemäßen Mitteln bzw. Dispersionen werden hervorragende Leimungseffekte erzielt. Die Leimungswirkung erreicht ihr Maximum, wenn das Verhältnis der Wirkstoffe, bezogen auf cellulosehaltiges Material, etwa 1 Gew.-Teil Polyisocyanatgemisch (M) zu 0,5 Gew.-Teilen des Polysiloxan-Pfropfcopolymers (SP 1) beträgt.

Zur Erzielung des gewünschten Effekts in der Masse ist es besonders bevorzugt, die wäßrige Emulsion der erfindungsgemäß einzusetzenden Polyisocyanate innerhalb von 60 Minuten, vorzugsweise innerhalb von 15 Minuten zum Faserstoff zu dosieren. Besonders bevorzugt ist eine kontinuierliche Dispergierung und Dosierung der Polyisocyanate. Um den optimalen Naßfesteffekt bzw. Leimungseffekt unter Praxisbedingungen zu erzielen, ist in der Masse

eine Dosierung des Polyisocyanats z. B. kurz vor dem Stoffauflauf der Papiermaschine oder einer teilweisen Dosierung in der Stoffzentrale besonders empfehlenswert. Der Einsatz in der Leimpresse ergibt keine Schwierigkeiten, da keine Schaumprobleme auftreten. Zur Prüfung wird man im allgemeinen im Labor Papierblätter mit einem Flächengewicht von 20 bis 100 $g/m^2$ bilden. Auch höhere Flächengewichte (Karton) sind problemlos einstellbar.

In Wasser hydrolysieren die NCO-Gruppen der erfindungsgemäß einzusetzenden Polyisocyanate langsam unter $CO_2$-Entwicklung zu den entsprechenden Aminen, die mit noch vorhandenen NCO-Gruppen teilweise zu Harnstoff-Gruppen reagieren. Vorteilhaft ist, daß auch die teilweise oder vollständig hydrolysierten Polyisocyanat-Dispersionen stabile Dispersionen sind, da sie keine Ausfällung ergeben.

Gemäß dem erfindungsgemäßen Verfahren können die Produkte im pH-Bereich zwischen 4 und 10, vorzugsweise zwischen 5,5 und 9 in der Masse zum Faserstoff dosiert werden. Besonders bevorzugt ist die Anwendung im pH-Bereich von 6 bis 7,5.

In diesem pH-Bereich liegt ein Teil der tertiären Aminogruppen in protonierter Form vor. Es ist auch möglich, die Dispergierung unter Zusatz von Säure durchzuführen. Eine vom pH-Wert unabhängige, kationische Ladung wird dann erhalten, wenn die durch Quaternierung der tertiären Aminogruppen erhaltenen Polyisocyanate eingesetzt werden. Eine Quaternierung ist aber für die meisten Anwendungen nicht erforderlich.

Die erfindungsgemäßen Mittel bzw. Dispersionen ergeben gebrauchsfertige Papiere mit guter Festigkeit und Leimung sofort ab Maschine. Durch Lagerung des fertigen Papiers und/oder eine Nachkondensation kann eine Verstärkung erreicht werden. Generell ist aber bereits ab Maschine ein höheres Niveau als bei konventionellen Naßfestmitteln bzw. Leimungsmitteln erreichbar. Auch die Trockenfestigkeit ist zum Teil gegenüber konventionellen Trockenfestmitteln verbessert. Der erfindungsgemäße Effekt tritt dann auf, wenn bestimmte Mengenverhältnisse von Polyisocyanat I und/oder Polysiloxan-Pfropfcopolymer (SP 1) und natürlichem Polymer (NP) eingehalten werden. Vorteilhafterweise wird auch eine positive Beeinflussung des Weißgrades ohne und mit optischen Aufhellern (Verstärkung des Weißgrads) gefunden.

Das erfindungsgemäße Verfahren wird unter den in der Papierindustrie üblichen Verarbeitungstemperaturen durchgeführt. Die Verarbeitungsdauer ist dabei von der Temperatur abhängig Im Temperaturbereich von 20 bis 25 °C ist die Verarbeitungszeit relativ lang. Die Wirkung erreicht z. B. nach 6stündiger Lagerung der wäßrigen Emulsion noch ca 70 des Wertes bei sofortiger Anwendung der Emulsion. Bei höherer Temperatur, z B bei 50°C, ist eine Verarbeitung innerhalb von 2 Stunden zu empfehlen Besonders vorteilhaft ist eine Dispergierung und Dosierung in bekannten Dispergier-/Dosierapparaten, da hierbei kurze Verweilzeiten im Minutenbereich erreicht werden können.

Die erfindungsgemäßen Mittel bzw. Dispersionen sind in Kombination mit anderen Hilfsmitteln, wie Retentionsmitteln, Fixierhilfsmitteln, Leimungsmitteln, Trockenfestmitteln, Bindemitteln, Aufhellern und Naßfestmitteln, einsetzbar. Insbesondere durch Zusatz von handelsüblichen Retentionsmitteln vom Typ der kationischen Polykondensate und Polymerisate, z. B der Polyamine, der Polyethylenimine, der Polyamidamine und der Polyacrylamide sowie der Dual-Systeme, bestehend aus kationischen oder kationischen und anionischen und gegebenenfalls partikulären Komponenten wie Kieselsolen etc., kann die Fixierung von Füllstoffen noch verstärkt werden. Dies ist insbesondere dann von Interesse, wenn an eine Anwendung im Laminatpapier-Bereich gedacht ist. Bevorzugte Retentionsmittel im Sinne der Erfindung sind kationische Polykondensate aus Polyaminen, vorzugsweise N-Methyl-bis(3-aminopropyl)amin, und Alkylendihalogeniden, vorzugsweise Dichlorethan. Es sei jedoch hervorgehoben, daß der gewünschte Effekt auch ohne den Zusatz von besonderen Fixiermitteln zu erzielen ist.

Die erfindungsgemäßen Mittel bzw. Dispersionen sind mit üblichen optischen Aufhellern gut verträglich. Sie führen nicht zur Weißgraderniedrigung wie z.B. konventionelle Naßfestmittel auf Epichlorhydrin-Basis. Außerdem läßt sich für die Anwendung im Hygiene-Papierbereich ein weicher Griff des Papiers erzeugen. Im Strich eingesetzt, ergeben die erfindungsgemäßen Dispersionen eine Weißgraderhöhung um ca. 1 - 10 %.

Die aufgetragene Präparation verbessert die Gebrauchseigenschaften von Papier, insbesondere die Beschreibbarkeit, die Bedruckbarkeit, die Festigkeit, die Staubneigung, führt zu einer verminderten Wasseraufnahme und zu einer positiven Beeinflussung des Weißgrads. Die Effekte sind meßbar vor allem als $Cobb_{60}$-Wert, IGT-Rupftest, Festigkeitsprüfung, sowie als Tintenschwimmprobe und Tropfentest.

<u>Polyisocyanat (M) + (natürliches Polymer (NP) und/oder synthetisches Polymer (SP 2))</u>

A) <u>Stärke + Polyisocyanat</u>

Die für die Anwendung übliche Hilfsmittelzusammensetzung kann wie folgt zubereitet werden:

a) <u>Gemeinsame Formulierung</u>

Native Stärke wird kontinuierlich oder diskontinuierlich bei 20-30 Gew.-% Konzentration und z B. 130 °C bis zur gewünschten Viskosität gekocht, gegebenenfalls enzymatisch oder oxidativ abgebaut. Dann wird auf eine übliche,

verwendungsfähige Konzentration von 5 bis 8 Gew.-% verdünnt und in den Arbeitsbehälter gepumpt (allgemein bekannt).

Zu dieser Mischung werden die Polyisocyanate I dosiert, wobei 0,01 bis 10 Gew.-%, bezogen auf die Flotte, dosiert werden. Vorzugsweise wird das Polyisocyanat I in Wasser (1 - 20 Gew.-%) voremulgiert. Vorzugsweise wird eine Flotte folgender Zusammensetzung eingesetzt:

0,01 bis 10 Gew.-Teile Stärke(-derivat),
0,01 bis 10 Gew.-Teile Polyisocyanat I und
98,98 bis 80 Gew.-Teile Wasser.

Die homogene Flotte wird in üblicher Weise in der Masse dem Stoff zugesetzt oder in der Leimpresse oder mit Auftragsaggregaten wie Filmpressen auf die Oberfläche des Papiers dosiert.

b) Einzeldosierung

Selbstverständlich ist auch eine unabhängige, getrennte Dosierung der Komponenten des erfindungsgemäßen Hilfsmittels möglich.

Dabei ist es auch möglich, daß die Komponenten in der Masse oder in der Oberfläche dosiert werden, wobei die Dosierstellen jeweils unabhängig sein können.

Bevorzugt ist, die Komponenten in einem gemeinsamen Arbeitsbehälter zu mischen und so zum Stoff zu dosieren.

B) Polyisocyanat PI + synthetisches Polymer SP 2

Zur Anwendung des synthetischen Polymers (SP 2) in Kombination wird eine Dispersion des Polymers mit einer Voremulsion des Polyisocyanats (M) in Wasser gemischt und z.B. mit Hilfe einer Leimpresse für die Oberflächenbehandlung dosiert oder der Faserstoff-Suspension in der Masse zugesetzt.

Dabei wird vorzugsweise eine Flotte bestehend aus

0,01 bis 10 Gew.-% Polyisocyanat (M),
0,01 bis 10 Gew.-% synthetisches Polymer SP 2 und
98,98 bis 80 Gew.-% Wasser

eingesetzt.

C) Polyisocyanat PI / synthetisches Polymer SP 2 / natürliches Polymer NP

Die Applikation erfolgt wie oben beschrieben durch Mischen der Einzelkomponenten zu einer Flotte, die vorzugsweise besteht aus:

0,01 bis 10 Gew.-% Polyisocyanat (M),
0,01 bis 10 Gew.-% natürlichem Polymer (NP),
0,01 bis 10 Teilen synthetischem Polymer (SP 2) und
99,97 bis 70 Teilen Wasser.

Bezogen auf fertiges Papier, beträgt der Einsatz der erfindungsgemäßen Dispersion vorzugsweise

0,005 bis 10 Gew.-% Polyisocyanat (Wirkstoff),
0,005 bis 10 Gew.-% natürliches Polymer (NP), vzw. Stärke (-derivat), und
0,005 bis 5 Gew.-% synthetisches Polymer (SP 2) (Wirkstoff).

Die fertigen Papiere können darüberhinaus noch übliche Füllstoffe enthalten wie Kreide, Kaolin, Titandioxid, Eisenpigmente, Bentonit etc.

Der Füllstoffanteil kann bis zu 40 Gew.-%, bezogen auf Faserstoff, betragen.

Besonders gute Resultate werden erzielt, wenn die Wirkstoffe von Stärke und Polyisocyanat I im Gewichstverhältnis 100:1 bis 0,5:1 eingesetzt werden.

Das ideale Verhältnis des Wirkstoffs des Polyisocyanats zum Wirkstoff des synthetischen Polymers (SP 2) beträgt ebenfalls 20:1 bis 1:20.

Falls zusätzlich Stärke eingesetzt wird, ergibt sich der optimale Bereich aus 1 Gew.-Teil Summe der Wirkstoffe von Polyisocyanat (M) und von synthetischem Polymer (SP 2), bezogen auf 1 bis 10 Gew.-Teile Stärke, wobei das Verhältnis zwischen Polyisocyanat I und synthetischem Polymer (SP 2) zwischen 1:20 und 20:1 variiert werden kann.

Besonders bevorzugt ist eine Kombination von 1 bis 10 Gew.-Teilen Stärke, 0,4 bis 0,6 Gew.-Teilen Polyisocyanat I und 0,1 bis 0,4 Gew.-Teilen synthetischem Polymer (SP 2).

Mit dieser Mischung werden ausgezeichnete Leimungseffekte erzielt. Die Leimungswirkung erreicht ihr Maximum, wenn das Verhältnis etwa 1 Gew.-Teil Polyisocyanat (M)/0,5 Gew.-Teile synthetisches Polymer (SP 2) beträgt.

Zur Erzielung des gewünschten Effekts in der Masse ist es besonders bevorzugt, die wäßrige Emulsion der erfindungsgemäß einzusetzenden Polyisocyanate innerhalb von 60 Minuten, vorzugsweise innerhalb von 15 Minuten zum Faserstoff zu dosieren. Besonders bevorzugt ist eine kontinuierliche Dispergierung und Dosierung der Polyisocyanate. Um den optimalen Naßfesteffekt bzw. Leimungseffekt unter Praxisbedingungen zu erzielen, ist in der Masse eine Dosierung des Polyisocyanats z. B. kurz vor dem Stoffauflauf der Papiermaschine oder einer teilweisen Dosierung in der Stoffzentrale besonders empfehlenswert. Der Einsatz in der Leimpresse zur Applikation in der Oberfläche ist besonders vorteilhaft, wobei keine Schaumprobleme auftreten. Zur Prüfung wird man im allgemeinen im Labor Papierblätter mit einem Flächengewicht von 20 bis 100 g/m$^2$ bilden. Auch höhere Flächengewichte (Karton) sind problemlos einstellbar.

In Wasser hydrolysieren die NCO-Gruppen der erfindungsgemäß einzusetzenden Polyisocyanate langsam unter $CO_2$-Entwicklung zu den entsprechenden Aminen, die mit noch vorhandenen NCO-Gruppen teilweise zu Harnstoff-Gruppen reagieren. Vorteilhaft ist, daß auch die teilweise oder vollständig hydrolysierten Polyisocyanat-Dispersionen stabile Dispersionen sind, da sie keine Ausfällung ergeben.

Gemäß dem erfindungsgemäßen Verfahren können die Produkte im pH-Bereich zwischen 4 und 10, vorzugsweise zwischen 5,5 und 9 in der Masse zum Faserstoff dosiert werden. Besonders bevorzugt ist die Anwendung im pH-Bereich von 6 bis 7,5.

In diesem pH-Bereich liegt ein Teil der tertiären Aminogruppen in protonierter Form vor. Es ist auch möglich, die Dispergierung unter Zusatz von Säure durchzuführen. Eine vom pH-Wert unabhängige, kationische Ladung wird dann erhalten, wenn die durch Quaternierung der tertiären Aminogruppen erhaltenen Polyisocyanate eingesetzt werden. Eine Quaternierung ist aber für die meisten Anwendungen nicht erforderlich.

Die erfindungsgemäß einzusetzenden Dispersionen ergeben gebrauchsfertige Papiere mit guter Festigkeit und Leimung sofort ab Maschine. Durch Lagerung des fertigen Papiers und/oder eine Nachkondensation kann eine Verstärkung erreicht werden. Generell ist aber bereits ab Maschine ein höheres Niveau als bei konventionellen Naßfestmitteln bzw. Leimungsmitteln erreichbar. Auch die Trockenfestigkeit ist zum Teil gegenüber konventionellen Trockenfestmitteln verbessert. Der erfindungsgemäße Effekt tritt dann auf, wenn bestimmte Mengenverhältnisse von Polyisocyanat I und natürlichem Polymer (NP) und/oder synthetischem Polymer (SP 2) eingehalten werden. Vorteilhaft ist auch eine positive Beeinflussung des Weißgrades ohne und mit optischen Aufhellern (Verstärkung des Weißgrads).

Das erfindungsgemäße Verfahren wird unter den in der Papierindustrie üblichen Verarbeitungstemperaturen durchgeführt. Die Verarbeitungsdauer ist dabei von der Temperatur abhängig. Im Temperaturbereich von 20 bis 25 °C ist die Verarbeitungszeit relativ lang. Die Wirkung erreicht z. B. nach 6stündiger Lagerung der wäßrigen Emulsion noch ca. 70 % des Wertes bei sofortiger Anwendung der Emulsion. Bei höherer Temperatur, z. B. bei 50°C, ist eine Verarbeitung innerhalb von 2 Stunden zu empfehlen. Besonders vorteilhaft ist eine Dispergierung und Dosierung in bekannten Dispergier-/Dosierapparaten, da hierbei kurze Verweilzeiten im Minutenbereich erreicht werden können.

Die erfindungsgemaßen Mittel bzw. Dispersionen sind in Kombination mit anderen Hilfsmitteln, wie Retentionsmitteln, Fixierhilfsmitteln, Leimungsmitteln, Trockenfestmitteln, Bindemitteln, Aufhellern und Naßfestmitteln, einsetzbar. Insbesondere durch Zusatz von handelsüblichen Retentionsmitteln vom Typ der kationischen Polykondensate und Polymerisate, z.B. der Polyamine, der Polyethylenimine, der Polyamidamine und der Polyacrylamide sowie der Dual-Systeme, bestehend aus kationischen oder kationischen und anionischen und gegebenenfalls partikulären Komponenten wie Kieselsolen etc., kann die Fixierung von Füllstoffen noch verstärkt werden. Dies ist insbesondere dann von Interesse, wenn an eine Anwendung im Laminatpapier-Bereich gedacht ist. Bevorzugte Retentionsmittel im Sinne der Erfindung sind kationische Polykondensate aus Polyaminen, vorzugsweise N-Methyl-bis(3-aminopropyl)amin, und Alkylendihalogeniden, vorzugsweise Dichlorethan. Es sei jedoch hervorgehoben, daß der gewünschte Effekt auch ohne den Zusatz von besonderen Fixiermitteln zu erzielen ist.

Die erfindungsgemäß einzusetzenden Dispersionen sind mit üblichen optischen Aufhellern gut verträglich. Die erfindungsgemäß einzusetzenden Produkte führen nicht zur Weißgraderniedrigung wie z.B. konventionelle Naßfestmittel auf Epichlorhydrin-Basis. Außerdem läßt sich für die Anwendung im Hygiene-Papierbereich ein weicher Griff des Papiers erzeugen. Im Strich eingesetzt, ergeben die erfindungsgemäßen Dispersionen eine Weißgraderhöhung um ca. 1 - 10 %.

Die aufgetragene Präparation verbessert die Gebrauchseigenschaften von Papier, insbesondere die Beschreibbarkeit, die Bedruckbarkeit, die Festigkeit, die Staubneigung, führt zu einer verminderten Wasseraufnahme und zu einer positiven Beeinflussung des Weißgrads. Die Effekte sind meßbar vor allem als $Cobb_{60}$-Wert, IGT-Rupftest,

Festigkeitsprüfung, sowie als Tintenschwimmprobe und Tropfentest.

<u>Polyisocyanat + kationisches Hydroxylgruppen-haltiges Polymer (SP 3) + gegebenenfalls natürliches Polymer (NP)</u>

Die erfindungsgemäßen Dispersionen werden im allgemeinen wie folgt hergestellt: Das Polyisocyanat (M) wird wie oben beschrieben, in Wasser emulgiert. Die Emulsion wird auf eine Konzentration von 0,1 bis 10 Gew.-% verdünnt. Entsprechend wird eine Lösung oder Dispersion des Hydroxylgruppen enthaltenden, kationischen Polymers SP 3 (VinylP) in Wasser auf 0,1 bis 10 Gew.-% verdünnt. Die beiden Dispersionen werden dann gemischt und dann zur Behandlung des cellulosehaltigen Substrats in Masse und/oder Oberfläche eingesetzt. Sie können aber auch unabhängig voneinander in Masse und/oder Oberfläche eingesetzt werden. Eine gemeinsame Dosierung der zuvor erhaltenen Mischung ist im allgemeinen bevorzugt. Es ist außerdem möglich, daß Mischungen der verschiedenen Typen der genannten Polymeren SP in Kombination eingesetzt werden.

Es ist aber auch möglich, die Dispersion des Polyisocyanats (M) in der Masse und die Polymerkomponente SP in der Oberfläche einzusetzen oder umgekehrt.

Wird zusätzlich ein natürliches Polymer (NP) verwendet, so ist es vorteilhaft, die Dispersion des Polyisocyanats (M) (PI) und des synthetischen Polymers (SP 3) in der vorbereiteten Stärkelösung zu dispergieren. Es kann aber auch in diesem Fall eine unabhängige Dosierung der Einzelkomponenten erfolgen.

Die Einsatzmengen der erfindungsgemäßen Dispersionen können, jeweils angegeben als Wirksubstanz, bezogen auf cellulosehaltiges Material,

0,005 - 10 Gew.-% Polyisocyanat (M) (PI),
0,005 - 10 Gew.-% des synthetischen Polymers (SP 3)
und gegebenenfalls
0,005 - 10 Gew.-% des natürlichen Polymers (NP) betragen.

Besonders bevorzugt ist ein Einsatz, bezogen auf cellulosehaltiges Material, von

0,05 - 5 Gew.-% Polyisocyanat (M) (PI),
0,05 - 5 Gew.-% des synthetischen Polymers (SP 3) und gegebenenfalls
0,5 - 7 Gew.-% des natürlichen Polymers (NP).

Das Gewichtsverhältnis der Wirkstoffe von Polyisocyanat (PI) und synthetischem Polymer (SP 3) soll vorzugsweise im Bereich PI : SP 3 = 1 : 20 bis 20 :1, besonders bevorzugt zwischen 5 : 1 bis 1: 5 liegen.

Im allgemeinen ist für den erfindungsgemäßen Effekt bei der Behandlung von Papier, Pappe oder Karton eine Einsatzmenge von maximal 2 Gew.-% Wirksubstanz Polyisocyanat und maximal 4 Gew.-% Wirksubstanz an synthetischem Polymer SP 3 ausreichend. Stärke wird dabei üblicherweise in einer Menge bis zu 5 Gew.-% Wirksubstanz eingesetzt.

Die fertigen Papiere können darüberhinaus noch übliche <u>Füllstoffe</u> enthalten wie Kaolin, $CaCO_3$, $TiO_2$, Eisenpigmente, Bentonit etc.

Der Füllstoffanteil kann bis zu 40 Gew.-%, bezogen auf Faserstoff, betragen.

Mit den erfindungsgemäßen Mitteln bzw. Dispersionen werden gute Leimungseffekte erzielt, wenn das Verhältnis der Wirkstoffe bezogen auf cellulosehaltiges Material, etwa 1 Gew.-Teil Polyisocyanat (M) zu 1 bis 10 Gew.-Teilen des synthetischen Polymers (SP 3) beträgt. Die Naßfestwirkung wird bereits verbessert, wenn der Dispersion des Polyisocyanats geringe Mengen des kationischen hydroxygruppenhaltigen synthetischen Polymers SP 3, vorzugsweise aus der Gruppe der genannten Vinylpolymerisate (VPol) zugesetzt werden. Die Einsatzmengen reichen in letzterem Fall vozugsweise von 0,1 bis 5 Gew.-% Wirksubstanz der Komponente SP 3.

Zur Erzielung des gewünschten Effekts in der Masse ist es besonders bevorzugt, die wäßrige Emulsion der erfindungsgemäß einzusetzenden Polyisocyanate innerhalb von 60 Minuten, vorzugsweise innerhalb von 15 Minuten zum Faserstoff zu dosieren. Besonders bevorzugt ist eine kontinuierliche Dispergierung und Dosierung der Polyisocyanate. Um den optimalen Naßfesteffekt bzw. Leimungseffekt unter Praxisbedingungen zu erzielen, ist in der Masse eine Dosierung des Polyisocyanats z.B. kurz vor dem Stoffauflauf der Papiermaschine oder einer teilweisen Dosierung in der Stoffzentrale besonders empfehlenswert. Der Einsatz in der Leimpresse ergibt keine Schwierigkeiten, da keine Schaumprobleme auftreten. Zur Prüfung wird man im allgemeinen im Labor Papierblätter mit einem Flächengewicht von 20 bis 100 g/$m^2$ bilden. Auch höhere Flächengewichte (Karton) sind problemlos einstellbar.

In Wasser hydrolysieren die NCO-Gruppen der erfindungsgemäß einzusetzenden Polyisocyanate langsam unter $CO_2$-Entwicklung zu den entsprechenden Aminen, die mit noch vorhandenen NCO-Gruppen teilweise zu Harnstoff-Gruppen reagieren. Vorteilhaft ist, daß auch die teilweise oder vollständig hydrolysierten Polyisocyanat-Dispersionen stabile Dispersionen sind, da sie keine Ausfällung ergeben.

Gemäß dem erfindungsgemäßen Verfahren können die Produkte im pH-Bereich zwischen 4 und 10, vorzugsweise zwischen 5,5 und 9 in der Masse zum Faserstoff dosiert werden. Besonders bevorzugt ist die Anwendung im pH-Bereich von 6 bis 7,5.

In diesem pH-Bereich liegt ein Teil der tertiären Aminogruppen in protonierter Form vor. Es ist auch möglich, die Dispergierung unter Zusatz von Säure durchzuführen. Eine vom pH-Wert unabhängige, kationische Ladung wird dann erhalten, wenn die durch Quaternierung der tertiären Aminogruppen erhaltenen Polyisocyanate eingesetzt werden. Eine Quaternierung ist aber für die meisten Anwendungen nicht erforderlich.

Die erfindungsgemäßen Mittel bzw. Dispersionen ergeben gebrauchsfertige Papiere mit guter Festigkeit und Leimung sofort ab Maschine. Durch Lagerung des fertigen Papiers und/oder eine Nachkondensation kann eine Verstärkung erreicht werden. Generell ist aber bereits ab Maschine ein höheres Niveau als bei konventionellen Naßfestmitteln bzw. Leimungsmitteln erreichbar. Auch die Trockenfestigkeit ist zum Teil gegenüber konventionellen Trockenfestmitteln verbessert. Der erfindungsgemäße Effekt tritt dann auf, wenn bestimmte Mengenverhältnisse von Polyisocyanat (M) zu synthetischem Polymer (SP 3) und natürlichem Polymer (NP) eingehalten werden. Vorteilhafterweise wird auch eine positive Beeinflussung des Weißgrades ohne und mit optischen Aufhellern (Verstärkung des Weißgrads) gefunden.

Das erfindungsgemäße Verfahren wird unter den in der Papierindustrie üblichen Verarbeitungstemperaturen durchgeführt. Die Verarbeitungsdauer ist dabei von der Temperatur abhängig. Im Temperaturbereich von 20 bis 25 °C ist die Verarbeitungszeit relativ lang. Die Wirkung erreicht z. B. nach 6stündiger Lagerung der wäßrigen Emulsion noch ca 70 % des Wertes bei sofortiger Anwendung der Emulsion. Bei höherer Temperatur, z. B. bei 50°C, ist eine Verarbeitung innerhalb von 2 Stunden zu empfehlen. Besonders vorteilhaft ist eine Dispergierung und Dosierung in bekannten Dispergier-/Dosierapparaten, da hierbei kurze Verweilzeiten im Minutenbereich erreicht werden können.

Die erfindungsgemäßen Mittel bzw. Dispersionen sind in Kombination mit anderen Hilfsmitteln, wie Retentionsmitteln, Fixierhilfsmitteln, Leimungsmitteln, Trockenfestmitteln, Bindemitteln, Aufhellern und Naßfestmitteln, einsetzbar. Insbesondere durch Zusatz von handelsüblichen Retentionsmitteln vom Typ der kationischen Polykondensate und Polymerisate, z. B. der Polyamine, der Polyethylenimine, der Polyamidamide und der Polyacrylamide sowie der Dual-Systeme, bestehend aus kationischen oder kationischen und anionischen und gegebenenfalls partikulären Komponenten wie Kielselsolen etc., kann die Fixierung von Füllstoffen noch verstärkt werden. Dies ist insbesondere dann von Interesse, wenn an eine Anwendung im Laminatpapier-Bereich gedacht ist. Bevorzugte Retentionsmittel im Sinne der Erfindung sind kationische Polykondensate aus Polyaminen, vorzugsweise N-Methyl-bis(3 -aminopropyl)amin, und Alkylendihalogeniden, vorzugsweise Dichlorethan. Es sei jedoch hervorgehoben, daß der gewünschte Effekt auch ohne den Zusatz von besonderen Fixiermitteln zu erzielen ist.

Die erfindungsgemäßen Mittel bzw. Dispersionen sind mit üblichen optischen Aufhellern gut verträglich. Sie führen nicht zur Weißgraderniedrigung wie z.B. konventionelle Naßfestmittel auf Epichlorhydrin-Basis. Außerdem läßt sich für die Anwendung im Hygiene-Papierbereich ein weicher Griff des Papiers erzeugen. Im Strich eingesetzt, ergeben die erfindungsgemäßen Dispersionen eine Weißgraderhöhung um ca. 1 - 10 %.

Die aufgetragene Präparation verbessert die Gebrauchseigenschaften von Papier, insbesondere die Beschreibbarkeit, die Bedruckbarkeit, die Festigkeit, die Staubneigung, führt zu einer verminderten Wasseraufnahme und zu einer positiven Beeinflussung des Weißgrads. Die Effekte sind meßbar vor allem als $Cobb_{60}$-Wert, IGT-Rupftest, Festigkeitsprüfung, sowie als Tintenschwimmprobe und Tropfentest.

Die Prozentangaben der folgenden Beispiele beziehen sich - sofern nicht anders angegeben - jeweils auf das Gewicht; Teile sind Gewichtsteile.

## Herstellungsbeispiele

### Polyisocyanat PI - 1

1,0 Val eines Isocyanuratgruppen-haltigen Polyisocyanates auf Basis von 1,6-Diisocyanatohexan (HDI) mit einem NCO-Gehalt von 21,5 % und einer Viskosität von 3.000 mPa.s (23 °C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 - 4 h auf 100 °C erwärmt. Falls der NCO-Gehalt nicht den Sollwert erreicht, wird ein Katalysator (Desmorapid SO) zugesetzt und bis zum Erreichen des Sollwerts weitergerührt (IR-Kontrolle). Nach Abkühlen auf Raumtemperatur liegt ein farbloses klares Polyisocyanatgemisch vor. Der NCO-Gehalt beträgt 17,3 %, die Viskosität 3.050 mPa.s (23 °C).

8 Teile des so erhaltenen Polyisocyanats werden mit 2 Teilen Propylenglykoldiacetat verdünnt. Man erhält eine 80%ige Lösung mit einem NCO-Gehalt von 12,6 % und einer Viskosität von 510 mPa.s.

**Polyisocyanat PI - 2**

87 g eines durch Trimerisierung eines Teils der Isocyanatgruppen von 1,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,4 %, einen Gehalt an monomerem 1,6-Diisocyanatohexan < 0,3 % und eine Viskosität von 3 000 mPa.s (23 °C) aufweist (NCO-Funktionalität ca. 4,0), wird mit 13 g eines auf 2-(2-Methoxyethoxy)ethanol gestarteten Polyethers auf Basis von Ethylenoxid mit einem Zahlenmittel des Molgewichts von 350 g/mol und einer Hydroxylzahl von 160 mg KOH/g umgesetzt (6 h bei 60°C).

| | |
|---|---|
| NCO-Gehalt | 17,2 % |
| Viskosität (23 °C) | 3200 mPa.s |
| NCO-Funktionalität | ca. 3,5 |

**Polyisocyanat PI - 3**

85 g eines im wesentlichen aus Tris(6-isocyanatohexyl)-isocyanurat bestehenden Polyisocyanats mit einem NCO-Gehalt von 22,5 % und einer Viskosität von 800 mPa.s wird mit 15 g des in PI-2 eingesetzten Polyethers umgesetzt.

| | |
|---|---|
| NCO-Gehalt | 16,9 % |
| Viskosität (23 °C) | 1560 mPa.s |
| NCO-Funktionalität | ca. 3,2. |

**Polyisocyanat PI - 4**

83 g eines durch Trimerisierung eines Teils der Isocyanatgruppen von 1,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,4 %, einen Gehalt an monomerem 1,6-Diisocyanatohexan < 0,3 % und eine Viskosität von 3 000 mPa.s (23 °C) aufweist (NCO-Funktionalität ca. 4,0), werden mit 17 g eines auf 2-(2-Methoxyethoxy)ethanol gestarteten Polyethers auf Basis von Ethylenoxid mit einem Zahlenmittel des Molgewichts von 350 g/mol und einer Hydroxylzahl von 160 mg KOH/g und 1 g Diethylaminoethanol 6 h bei 60°C umgesetzt. Das Produkt wird als 80 %ige Lösung in 1,2-Propylenglykoldiacetat oder in Substanz eingesetzt.

| | |
|---|---|
| NCO-Gehalt | 14,9 % |
| Viskosität (23 °C) | 5800 mPa.s |
| NCO-Funktionalität | ca. 3,2. |
| 80°%ige Lösung | 500 mPa.s bei 23 °C |

**Die Herstellung der Stärke-Zubereitung (NP)**

erfolgte durch kontinuierliches oder diskontinuierliches Kochen und Abbauen einer nativen Stärke unter bekannten Bedingungen, z.B. bei 130°C oder bei ≤95°C (mit Enzymen z.B.). Danach wird auf eine Konzentration von 5 % verdünnt

In einem separaten Arbeitsbehälter wird durch Mischen der Polyisocyanate, der synthetischen Präpolymeren und dieser Stärkelösung die gewünschte Dispersion hergestellt.

**Herstellung des Polysiloxan-Pfropfcopolymers SP - 1**

(gemäß Beispiel 1 der EP 407 799)

**A)** In einem 6 Liter fassenden, mit einem intensiv wirkenden, mit zwei 10 mm-Dissolverscheiben ausgerüsteten Dispergiergefäß werden 1550 g Octamethyl-cyclotetrasiloxan vorgelegt. Unter Rühren bei 1000 U/min. werden zunächst 180 g Mercaptopropyl-methyldimethoxysilan und dann 38 g Dodecylbenzolsulfonsäure zugegeben. Nach 5 Minuten Rühren entsteht ein homogenes Gemisch. Es werden dann unter Rühren im Laufe von 20 Minuten 2300

g entionisiertes Wasser zudosiert und 1 Stunde bei Raumtemperatur nachgerührt. Die entstandene Emulsion wird dann mit Hilfe einer Dispergiermaschine bei 200 bar 12 Minuten homogenisiert. Die Emulsion wird dann in einen 4 Liter fassenden, mit einem Butterflyrührer ausgerüsteten Sulfierbecher umgefüllt und unter Rühren mit 170 U/Min. 2,5 Stunden auf 85°C erwärmt. Nach dem Abkühlen auf Raumtemperatur wird der Latex durch Zugabe von 23,9 g 5n NaOH auf einen pH-Wert von 9,25 eingestellt. Es wird eine milchig weiße Emulsion mit einem Festgehalt von 38,1 Gew.-% erhalten. Dies entspricht einem Polymerumsatz von ca. 90 Gew.-%.

Teilchengröße (Laserstreulichtmethode): 200 nm
geringe Verteilungsbreite (K2-Wert): 0,034
Gelgehalt: ca. 48,5 Gew.-%
Gehalt an Na-Dodecylbenzolsulfonat als Emulgator: 1 Gew.-%.

**B)** In einem 2 Liter fassenden, mit einem Flügelrührer ausgerüsteten Rührgefäß werden 485 g des Polysiloxan-Latex gemäß A) vorgelegt. Unter Rühren bei 200 U/min. werden 233 g entionisiertes Wasser zugegeben und mit Stickstoff gespült. Es wird unter Rühren im Laufe einer Stunde eine Lösung von 1,8 g Azobisisobutyronitril in 180 g Styrol zugetropft. Das Gemisch wird 18 Stunden bei Raumtemperatur gerührt und dann in stündlichen Abständen die Temperatur auf 60, 70 und 80°C erhöht. Zum Schluß wird der Latex 4 Stunden auf 90°C erhitzt und unter Rühren abgekühlt. Es wird ein viskoser Latex erhalten.

pH-Wert: 5,7
Festgehalt: 40,9 Gew.-%

**Herstellung des synthetischen Polymers SP - 1.2**

(gemäß Beispiel 2 der EP 407 799)

1635 g eines wie in Beispiel SP-1.1, Teil A) hergestellten Polysiloxan-Latex mit einem Festgehalt von 37,7 % werden in einem 4 Liter fassenden, mit einem Flügelrührer ausgerüsteten Rührgefäß vorgelegt. Der Latex enthält 600 g Polyorganosiloxan mit einem Mercaptogruppengehalt von ca. 2 % und 16,2 g Na-dodecylbenzolsulfonat als Emulgator. Nach dem Verdünnen mit 641 g Wasser wird unter Rühren unter Stickstoff im Laufe einer Stunde ein Gemisch von 4 g Azo-bisisobutyronitril, 400 g Styrol und 20 g Methacrylsäure zugetropft. Das Gemisch wird 18 Stunden bei Raumtemperatur gerührt und dann in stündlichen Abständen die Temperatur auf 60, 70 und 80°C erhöht. Zum Schluß wird der Latex 4 Stunden auf 90°C erhitzt und unter Rühren abgekühlt. Es wird ein mittelviskoser Latex erhalten.

pH-Wert: 5,4
Festgehalt: 39,5 Gew.-%.

**Herstellung des synthetischen Polymeren SP 2.1**

In einem 4-1-Dreihalskolben mit Rühr-, Kühl- und Heizvorrichtung werden 486 g Dimethyldiglykol vorgelegt und auf 130 °C erwärmt. In 3 Stunden wird eine Mischung aus 500 g Maleinsäureanhydrid, 400 g Styrol, 900 g Methylmethacrylat und 200 g n-Butylacrylat und parallel dazu in 4 Stunden 71 g tert.-Butylperoctoat (70 % in Kohlenwasserstoffgemisch) zudosiert. Nach 1 Stunde Rühren werden 5,6 g tert.-Butylperoctoat zugegeben und nochmals 2 Stunden gerührt. Anschließend werden 1200 g ®Ocenol 110/130 (ungesättigter Fettalkohol, Fa. Henkel) zugesetzt und die Reaktionsmischung 6 Stunden bei 135 °C gehalten. 3700 g dieser Harzschmelze werden in einem auf 45 °C erwärmten Wasser/Ammoniak-Gemisch dispergiert und 6 h bei 60 °C gerührt. Die wäßrige Harzdispersion wird dann noch mit 48 g Hautverhinderungsmittel ®Ascinin R conz (Bayer AG) versetzt und filtriert.

Die wäßrige Harzdispersion hat einen Festgehalt von 43,5 % und einen pH-Wert von 6,2. Das 100%ige Harz weist einen Gehalt an Struktureinheiten -O-R von 36 Gew.-% und einen Gehalt an freien und neutralisierten Carboxylgruppen von insgesamt 220 Milliäquivalenten pro 100 g Feststoff, wobei der Neutralisationsgrad bei 20 % liegt.

**Herstellung des synthetischen Polymeren SP - 2.2**

In einem 4-1-Dreihalskolben mit Rühr-, Kühl- und Heizvorrichtung wird in Xylol bei 130 °C eine Mischung aus 500 g Maleinsäureanhydrid, 400 g Styrol, 1100 g Methylmethacrylat in Gegenwart von 114 g tert.-Butylperoctoat (70 % in Kohlenwasserstoffgemisch) polymerisiert. Nach 1 Stunde bei 130°C werden nochmals 5,6 g tert.-Butylperoctoat zugegeben, 2 Stunden gerührt, 1200 g Ocenol 110/130 (Fa. Henkel) zugegeben und weitere 6 Stunden bei 135 °C gerührt. Dann werden 27,5 g Ethanol zugegeben und 1 Stunde bei 120°C gehalten. Dann werden 341 g Glycidester

der Versaticsäure (®Cardura E 10, Shell Chemie) und 3,6 g Triethylbenzylammoniumchlorid sowie 5 %, bezogen auf Festharz, an Methoxypropanol zugegeben. Anschließend wird bei 90 °C gerührt, bis die Gesamtsäurezahl konstant ist.

Die so erhaltene Harzschmelze wird in eine auf 50 °C erwärmte, wäßrige $NH_3$-Lösung eingerührt. Nach 4 Stunden Rühren bei 60 °C werden 54 g Butanonoxim zugesetzt und filtriert Dann wird das Lösungsmittel im Vakuum abdestilliert.

Die wäßrige Harzdispersion hat einen Festgehalt von 38,0 % und einen pH-Wert von 6,5. Das 100%ige Harz weist einen Gehalt an Struktureinheiten -O-R von 34 Gew.-% und einen Gehalt an freien und neutralisierten Carboxylgruppen von insgesamt 141 Milliäquivalenten pro 100 g Feststoff auf, wobei der Neutralisationsgrad bei 32 % liegt.

**Herstellung der kationischen, hydroxylgruppenhaltigen Vinylpolymer-Dispersionen SP -3.1 bis SP -3.5**

In einem 1 Liter Rührkolben mit einem gut wirkenden Rührer, Gaseinlaß und Gasauslaß wird die Vorlage I (vgl. Tabelle 1) vorgelegt und sorgfältig mit Stickstoff gespült. Anschließend wird Stickstoff übergeleitet und auf eine Innentemperatur von 70°C erwärmt. Danach werden die Mischungen II und III (vgl. Tabelle 1) gleichzeitig und gleichmäßig in 2 Stunden zur Vorlage I zudosiert. Anschließend wird 1 Stunde nachgerührt und danach mit der Nachaktivatorlösung IV versetzt. Dann wird 3 Stunden nachgerührt. Anschließend werden ca. 100 ml Wasser und Restmonomere im Wasserstrahlvakuum von ca. 200 bis 400 mbar abdestilliert. Danach wird abgekühlt und filtriert.

Die physikalisch-chemischen Kenndaten der wäßrigen Dispersionen sind ebenfalls in Tabelle 1 angegeben.

Tabelle 1

| | **SP-3.1** | **SP-3.2** | **SP-3.3** | **SP-3.4** | **SP-3.5** |
|---|---|---|---|---|---|
| **I. Vorlage** | | | | | |
| Emulgator Dehyquart A 1) (25%ig) | 16 g | 48 g | 48 g | 48 g | 48 g |
| entionisiertes Wasser | 453 g | 429 g | 429 g | 429 g | 429 g |
| | | | | | |
| **II. Monomermischung** | | | | | |
| Acrylnitril | 86,5 g | 82,5 g | 58,3 | 43,8 g | 35 g |
| n-Butylacrylat | 86, 5g | 82,5 g | 116,7 g | 131,3 g | 140 g |
| Hydroxypropylmethacrylat | 17 g | 17 g | 17 g | 17 g | 17 g |
| Polyether LB 25 2) | 5,4 g | 5,4 g | 5,4 g | 5,4 g | 5,4 g |
| Emulgator L 10 3) | 0,6 g | 0,6 g | 0,6 g | 0,6 g | 0,6 g |
| | | | | | |
| **III. Initiatorlösung** | | | | | |
| Wasserstoffperoxid 35 %ig | 4 g | 4 g | 4 g | 4 g | 4 g |
| entionisiertes Wasser | 120 g | 120 g | 120 g | 120 g | 120 g |
| | | | | | |
| **IV. Nachaktivatorlösung** | | | | | |
| Wasserstoffperoxid 35%ig | 1 g | 1 g | 1 g | 1 g | 1 g |
| entionisiertes Wasser | 10 g | 10 g | 10 g | 10 g | 10 g |
| | | | | | |
| Konzentration [Gew.-%] | 22,4 | 21,2 | 21.8 | 23,5 | 25,4 |
| pH-Wert | 6,2 | 6,0 | 6,3 | 5,8 | 5,0 |
| Viskosität bei 22°C [mPas] | < 100 | < 100 | < 100 | < 100 | < 100 |

1) Cetyl-trimethyl-ammoniumchlorid
2) Mischpolyether aus Ethylenoxid /Propylenoxid, Mn = 2250 g/mol
3) nichtion. Emulgator aus Laurylalkohol + 10 mol Ethylenoxid

Tabelle 1 (fortgesetzt)

| | SP-3.1 | SP-3.2 | SP-3.3 | SP-3.4 | SP-3.5 |
|---|---|---|---|---|---|
| **IV. Nachaktivatorlösung** | | | | | |
| mittlere Teichengröße [nm], Laserkorrelations-Spektroskopie | 85 | 63 | nicht gemessen | nicht gemessen | nicht gemessen |

**Herstellung der kationischen, hydroxylgruppenhaltigen Vinylpolymer-Dispersionen SP -3.6 bis SP -3.9**

In einem 1 Liter Rührkolben mit einem gut wirkenden Rührer, Gaseinlaß und Gasauslaß wird die Vorlage I (vgl. Tabelle 2) vorgelegt und sorgfältig mit Stickstoff gespült. Anschließend wird Stickstoff übergeleitet und auf eine Innentemperatur von 70°C erwärmt. Danach werden die Mischungen II und III (vgl. Tabelle 2) gleichzeitig und gleichmäßig in 2 Stunden zur Vorlage I zudosiert. Anschließend wird 1 Stunde nachgerührt und danach mit der Nachaktivatorlösung IV versetzt. Dann wird 3 Stunden nachgerührt. Anschließend werden ca. 100 ml Wasser und Restmonomere im Wasserstrahlvakuum von ca. 200 bis 400 mbar abdestilliert. Danach wird abgekühlt und filtriert.

Die physikalisch-chemischen Kenndaten der wäßrigen Dispersionen sind ebenfalls in Tabelle 2 angegeben.

Tabelle 2

| | SP-3.6 | SP-3.7 | SP-3.8 | SP-3.9 |
|---|---|---|---|---|
| **I. Vorlage** | | | | |
| Emulgator Dehyquart A 1) (25%ig) | 48 g | 48 g | 48 g | 48 g |
| entionisiertes Wasser | 429 g | 429 g | 429 g | 429 g |
| | | | | |
| **II. Monomermischung** | | | | |
| Styrol | 77,1 g | 60,1 g | ----- | ----- |
| Methylmethacrylat | ----- | ----- | 77,1 g | 60,1 g |
| n-Butylacrylat | 77,1 g | 60,1 g | 77,1 g | 60,1 g |
| Hydroxypropylmethacrylat | 33,9 g | 67,8 g | 33,9 g | 67,8 g |
| Polyether LB 25 2) | 5,4 g | 5,4 g | 5,4 g | 5,4 g |
| Emulgator L 10 3) | 0,6 g | 0,6 g | 0,6 g | 0,6 g |
| | | | | |
| **III. Initiatorlösung** | | | | |
| Wasserstoffperoxid 35 %ig | 5 g | 5 g | 5 g | 5 g |
| entionisiertes Wasser | 120 g | 120 g | 120 g | 120 g |
| | | | | |
| **IV. Nachaktivatorlösung** | | | | |
| Wasserstoffperoxid 35%ig | 2 g | 2 g | 2 g | 2 g |
| entionisiertes Wasser | 10 g | 10 g | 10 g | 10 g |
| | | | | |
| Konzentration [Gew.-%] | 28,8 | 27,6 | 28,7 | 26,0 |
| pH-Wert | 4,6 | 4,6 | 4,7 | 4.6 |
| Viskosität bei 22°C [mPas] | < 100 | < 100 | < 100 | < 100 |
| mittlere Teichengröße [nm], Laserkorrelations-Spektroskopie | 51 | 70 | 80 | 228 |

1) Cetyl-trimethyl-ammoniumchlorid
2) Mischpolyether aus Ethylenoxid /Propylenoxid,Mn = 2250 g/mol
3) nichtion. Emulgator aus Laurylalkohol + 10 mol Ethylenoxid

**Anwendungsbeispiele/Oberflächeneinsatz**

Die Leimungswirkung der erfindungsgemäßen Dispersionen wurde auf füllstofffreiem und auch gefülltem Papier geprüft.

Papier-Grundrezept

50 Teile Birkensulfat-Zellstoff
50 Teile Kiefersulfat-Zellstoff, Mahlgrad. 35-45° SR
0,2 % Retentionsmittel auf Polyamidamin-Basis (z.B. 25 %iges Retaminol C01)

Bei Bedarf 30 % Füllstoff-Einsatz, Flächengewicht 75 bis 80 g/m$^2$.

| | |
|---|---|
| Papier 1 | 50 % Nadelholzzellstoff, 50 % Laubholzzellstoff, pH-Wert im Stoffauflauf: 7,2; Mahlgrad: 35° SR; Naßaufnahme in einer Laborleimpresse: ca. 80 Gew.-%; Flächengewicht: 80 g/m$^2$. |
| Papier 2 | wie Papier 1, jedoch mit 30 % Vorlage an Titandioxid, Aschegehalt: 19,3 % |
| Papier 3 | wie Papier 1, jedoch mit 30 % Vorlage an China Clay, Aschegehalt. 16,7 % |
| Papier 4 | wie Papier 1, jedoch mit 30 % Vorlage an Kreide, Aschegehalt: 16,8 % |
| Papier 5 | wie Papier 3, jedoch mit 10 % Vorlage von China Clay, Aschegehalt: 7 % |
| Papier 6 | wie Papier 3, jedoch mit 40 % Vorlage von China Clay, Aschegehalt: 23 % |

Die Leimung der Papiere erfolgte auf einer Laborleimpresse der Firma Mathis. Zürich, Schweiz, Type HF Als Leimungsflotte wurde eine Dispersion aus y Teilen handelsüblicher Stärke sowie x Teilen - berechnet als Wirksubstanz - des Polyisocyanats PI und z Teilen des synthetischen Polymers verwendet, die mit Wasser bis auf 100 Teile erganzt wurde Die Trocknung der oberflächengeleimten Papiere erfolgte auf einem Trockenzylinder innerhalb einer Minute bei ca. 100 °C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53 132) bestimmt sowie Tintenschwimmproben (TSP) durchgeführt. Für die Tintenschwimmproben wurden die Papiere in Streifen von 3 cm Breite und 3 cm Länge geschnitten und bei 22 °C auf blaue Prüftinte (DIN 53 126) gelegt. Nach für die einzelnen Papiersorten unterschiedlichen Prüfzeiten wurden die Probenpapiere von der Tinte genommen, rückseitig auf Löschpapier abgequetscht und nach 5 Minuten visuell beurteilt. Zur qualitativen Bestimmung der Tintendurchdringung durch das Papier und somit des Leimungsgrades wurde eine Bewertung mit den Zahlen l bis 5 durchgeführt, wobei die Zahlen im einzelnen bedeuten:

| | |
|---|---|
| 1 | kein Tintendurchschlag |
| 2 | 5 bis 10 % Tintendurchschlag |
| 3 | 10 bis 20 % Tintendurchschlag |
| 4 | ca. 50 % Tintendurchschlag |
| 4,5*) | ca. 90 % Tintendurchschlag |
| 5 | 100 % Tintendurchschlag |

*) Außerdem können noch weitere Zwischenwerte herangezogen werden.

Die folgenden Tabellen zeigen die Wirksamkeit der erfindungsgemäßen Dispersionen am Beispiel der Leimungseffekte bzw. Naßfesteffekte auf verschiedenen Papiersorten (Rohpapier).

Beim Tropfentest wird folgendermaßen vorgegangen:
Auf die Oberfläche des ausgerüsteten Papiers wird bei Raumtemperatur jeweils ein Tropfen (0.05 ml) Wasser aufgesetzt. Gemessen wird die Zeit bis zum vollständigen zerschlagen des Tropfens bis max. 180 Minuten.

Die Bestimmung der Trocken-und Naßbruchlast erfolgte nach den üblichen DIN-Normen.

In den folgenden Beispielen beziehen sich die Teile der eingesetzten Produkte auf Teile Wirksubstanz in 100 Teilen Flotte.

**Beispiele 1 und 2:** Veredlung von Papier 1

| Oberflächenauftrag auf der Leimpresse: Naßaufnahme ca. 80 % | | | | | |
|---|---|---|---|---|---|
| Beispiel | Polyisocyanat* x Tle/ 100 Tle | Stärke* y Tle/100 Tle | Synthet. Polymer* z Tle/100 Tle Flotte | $Cobb_{60}$-Wert [g/$m^2$] | TSP |
| 1 | 0,5 Tle PI-4 | - | 0,2 SP-1.2 | 15 | 1 |
| 2 | 0,5 Tle PI-1 | - | 0.2 SP-1.2 | 19 | 1 |
| Vergleich | 1,0 PI-4 | - | - | 75 | 5 |
| " | 1,0 PI-1 | - | - | 74 | 5 |
| " | - | - | 0,4 SP-1.2 | 69 | 4,5 |
| " | - | 1,0 Stärke | - | 77 | 5 |
| " | | 0,5 Stärke | 0.5 SP-1.2 | 72 | 5 |
| " | 0,5 PI-4 | 0,5 Stärke | - | 75 | 5 |
| " | 0,5 PI-1 | 0,5 Stärke | - | 81 | 5 |

* Angaben in Teilen Wirksubstanz in 100 Teilen der resultierenden Flotte

Als Stärke diente eine native Maisstärke.

**Beispiele 3-8:** Veredlung von Papier 1

| Oberflächenauftrag mittels Leimpresse | | | | | |
|---|---|---|---|---|---|
| Beispiel Nr. | Polyisocyanat PI - 4 x Teile | natürliches Polymer NP y Teile | Polysiloxan-Pfropfcopolymer SP-1.2 z Teile | $Cobb_{60}$-Wert [g/$m^2$] | Tropfentest [Minuten] |
| 3 | 0,72 | - | 0,04 | 22,0 | - |
| 4 | 0,64 | - | 0,08 | 15,8 | - |
| 5 | 0,48 | - | 0,16 | 13,8 | - |
| 6 | 0,32 | - | 0,24 | 13,8 | - |
| 7 | 0,16 | - | 0,32 | 14,5 | - |
| 8 | 0,08 | - | 0.36 | 16,1 | - |

**Beispiel 9** Behandlung von gefüllten Papieren Oberflächenauftrag der Dispersionen aus PI - 4 und SP - 1.2

Einsatz: 0,4 Teile PI - 4 + 0,2 Teile SP - 1.2 (Wirksubstanz) pro 100 Teile Flotte.

In der folgenden Tabelle sind die Cobb-Werte von nicht behandelten (1. Spalte) und bei 110°C kondensierten Prüfblättern (2. Spalte) dargestellt.

| Rohpapier Füllstoff | Papier 1 Ohne (66 % Naßaufn.) | | Papier 2 Titandioxid (70 % Naßaufn.) 19,3 %Asche | | Papier 3 China Clay (68 % Naßaufn.) 16,7 % Asche | | Papier 4 Kreide (68 % Naßaufn.) 16,8 % Asche | |
|---|---|---|---|---|---|---|---|---|
| Beispiel | 9 a | | 9 b | | 9 c | | 9 d | |
| Cobb 60 | nicht beh. | 10min 110°C | nicht beh. | 10min 110°C | nicht beh. | 10min. 110°C | nicht beh. | 10min. 110°C |
| nach 2 h. | 23,4 | 16,6 | 82,6 | 83,6 | 77,6 | 68,6 | 50,8 | 25,4 |
| nach 4 h | 19,1 | 15,7 | 77,3 | 79 | 67,9 | 60 | 47,7 | 23,3 |
| nach 24 h | 15,9 | 14,8 | 86 | 79 | 65 | 66,5 | 37,5 | 26,1 |
| nach 48 h | 13,6 | 12,4 | 74,5 | 65 | 49 | 60 | 29,2 | 18,8 |
| nach 3 Tagen | 15 | 13,4 | 69,5 | 72,6 | 58,5 | 57 | 31,6 | 23,6 |
| nach 6 Tagen | 15,4 | 12,6 | 69 | 61 | 56,5 | 57 | 31,9 | 20,9 |

Dieses Beispiel zeigt, daß China Clav und Titandioxid die Leimung verschlechtern, während man bei kreidehaltigem Papier ähnlich gute Leimungseffekte erzielt wie bei ungefülltem Papier.

**Beispiel 10**

Auf Papier 1 erhält man bei Oberflächeneinsatz von einer Flotte, die 5 Teile handelsübliche Kartoffelstärke (Fa. Avebe) Perfectamyl A 4692 und 0,1 Teile Wirkstoff eines handelsüblichen kationischen Polymerleimungsmittels (Baysynthol KSN) enthält, einen $Cobb_{60}$-Wert von 20 $g/m^2$ bei einer Naßaufnahme von 70 %. Bei einem Einsatz von einer Flotte mit

5 Teilen Stärke Perfectamyl A 4692,
0,2 Teilen Polyisocyanat PI - 4 und
0,1 Teilen des synthetischen Polymers SP-1.2

erhält man bei gleicher Naßaufnahme einen $Cobb_{60}$-Wert von 15 g/m$^2$.

Um diesen Cobb-Wert allein mit einem Polymer-Leimungsmittel (Baysynthol KSN) zu erzielen, benötigt man 0,4 Teile Baysynthol KSN (Wirksubstanz).

**Beispiel 11**

Verwendet man analog Beispiel 10 eine Maisstärke-Flotte aus

5 Teilen oxidativ abgebauter Maisstärke (Fa. Cerestar),
0,10 Teilen Polyisocyanat PI - 4 und
0,06 Teilen des synthetischen Polymers SP - 1.2

erhält man einen $Cobb_{60}$-Wert von 14 g/m$^2$. Dieser Effekt wird erst bei einem Einsatz von 0,25 % Wirksubstanz Baysynthol KSN erreicht.

**Beispiele 12 und 13** Veredlung von Papier 1

| Oberflächenauftrag auf der Leimpresse: Naßaufnahme ca. 80 % | | | | | |
|---|---|---|---|---|---|
| Beispiel | Polyisocyanat* x Tle/ 100 Tle | Stärke* y Tle/100 Tle | Synthet. Polymer* z Tle/100 Tle Flotte | $Cobb_{60}$-Wert [g/m$^2$] | TSP |
| 12 | 0,5 PI-4 | - | 0,19 SP-2 | 16 | 1 |
| 13 | 0,5 PI-1 | - | 0,19 SP-2 | 18 | 1 |
| Vergleich | 1,0 PI-4 | - | - | 75 | 5 |
| " | 1,0 PI-1 | - | - | 74 | 5 |
| " | - | - | 0,38 SP-2 | 60 | 4,5 |
| " | - | 1,0 Stärke | - | 77 | 5 |
| " | | 0,5 Stärke | 0,5 SP-2 | 75 | 5 |
| " | 0,5 PI-4 | 0,5 Stärke | - | 75 | 5 |
| " | 0,5 PI-1 | 0,5 Stärke | - | 81 | 5 |

* Angaben in Teilen Wirksubstanz in 100 Teilen der resultierenden Flotte

Als Stärke diente eine native Maisstärke.

**Beispiele 14-24:** Veredlung von Papier 1

Als natürliches Polymer diente eine abgebaute Kartoffelstärke.

| Oberflächenauftrag | | | | | |
|---|---|---|---|---|---|
| Beispiel Nr. | Polyisocyanat PI - 4 x Teile | natürliches Polymer NP y Teile | synthetisches Polymer SP-2.2 z Teile | $Cobb_{60}$-Wert [g/ m$^2$] | Tropfentest [Minuten] |
| 14 | 0,72 | - | 0,038 | 22,6 | - |
| 15 | 0,64 | - | 0,076 | 19,9 | - |
| 16 | 0,48 | - | 0,152 | 14,0 | - |
| 17 | 0,32 | - | 0,228 | 14,2 | - |
| 18 | 0,16 | - | 0,304 | 16,0 | - |
| 19 | 0,08 | - | 0,342 | 18,3 | - |

(fortgesetzt)

| Oberflächenauftrag | | | | | |
|---|---|---|---|---|---|
| Beispiel Nr. | Polyisocyanat PI - 4 x Teile | natürliches Polymer NP y Teile | synthetisches Polymer SP-2.2 z Teile | $Cobb_{60}$-Wert [g/ $m^2$] | Tropfentest [Minuten] |
| 20 | 0,05 | 5 bzw. 2,5 | - | - | 12 bzw. 5 |
| 21 | 0,1 | 5 bzw. 2,5 | - | - | 34 bzw. 9 |
| 22 | 0,2 | 5 bzw. 2,5 | - | - | 38 bzw. 15 |
| 23 | 0,4 | 5 bzw. 2,5 | - | - | 17 bzw. 13 |
| 24 | 0,8 | 5 bzw. 2,5 | - | - | 8 bzw. 7 |
| Vergleich (Polyamidamin-Epichlorhydrin-Harz) + 5 Tle. NP | | | | | 4 |

**Beispiel 25** Behandlung von gefüllten Papieren Oberflächenauftrag der Dispersionen aus P 1-4 und SP-2.2

Das folgende Beispiel zeigt, daß China Clay die Leimung verschlechtert, Kreide aber wesentlich günstiger ist als China Clay, insbesondere bei einem Verhältnis von 0,4 Teilen PI - 4 zu 0,19 Teilen SP - 2.2.

Einsatz in der Flotte: 0.4 Teile PI - 4 + 0.19 Teile SP - 2.2 (Wirksubstanz)

In der Tabelle sind die Cobb-Werte von nicht behandelten (1. Spalte) und bei 110°C kondensierten Prüfblättern (2. Spalte) dargestellt.

| Rohpapier Füllstoff | Papier 1 Ohne (66 % Naßaufn.) | | Papier 2 Titandioxid (70 % Naßaufn.) 19,3 %Asche | | Papier 3 China Clay (68 % Naßaufn.) 16,7 % Asche | | Papier 4 Kreide (68 % Naßaufn.) 16,8 % Asche | |
|---|---|---|---|---|---|---|---|---|
| Beispiel | 25 a | | 25 b | | 25 c | | 25 d | |
| Cobb 60 | nicht beh. | 10min 110°C | nicht beh. | 10min 110°C | nicht beh. | 10min. 110°C | nicht beh. | 10min. 110°C |
| nach 2 h. | 19,3 | 16,8 | 84,6 | 81,5 | 75 | 62,5 | 46,5 | 18,8 |
| nach 4 h | 17,9 | 17 | 84,3 | 80,5 | 68,5 | 61 | 36 | 17,5 |
| nach 24 h | 15,7 | 14,3 | 82,3 | 75 | 66,5 | 59 | 21,8 | 16,7 |
| nach 48 h | 13 | 11,3 | 61 | 58 | 52 | 53 | 14,6 | 11,9 |
| nach 3 Tagen | 13,5 | 13,2 | 72,5 | 69 | 55,5 | 51 | 15,7 | 12,3 |
| nach 6 Tagen | 13,2 | 13,8 | 59,5 | 69 | 57,5 | 57,6 | 15,4 | 13,4 |

Das Beispiel zeigt, daß man bei kreidehaltigem Papier ähnlich gute Leimungseffekte erzielt wie bei ungefülltem Papier.

**Beispiel 26**

Auf Papier 1 erhält man bei Oberflächeneinsatz von einer Flotte, die 5 Teile handelsübliche Kartoffelstärke (Fa. Avebe) Perfectamyl A 4692 und 0,1 Teile Wirkstoff eines handelsüblichen kationischen Polymerleimungsmittels (Baysynthol KSN) enthält, einen $Cobb_{60}$-Wert von 20 $g/m^2$ bei einer Naßaufnahme von 70 %.
Bei einem Einsatz von einer Flotte mit

5 Teilen Stärke Perfectamyl A 4692,
0,20 Teilen Polyisocyanat PI - 4 und
0,11 Teilen des synthetischen Polymers SP-2.2

erhält man einen $Cobb_{60}$-Wert von 13 $g/m^2$.
Um diesen Cobb-Wert mit einem üblichen Polymer-Leimungsmittel (Baysynthol KSN) zu erzielen, benötigt man 0,4 Teile Baysynthol KSN (Wirksubstanz).

**Beispiel 27**

Verwendet man analog Beispiel 26 eine Maisstärke-Flotte aus

5 Teilen oxidativ abgebaute Maisstärke,
0,10 Teilen Polyisocyanat PI - 4 und
0,06 Teilen des synthetischen Polymers SP - 2.2,

erhält man einen $Cobb_{60}$-Wert von 17 $g/m^2$, dieser Effekt wird erst bei einem Einsatz von 0,25 % Wirksubstanz Baysynthol KSN erreicht.

**Beispiel 28**

Auch im füllstoffhaltigen Papier 4 mit einem Aschegehalt von 16,8 % Kreide wird bei einer Naßaufnahme von 68 % mit einer Flotte aus

5 Teilen Stärke Perfectamyl A 4692,
0,20 Teilen Polyisocyanat PI - 4 und
0,11 Teilen des synthetischen Polymers SP- 2.2

ein $Cobb_{60}$-Wert von 21 $g/m^2$ erreicht, während kationische und anionische polymere Leimungsmittel nur $Cobb_{60}$-Werte $\geq$30 bzw. $\geq$80 $g/m^2$ ergaben.

**Beispiel 29**

Durch Einsatz von oxidativ abgebauter Maisstärke an Stelle von Perfectamyl A 4692 wurden analog Beispiel 28 bei gleichem Einsatz (Naßaufnahme 66 %) sogar Cobb-Werte < 16 $g/m^2$ erzielt, während die polymeren Leimungsmittel des Stands der Technik keine ausreichende Leimung zeigten (Cobb-Werte).

**Beispiel 30**

Ein Papier 3 mit 16,7 % China Clay wurde analog Beispiel 28 behandelt (Naßaufnahme = 68 %) und ergab bei gleicher Flottenzusammensetzung Cobb-Werte von 30 $g/m^2$ gegenüber 50 $g/m^2$ mit einem handelsüblichen kationischen Polymerleimungsmittel nach dem Stand der Technik.

**Beispiel 31**

Ausrüstung des Papiers analog Beispiel 30 mit der Flotte aus Beispiel 29 ergab einen $Cobb_{60}$-Wert von 20 $g/m^2$.

**Beispiel 32** Oberflächenbehandlung der Papiere 5 und 6 mittels Leimpresse

In diesem Beispiel werden verschiedene Dispersionen miteinander verglichen (Einsatz in % bezogen auf die Leimpressenflotte).

| Flotte | | Papier 5 | | | Papier 6 | | |
|---|---|---|---|---|---|---|---|
| Stärke bzw. synthet. Polymer | Polyisocyanat I | Flächengewicht: 70 g/m² | | | Flächengewicht: 90 g/m² | | |
| | | 10 % Clay, 7 % Asche | | | 40 % Clay, 23 % Asche | | |
| | | Naßaufnahme 95 % | | | Naßaufnahme 90 % | | |
| | | Tropfentest | Bruchlast [N] | | Tropfentest | Bruchlast [N] | |
| | | [min:s] | trocken | naß | [min:s] | trocken | naß |
| * 5,0 % Cerestar Maisstärke | 0,25 % PI-4 | > 15:00 | 49,5 | 5,1 | 06:13 | 51,8 | 4,6 |
| Vergleich 5,0 % Emsol K85[1)] | - | 00:41 | 53,5 | 0,5 | 02:02 | 46,8 | 0,5 |
| *5,0 % Emsol K85 | 0,25 % PI-1 | 13:12 | 53,5 | 4,2 | 03:58 | 47,2 | 3,3 |
| *5,0 % Emsol K85 | 0,25 % PI-4 | 12:10 | 47,3 | 4,4 | 03:56 | 46,9 | 3,5 |
| - | 0,25 % PI-1 | 01:00 | 35,3 | 8,6 | 01:36 | 33,2 | 4,2 |
| - | 0,25 % PI-4 | 02:10 | 38,9 | 8,3 | 01:23 | 30,9 | 4,0 |
| *0,07 % SP-2.1 | 0,15 % PI-4 | 02:00 | 36,3 | 4,1 | 01:33 | 31,7 | 2,5 |
| *0,11 % SP-2.1 | 0,25 % PI-4 | 03:28 | 40,2 | 8,7 | 03:15 | 31,3 | 4,0 |
| *0,22 % SP-2,1 | 0,50 % PI-4 | > 15:00 | 42,3 | 11,6 | 06:59 | 24,6 | 6,1 |

* erfindungsgemäße Beispiele
1) wasserlöslicher Hydroxypropylether auf Basis von Kartoffelstärke

**Beispiel 33** Kombination von Polyisocyanat mit verschiedenen Stärketypen

Oberflächenbehandlung von Papier 1, Naßaufnahme 75 %. An Papierstreifen, die 5 Minuten gewässert wurden, wurde die Naßbruchlast gemessen (mittels Zugprüfmaschine):

Ohne Zusatz (Leitungswasser) : 0,5 N, Cobb-Wert > 80, Trockenbruchlast 36 N
0,72 % PI - 2 : 6,3 N
0,72 % PI - 2 + 2 % Cato 110 : 7,2 N
0,72 % PI - 2 + 2 % Amylex KLP 30 : 6,7 N
0,72 % PI - 2 + 2 % Perfectamyl A 4692 : 5,3 N
0,72 % PI - 2 + 2 % Carboxymethylcellulose CMC/T 300: 3,9 N

0,5 % PI - 3 : 7,0 N, Cobb-Wert > 80, Trockenbruchlast 42,3 N
0,5 % PI - 3 + 0,2 % SP-2.2: 6,4 N, Cobb-Wert 22, Trockenbruchlast 39,8 N
0,5 % PI - 3 + 0,2 % SP-2.2 + 2,5 % Perfectamyl A 4692: 5,5 N, Cobb-Wert 21, Trockenbruchlast 47,2 N

**Verwendung als Naßfestmittel für Papier**

Eine Mischung aus 80 % gebleichtem Nadelholzzellstoff und 20 % Laubholzzellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1000 ml verdünnt.

Zu dieser Suspension wird eine 1 %ige kationische Vinylpolymer-Dispersion, die Hydroxylgruppen enthält (Produkte aus den Beispielen SP-3.1 bis SP- 3.9) zugegeben, wobei für jede Komponente die in Tabelle 3 angegebenen Mengen an Wirksubstanz, bezogen auf Faserstoff, eingesetzt werden.

Nach 3 Minuten bei Raumtemperatur wird eine vorgegebene Menge einer 1 %igen Dispersion des Polyisocyanats PI zu der entsprechenden Mischung gegeben. Die Einsatzmenge ist in Tabelle 3 als Gew.-% Wirksubstanz, bezogen auf Faserstoff, angegeben. Die Dispersion des Polyisocyanats wurde jeweils Frisch hergestellt. Als Dispergiermedium wurde Wasser eingesetzt. (Bei Polyisocyanaten, die keine Polyethergruppen enthalten, wird das Polyisocyanat in verdünnter Essigsäure emulgiert).

Nach einer Rührzeit von 3 Minuten werden mit den Inhalten der Bechergläser auf einem Blattbildner (Rapid-Köthen-Gerät) Papierblätter mit einem Flächengewicht von ca. 80 g/m$^2$ gebildet. Die Papierblätter werden 8 Minuten bei 85°C im Vakuum bei 20 mbar getrocknet und anschließend im Trockenschrank noch 10 Minuten bei 110°C nachkondensiert

Aus jedem Papierblatt werden nach der Klimatisierung 5 Prüfstreifen von 1,5 cm Breite ausgeschnitten und 5 Minuten in destilliertes Wasser eingetaucht. Danach werden die nassen Streifen in einer Zugprüfmaschine sofort auf ihre Naßbruchlast geprüft. Die Naßbruchlasten bei der jeweiligen Einsatzkonzentration wurden in den vorliegenden Beispielen jeweils auf die Werte bezogen (Angaben als relative Naßbruchlast in %), die mit dem Polyisocyanat PI-4 ohne weitere Zusätze bei Einsatzmengen von 0,3, 0,6 bzw. 0,9 Gew.-% Wirksubstanz (=100 %) erhalten wurden.

Die Prüfergebnisse sind in Tabelle 3 angegeben. Man erkennt die drastische Erhöhung der Naßfestigkeitswerte durch den Einsatz der erfindungsgemäßen Dispersionen.

**Tabelle 3:** Ergebnisse der Naßfestprüfung [%]

| Einsatzmenge Polyisocyanat PI-4 | SP-3.1 | SP-3.2 | SP-3.3 | SP-3.4 | SP-3.5 |
|---|---|---|---|---|---|
| | Einsatzmenge SP = 1 % | | | | |
| 0,3 % | 85,5 | 111,8 | -- | -- | -- |
| 0,6 % | 80,9 | 132,7 | -- | -- | -- |
| 0,9 % | 83,9 | 111,2 | -- | -- | -- |
| | Einsatzmenge SP = 2 % | | | | |
| 0,3 % | 134,5 | 187,3 | 142,1 | 124,3 | 119,6 |
| 0,6 % | 119,1 | 155,6 | 125,0 | 117,3 | 113,5 |
| 0,9 % | 128,3 | 128,8 | 107,1 | 106,6 | 104,0 |
| | Einsatzmenge SP = 4 % | | | | |
| 0,3 % | 163,6 | 200,9 | 190,7 | 181,3 | 197,2 |
| 0,6 % | 142,6 | 166,7 | 148,1 | 148,1 | 153,8 |
| 0,9 % | 112,7 | 143,9 | 144,9 | 129,3 | 125,3 |

| Einsatzmenge Polyisocyanat PI-4 | SP-3.6 | SP-3.7 | SP-3.8 | SP-3.9 |
|---|---|---|---|---|
| | Einsatzmenge SP = 1 % | | | |
| 0,3 % | 67,6 | 134,6 | 124,1 | 85,5 |
| 0,6 % | 68,0 | 131,4 | 128,5 | 90,2 |
| 0,9 % | 83,8 | 129,8 | 128,8 | 109,9 |
| | Einsatzmenge SP = 2 % | | | |
| 0,3 % | 105,6 | 142,9 | 144,4 | 128,3 |
| 0,6 % | 125,2 | 136,6 | 141,9 | 120,2 |
| 0,9 % | 110,6 | 130,3 | 127,8 | 118,2 |
| | Einsatzmenge SP = 4 % | | | |
| 0,3 % | 164,8 | 154,1 | 157,1 | 130,1 |
| 0,6 % | 145,8 | 143,6 | 135,5 | 131,3 |
| 0,9 % | 125,8 | 131,6 | 136,9 | 121,4 |

## Patentansprüche

1. Mittel enthaltend

   (M) Polyisocyanat (PI) mit (cyclo)aliphatisch gebundenen Isocyanatgruppen und ionischen Gruppen und/oder Polyethergruppen und mindestens ein Mitglied der Gruppen bestehend aus

   (N) natürlichem Polymer (NP) aus der Gruppe der Polysaccharide,

(P) Polysiloxan-Pfropfcopolymer (SP 1),

(Q) wasserverdünnbarem synthetischem Copolymerisat (SP2) von olefinisch ungesättigten Verbindungen mit

a) einem Gehalt an eingebauten, zu 10 bis 100 % neutralisierten COOH-Gruppen von insgesamt 60 bis 250 Milliäquivalenten pro 100 g Feststoff und

b) einem Gehalt an chemisch eingebauten, Teil einer Estergruppe bildenden Resten der Formel -OR von 15 bis 20 Gew.-%, wobei R für einen ein- oder mehrfach olefinisch ungesättigten aliphatischen Kohlenwasserstoffrest mit 12 bis 22 C-Atomen steht, und

(R) Hydroxylgruppenhaltigem Vinylpolymerisat (SP3), welches erhältlich ist durch Polymerisation von Monomermischungen aus

a) mindestens 5 Gew.-% Styrol und/oder $\alpha$-Methylstyrol, Methacrylnitril, Acrylnitril bzw. Gemische dieser Monomeren,

b) mindestens 5 Gew.-% (Meth)Acrylsäureester von monofunktionellen Alkoholen mit 1 bis 12 C-Atomen,

c) 0,1 bis 35 Gew.-% eines oder mehrerer Vinylmonomere der Formel

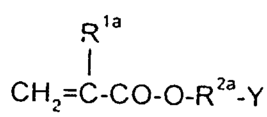

und/oder

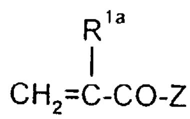

wobei

$R^{1a}$ für ein H-Atom oder eine Methylgruppe,

$R^{2a}$ für einen unverzweigten oder verzweigten Alkylenrest mit 1 bis 18 C-Atomen,

Y für ein H-Atom oder die Gruppen $-OR^{5a}$ und

Z für eine Gruppe -OH oder $-NR^{3a}R^{4a}$ steht, wobei $R^{3a}$, $R^{4a}$ und $R^{5a}$ für Wasserstoff oder einen Alkylrest mit 1 bis 4 C-Atomen stehen und die Summe a) + b) + c) 100 Gew.-% beträgt,

oder

(M) Polyisocyanat (PI) wie oben,

(N) natürliches Polymer (NP) wie oben und mindestens ein Mitglied der Gruppe bestehend aus (P), (Q) und (R) - jeweils wie oben.

**2.** Mittel nach Anspruch 1, wobei das Polyisocyanat (M)

$\alpha$) einen Gehalt an Isocyanatgruppen von 10 - 700 Milliäquivalenten pro 100 g Polyisocyanat,

β) eine mittlere NCO-Funktionalität von ≥ 1,0,

γ) einen Gehalt an Ethylenoxid-Einheiten von 0 bis 30 Gew.-%, bezogen auf Polyisocyanat, wobei die Polyethylenoxidkette ein mittleres Molgewicht (Zahlenmittel) von 100 - 3 500 hat, und

δ) einen Gehalt an tertiären Aminogruppen und/oder Ammoniumgruppen von 50 - 5 000 Milliäquivalenten pro 100 g Polyisocyanat besitzt.

**3.** Mittel nach Anspruch 1, wobei das Polymer (N) aus der Reihe bestehend aus Stärke, Cellulose, Hemicellulose, Chitosane, Xanthane, Agar, Galaktomannane, Carrageenan, Pektin, Alginate, Pflanzengummi und deren Derivaten ausgewählt ist.

**4.** Mittel nach Anspruch 1, wobei die Komponente (P) ein Pfropfcopolymer SP 1 ist aus

a) 40 bis 70 Gew.-% eines Hydroxylgruppen-terminierten Polysiloxans als Pfropfsubstrat enthaltend v Mol-% wiederkehrende Einheiten der Formel

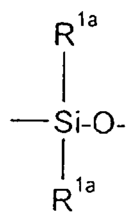

und w Mol-% wiederkehrende Einheiten der Formel

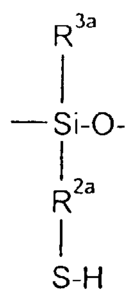

wobei

| | |
|---|---|
| $R^{1a}$ | für Alkylreste mit 1 bis 24 C-Atomen oder Arylreste mit 6 bis 10 C-Atomen, |
| $R^{2a}$ | für unverzweigte oder verzweigte Alkylenreste mit 1 bis 8 C-Atomen und |
| $R^{3a}$ | für Alkylreste mit 1 bis 24 C-Atomen, Arylreste mit 6 bis 10 C-Atomen, Alkoxyreste mit 1 bis 6 C-Atomen oder eine Hydroxygruppe steht oder |
| $R^{2a}$ und $R^{3a}$ | zusammen mit dem Si-Atom einen dreiwertigen 5- oder 6-gliedrigen Ring mit einem unverzweigten oder verzweigten Alkylenrest mit 4 bis 8 C-Atomen bilden und |
| v | 80 bis 99 Mol-% und |
| w | 1 bis 20 Mol-% beträgt, wobei v + w 100 Mol-% ergibt, |

und die bei 25°C gemessene Viskosität des OH-terminierten Polysiloxans zwischen 100 und 100 000 mPa.s

liegt, und

b) 30 bis 60 Gew.-% Pfropfmonomer aus der Reihe bestehend aus Styrol und/oder α-Methylstyrol, (Meth) Acrylsäureester, (Meth)Acrylnitril und Gemischen dieser Monomeren, wobei diese Reihe gegebenenfalls zusätzlich ein oder mehrere Vinylmonomere der Formel

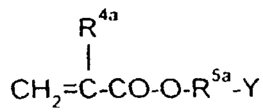

oder

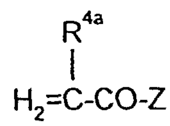

enthält, worin

$R^{4a}$ für ein H-Atom oder eine Methylgruppe,

$R^{5a}$ für eine unverzweigte oder verzweigte Alkylengruppe mit 1 bis 18 C-Atomen,

Y für ein H-Atom oder die Gruppen -OH oder $C_1$-$C_4$-Alkoxy und

Z für eine Gruppe -OH oder $-NR_2^{4a}$ stehen.

**5.** Mittel nach Anspruch 1, wobei die Komponente (Q) ein Copolymerisat SP 2 ist, das durch Polymerisation von olefinisch ungesättigten Dicarbonsäureanhydriden mit anderen ungesättigten Monomeren, wobei Struktur-Einheiten der Formel

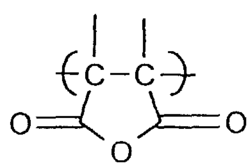

entstehen,

b) anschließende partielle Umsetzung mit einem einwertigen Alkohol R-OH (2 bis 50 %) und

c) Umsetzung der in b) erhaltenen COOH-Gruppen mit einer Epoxidverbindung zu 10 - 95 % und Neutralisation der verbleibenden COOH-Gruppen mit einer Base, erhältlich ist.

**6.** Mittel nach Ansprüchen 1 bis 5 in Form wäßriger Dispersionen.

**7.** Verfahren zur Papierveredelung, dadurch gekennzeichnet, daß man celluloschaltiges Material mit einem Mittel enthaltend

(M) Polyisocyanat (PI) mit ionischen Gruppen und/oder Polyethergruppen und mindestens ein Mitglied der Gruppen bestehend aus

(N) natürlichem Polymer (NP) aus der Gruppe der Polysaccharide,

(P) Polysiloxan -Pfropfcopolymer (SP 1),

(Q) wasserverdünnbarem synthetischem Copolymerisat von olefinisch ungesättigten Verbindungen mit

a)einem Gehalt an eingebauten, zu 10 bis 100 % neutralisierten COOH-Gruppen von insgesamt 60 bis 250 Milliäquivalenten pro 100 g Feststoff und

b) einem Gehalt an chemisch eingebauten, Teil einer Estergruppe bildenden Resten der Formel -OR von 15 bis 20 Gew.-%, wobei R für einen ein- oder mehrfach olefinisch ungesättigten aliphatischen Kohlenwasserstoffrest mit 12 bis 22 C-Atomen steht, und

(R) Hydroxylgrupppenhaltigem Vinylpolymerisat (SP3), welches erhältlich ist durch Polymerisation von Monomermischungen aus

a) mindestens 5 Gew.-% Styrol und/oder α-Methylstyrol, Methacrylnitril, Acrylnitril bzw. Gemische dieser Monomeren,

b) mindestens 5 Gew.-% (Meth)Acrylsäureester von monofunktionellen Alkoholen mit 1 bis 12 C-Atomen,

c) 0,1 bis 35 Gew.-% eines oder mehrerer Vinylmonomere der Formel

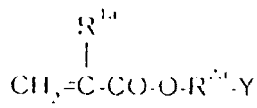

und/oder

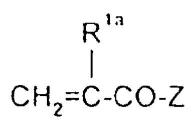

wobei

$R^{1a}$ für ein H-Atom oder eine Methylgruppe,

$R^{2a}$ für einen unverzweigten oder verzweigten Alkylenrest mit 1 bis 18 C-Atomen,

Y für ein H-Atom oder die Gruppen $-OR^{5a}$ und

Z für eine Gruppe -OH oder $-NR^{3a}R^{4a}$ steht, wobei $R^{3a}$, $R^{4a}$ und $R^{5a}$ für Wasserstoff oder einen Alkylrest mit 1 bis 4 C-Atomen stehen und die Summe a) + b) + c) 100 Gew.-% beträgt,

oder

(M) Polyisocyanat (PI) wie oben,

(N) natürliches Polymer (NP) wie oben und mindestens ein Mitglied der Gruppe bestehend aus (P), (Q) und (R) - jeweils wie oben.

behandelt, wobei die einzelnen Komponenten unabhängig voneinander dosiert werden können.

**8.** Verfahren gemäß Anspruch 7, dadurch gekennzeichnet, daß das Mittel enthält:

(M) Polyisocyanat (PI) mit (cyclo)aliphatisch gebundenen Isocyanatgruppen und ionischen Gruppen und/oder Polyethergruppen und mindestens ein Mitglied der Gruppen bestehend aus

(N) natürlichem Polymer (NP) aus der Gruppe der Polysaccharide,

(P) Polysiloxan-Pfropfcopolymer (SP 1),

(Q) wasserverdünnbarem synthetischem Copolymerisat von olefinisch ungesättigten Verbindungen mit

a) einem Gehalt an eingebauten, zu 10 bis 100 % neutralisierten COOH-Gruppen von insgesamt 60 bis 250 Milliäquivalenten pro 100 g Feststoff und

b) einem Gehalt an chemisch eingebauten, Teil einer Estergruppe bildenden Resten der Formel -OR von 15 bis 20 Gew.-%, wobei R für einen ein- oder mehrfach olefinisch ungesättigten aliphatischen Kohlenwasserstoffrest mit 12 bis 22 C-Atomen steht, und

(R) Hydroxylgruppenhaltigem Vinylpolymerisat (SP3), welches erhältlich ist durch Polymerisation von Monomermischungen aus

a) mindestens 5 Gew.-% Styrol und/oder α-Methylstyrol, Methacrylnitril, Acrylnitril bzw. Gemische dieser Monomeren,

b) mindestens 5 Gew.-% (Meth)Acrylsäureester von monofunktionellen Alkoholen mit 1 bis 12 C-Atomen,

c) 0,1 bis 35 Gew.-% eines oder mehrerer Vinylmonomere der Formel

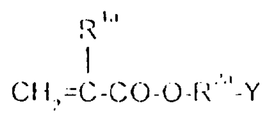

und/oder

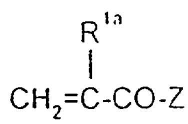

wobei

$R^{1a}$ für ein H-Atom oder eine Methylgruppe,

$R^{2a}$ für einen unverzweigten oder verzweigten Alkylenrest mit 1 bis 18 C-Atomen,

Y für ein H-Atom oder die Gruppen $-OR^{5a}$ und

Z für eine Gruppe -OH oder $-NR^{3a}R^{4a}$ steht, wobei $R^{3a}$, $R^{4a}$ und $R^{5a}$ für Wasserstoff oder einen Alkylrest mit 1 bis 4 C-Atomen stehen und die Summe a) + b) + c) 100 Gew.-% beträgt,

oder

(M) Polyisocyanat (PI) wie oben,

(N) natürliches Polymer (NP) wie oben und mindestens ein Mitglied der Gruppe bestehend aus (P), (Q) und (R) - jeweils wie oben.

**9.** Nach Verfahren gemäß Anspruch 7 veredeltes Papier.

## Claims

**1.** Composition comprising

(M) a polyisocyanate (PI) having (cyclo)aliphatically bonded isocyanate groups and ionic groups and/or polyether groups and at least one member from the groups consisting of

(N) a naturally occurring polymer (NP) from the group consisting of polysaccharides,

(P) a polysiloxane graft copolymer (SP 1),

(Q) a water-dilutable synthetic copolymer (SP 2) of olefinically unsaturated compounds,

a) comprising per 100 g of solid a total of from 60 to 250 milliequivalents of incorporated COOH groups, from 10 to 100% of which are neutralized, and

b) comprising from 15 to 20% by weight of chemically incorporated radicals of the formula -OR which form part of an ester group, R being a mono- or poly-olefinically unsaturated aliphatic hydrocarbon radical having 12 to 22 carbon atoms, and

(R) a hydroxyl-containing vinyl polymer (SP 3) obtainable by polymerizing monomer mixtures comprising

a) at least 5% by weight of styrene and/or α-methylstyrene, methacrylonitrile, acrylonitrile or mixtures of these monomers,

b) at least 5% by weight of (meth)acrylic esters of monofunctional alcohols having 1 to 12 carbon atoms,

c) from 0.1 to 35% by weight of one or more vinyl monomers of the formula

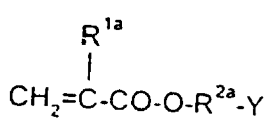

and/or

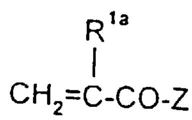

where

$R^{1a}$ represents a hydrogen atom or a methyl group,

$R^{2a}$ represents an unbranched or branched alkylene radical having 1 to 18 carbon atoms,

Y represents a hydrogen atom or the groups $-OR^{5a}$ and

Z represents a group -OH or $-NR^{3a}R^{4a}$, where $R^{3a}$, $R^{4a}$ and $R^{5a}$ represent hydrogen or an alkyl radical having 1 to 4 carbon atoms and the sum a) + b) + c) is 100% by weight,

or

(M) a polyisocyanate (PI) as above,

(N) a naturally occurring polymer (NP) as above, and at least one member of the group consisting of (P), (Q) and (R) - in each case as above.

**2.** Composition according to Claim 1, wherein polyisocyanate (M) has

α) a content of isocyanate groups of 10 - 700 milliequivalents per 100 g of polyisocyanate,

β) an average NCO functionality of ≥ 1.0,

γ) a content of ethylene oxide units of 0 to 30% by weight, based on the polyisocyanate, the polyethylene oxide chain having an average molecular weight (number-average) of 100 - 3500, and

δ) a content of tertiary amino groups and/or ammonium groups of 50-5000 milliequivalents per 100 g of polyisocyanate.

**3.** Composition according to Claim 1, wherein polymer (N) is chosen from the series consisting of starch, cellulose, hemicellulose, chitosans, xanthans, agar, galactomannans, carrageenan, pectin, alginates, plant gum and derivatives thereof.

**4.** Composition according to Claim 1, wherein component (P) is a graft copolymer SP 1 of

a) 40 to 70% by weight of a polysiloxane, as the graft substrate, terminated by hydroxyl groups and containing v mol% of recurring units of the formula

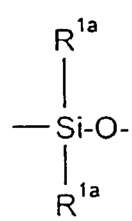

and w mol% of recurring units of the formula

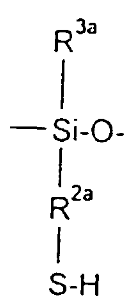

wherein

$R^{1a}$ represents alkyl radicals having 1 to 24 C atoms or aryl radicals having 6 to 10 C atoms,

$R^{2a}$ represents unbranched or branched alkylene radicals having 1 to 8 C atoms and

$R^{3a}$ represents alkyl radicals having 1 to 24 C atoms, aryl radicals having 6 to 10 C atoms, alkoxy radicals having 1 to 6 C atoms or a hydroxyl group or

$R^{2a}$ and $R^{3a}$, together with the Si atom, form a trivalent 5- or 6-membered ring with an unbranched or branched alkylene radical having 4 to 8 C atoms and

v is 80 to 99 mol% and

w is 1 to 20 mol% where v + w gives 100 mol%,

and the viscosity, measured at 25°C, of the OH-terminated polysiloxane is between 100 and 100,000 mPa.s, and

b) 30 to 60% by weight of graft monomers from the series consisting of styrene and/or $\alpha$-methylstyrene, (meth) acrylic esters, (meth)acrylonitrile and mixtures of these monomers, this series optionally additionally consisting of one or more vinyl monomers of the formula

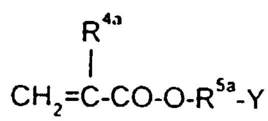

or

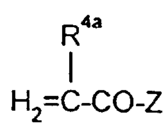

wherein

$R^{4a}$ represents a hydrogen atom or a methyl group,

$R^{5a}$ represents an unbranched or branched alkylene group having 1 to 18 C atoms,

Y represents an H atom or the groups -OH or $C_1$-$C_4$-alkoxy and

Z represents a group -OH or $-NR_2^{4a}$.

**5.** Composition according to Claim 1, wherein component (Q) is a copolymer SP 2 which is obtainable by polymerization of olefinically unsaturated dicarboxylic acid anhydrides with other unsaturated monomers, structural units of the formula

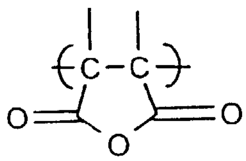

being formed,

b) subsequent partial reaction with a monohydric alcohol R-OH (2 to 50%) and

c) reaction of the COOH groups obtained in b) with an epoxide compound to the extent of 10 - 95% and neutralization of the remaining COOH groups with a base.

**6.** Composition according to Claims 1 to 5 in the form of aqueous dispersions.

**7.** Process for finishing paper, characterized in that cellulose-containing material is treated with a composition comprising

(M) a polyisocyanate (PI) having ionic groups and/or polyether groups and at least one member from the groups consisting of

(N) a naturally occurring polymer (NP) from the group consisting of polysaccharides,

(P) a polysiloxane graft copolymer (SP 1),

(Q) a water-dilutable synthetic copolymer (SP 2) of olefinically unsaturated compounds,

a) comprising per 100 g of solid a total of from 60 to 250 milliequivalents of incorporated COOH groups, from 10 to 100% of which are neutralized, and

b) comprising from 15 to 20% by weight of chemically incorporated radicals of the formula -OR which form part of an ester group, R being a mono- or poly-olefinically unsaturated aliphatic hydrocarbon radical having 12 to 22 carbon atoms,

(R) a hydroxyl-containing vinyl polymer (SP 3) obtainable by polymerizing monomer mixtures comprising

a) at least 5% by weight of styrene and/or α-methylstyrene, methacrylonitrile, acrylonitrile or mixtures of these monomers,

b) at least 5% by weight of (meth)acrylic esters of monofunctional alcohols having 1 to 12 carbon atoms,

c) from 0.1 to 35% by weight of one or more vinyl monomers of the formula

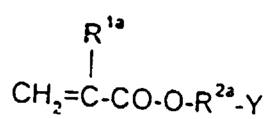

and/or

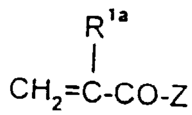

where

$R^{1a}$ represents a hydrogen atom or a methyl group,

$R^{2a}$ represents an unbranched or branched alkylene radical having 1 to 18 carbon atoms,

Y represents a hydrogen atom or the groups $-OR^{5a}$ and

Z represents a group -OH or $-NR^{3a}R^{4a}$, where $R^{3a}$, $R^{4a}$ and $R^{5a}$ represent hydrogen or an alkyl radical having 1 to 4 carbon atoms and the sum a) + b) + c) is 100% by weight,

or

(M) a polyisocyanate (PI) as above,

(N) a naturally occurring polymer (NP) as above, and at least one member of the group consisting of (P), (Q) and (R) - in each case as above,

it being possible for the individual components to be metered in independently of one another.

**8.** Process according to Claim 7, characterized in that the composition comprises:

(M) a polyisocyanate (PI) having (cyclo)-aliphatically bonded isocyanate groups and ionic groups and/or polyether groups and at least one member from the groups consisting of

(N) a naturally occurring polymer (NP) from the group consisting of polysaccharides,

(P) a polysiloxane graft copolymer (SP 1),

(Q) a water-dilutable synthetic copolymer (SP 2) of olefinically unsaturated compounds,

a) comprising per 100 g of solid a total of from 60 to 250 milliequivalents of incorporated COOH groups, from 10 to 100% of which are neutralized, and

b) comprising from 15 to 20% by weight of chemically incorporated radicals of the formula -OR which form part of an ester group, R being a mono- or poly-olefinically unsaturated aliphatic hydrocarbon radical having 12 to 22 carbon atoms,

(R) a hydroxyl-containing vinyl polymer (SP 3) obtainable by polymerizing monomer mixtures comprising

a) at least 5% by weight of styrene and/or α-methylstyrene, methacrylonitrile, acrylonitrile or mixtures of these monomers,

b) at least 5% by weight of (meth)acrylic esters of monofunctional alcohols having 1 to 12 carbon atoms,

c) from 0.1 to 35% by weight of one or more vinyl monomers of the formula

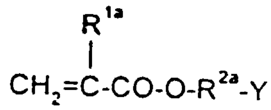

and/or

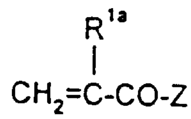

where

$R^{1a}$ represents a hydrogen atom or a methyl group,

$R^{2a}$ represents an unbranched or branched alkylene radical having 1 to 18 carbon atoms,

Y represents a hydrogen atom or the groups $-OR^{5a}$ and

Z represents a group -OH or $-NR^{3a}R^{4a}$, where $R^{3a}$, $R^{4a}$ and $R^{5a}$ represent hydrogen or an alkyl radical having 1 to 4 carbon atoms and the sum a) + b) + c) is 100% by weight,

or

(M) a polyisocyanate (PI) as above,

(N) a naturally occurring polymer (NP) as above, and at least one member of the group consisting of (P), (Q) and (R) - in each case as above.

**9.** Paper finished by the process according to Claim 7.

## Revendications

**1.** Agent contenant:

(M) un polyisocyanate (PI) comprenant des groupes isocyanate liés à un ou plusieurs radicaux (cyclo)aliphatiques et des groupes ioniques et/ou des groupes polyéther,

et au moins un membre choisi parmi les groupes constitués par

(N) un polymère naturel (NP) choisi parmi le groupe des polysaccharides,

(P) un copolymère greffé à base de polysiloxane (SP 1),

(Q) un copolymère synthétique (SP 2) de composés à insaturation oléfinique, apte à se diluer dans l'eau, possédant

a) une teneur totale en groupes COOH incorporés, neutralisés jusqu'à concurrence de 10 à 100%, de 60 à 250 milliéquivalents par 100 g de substance solide et

b) une teneur en radicaux de formule -OR incorporés par voie chimique, formant une partie d'un groupe ester, de 15 à 20% en poids, R représentant un radical d'hydrocarbure aliphatique comportant une ou

plusieurs insaturations oléfiniques, contenant de 12 à 22 atomes de carbone, et

(R) un polymère vinylique (SP3) contenant des groupes hydroxyle, que l'on obtient par polymérisation de mélanges de monomères constitués par

a) à concurrence d'au moins 5% en poids, du styrène et/ou de l'α-méthylstyrène, du méthacrylonitrile, de l'acrylonitrile, respectivement des mélanges de ces monomères,

b) à concurrence d'au moins 5% en poids, des esters (méth)acryliques d'alcools monofonctionnels contenant de 1 à 12 atomes de carbone,

c) à concurrence de 0,1 à 35% en poids, un ou plusieurs monomères vinyliques répondant aux formules:

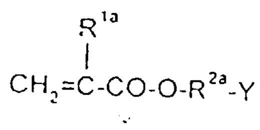

et/ou

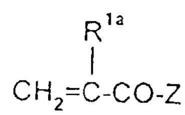

dans lesquelles

$R^{1a}$ représente un atome d'hydrogène ou un groupe méthyle,

$R^{2a}$ représente un radical alkylène à chaîne droite ou ramifiée contenant de 1 à 18 atomes de carbone,

Y représente un atome d'hydrogène ou le groupe $-OR^{5a}$, et

Z représente un groupe -OH ou un groupe $-NR^{3a}R^{4a}$, $R^{3a}$, $R^{4a}$ et $R^{5a}$ représentant un atome d'hydrogène ou un radical alkyle contenant de 1 à 4 atomes de carbone et la somme a) + b) + c) s'élevant à 100% en poids,

ou

(M) un polyisocyanate (PI) tel qu'indiqué ci-dessus,

(N) un polymère naturel (NP) tel qu'indiqué ci-dessus,

et au moins un membre choisi parmi le groupe constitué par (P), (Q) et (R) respectivement comme indiqué ci-dessus.

**2.** Agent selon la revendication 1, dans lequel le polyisocyanate (M) possède

α) une teneur en groupes isocyanate de 10 à 700 milliéquivalents par 100 g de polyisocyanate,

β) une fonctionnalité NCO moyenne ≥ 1,0,

γ) une teneur en unités d'oxyde d'éthylène de 0 à 30% en poids rapportés au polyisocyanate, la chaîne d'oxyde de polyéthylène possédant un poids molaire moyen (moyenne en nombre) de 100 à 3500, et

δ) une teneur en groupes amino tertiaires et/ou en groupes ammonium de 50 à 5000 milliéquivalents par 100 g de polyisocyanate.

3. Agent selon la revendication 1, dans lequel le polymère (N) est choisi parmi la série constituée par l'amidon, la cellulose, l'hémicellulose, les chitosanes, les xanthanes, l'agar-agar, les galactomannanes, le carragheen, la pectine, les alginates, du caoutchouc végétal et leurs dérivés.

4. Agent selon la revendication 1, dans lequel le composant (P) représente un copolymère greffé SP 1 constitué par

a) à concurrence de 40 à 70% en poids, un polysiloxane terminé par des groupes hydroxyle, à titre de substrat de greffage contenant v moles % d'unités structurales répondant à la formule:

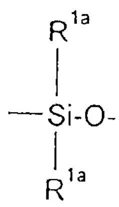

et w moles % d'unités structurales répondant à la formule:

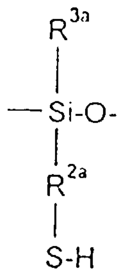

dans lesquelles

$R^{1a}$ représente des radicaux alkyle contenant de 1 à 24 atomes de carbone ou des radicaux aryle contenant de 6 à 10 atomes de carbone,

$R^{2a}$ représente des radicaux alkylène à chaînes droites ou ramifiées contenant de 1 à 8 atomes de carbone et

$R^{3a}$ représente des radicaux alkyle contenant de 1 à 24 atomes de carbone, des radicaux aryle contenant de 6 à 10 atomes de carbone, des radicaux alcoxy contenant de 1 à 6 atomes de carbone ou encore un groupe hydroxyle, ou bien

$R^{2a}$ et $R^{3a}$ forment, ensemble avec l'atome de silicium, un noyau trivalent penta- ou hexagonal comprenant un radical alkylène à chaîne droite ou ramifiée contenant de 4 à 8 atomes de carbone, et

v représente de 80 à 99 moles %, et

w représente de 1 à 20 moles %, v + w représentant 100 moles %,

et la viscosité du polysiloxane terminé par des groupes OH, mesurée à 25°C, s'élève à une valeur entre 100 et 100.000 mPa.s, et

b) à concurrence de 30 à 60% en poids, un monomère de greffage choisi parmi la série constituée par le styrène et/ou l'α-méthylstyrène, des esters (méth)acryliques, le (méth)acrylonitrile et des mélanges de ces monomères, cette série contenant le cas échéant en sus un ou plusieurs monomères vinyliques répondant aux formules:

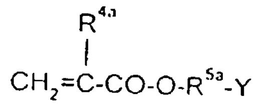

ou

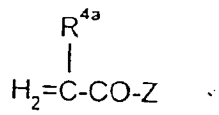

dans lesquelles

$R^{4a}$ représente un atome d'hydrogène ou un groupe méthyle,

$R^{5a}$ représente un groupe alkylène à chaîne droite ou ramifiée contenant de 1 à 18 atomes de carbone,

Y représente un atome d'hydrogène ou un groupe choisi parmi un groupe -OH ou un groupe alcoxy en $C_1$-$C_4$, et

Z représente un groupe -OH ou un groupe $-NR_2^{4a}$.

**5.** Agent selon la revendication 1, dans lequel le composant (Q) représente un copolymère SP2 que l'on obtient par a) polymérisation d'anhydrides dicarboxyliques à insaturation oléfinique avec d'autres monomères insaturés pour obtenir des unités structurales répondant à la formule:

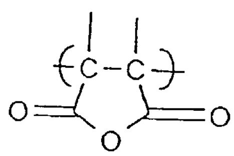

b) par mise en réaction partielle ultérieure avec un alcool monovalent R-OH (à concurrence de 2 à 50%) et

c) par mise en réaction des groupes COOH obtenus dans b) avec un composé époxyde jusqu'à concurrence de 10 à 95% et par neutralisation avec une base des groupes COOH encore présents.

**6.** Agent selon les revendications 1 à 5 sous la forme de dispersions aqueuses.

**7.** Procédé pour le façonnage du papier, caractérisé en ce qu'on traite une matière cellulosique avec un agent contenant:

(M) un polyisocyanate (PI) comprenant des groupes ioniques et/ou des groupes polyéther,

et au moins un membre choisi parmi les groupes constitués par

(N) un polymère naturel (NP) choisi parmi le groupe des polysaccharides,

(P) un copolymère greffé à base de polysiloxane (SP 1),

(Q) un copolymère synthétique de composés à insaturation oléfinique, apte à se diluer dans l'eau, possédant

a) une teneur totale en groupes COOH incorporés, neutralisés jusqu'à concurrence de 10 à 100%, de 60 à 250 milliéquivalents par 100 g de substance solide et

b) une teneur en radicaux de formule -OR incorporés par voie chimique, formant une partie d'un groupe ester, de 15 à 20% en poids, R représentant un radical d'hydrocarbure aliphatique comportant une ou plusieurs insaturations oléfiniques, contenant de 12 à 22 atomes de carbone, et

(R) un polymère vinylique (SP 3) contenant des groupes hydroxyle, que l'on obtient par polymérisation de mélanges de monomères constitués par

a) à concurrence d'au moins 5% en poids, du styrène et/ou de l'α-méthylstyrène, du méthacrylonitrile, de l'acrylonitrile, respectivement des mélanges de ces monomères,

b) à concurrence d'au moins 5% en poids, des esters (méth)acryliques d'alcools monofonctionnels contenant de 1 à 12 atomes de carbone,

c) à concurrence de 0,1 à 35% en poids, un ou plusieurs monomères vinyliques répondant aux formules:

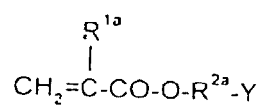

et/ou

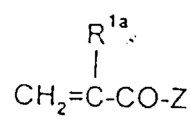

dans lesquelles

$R^{1a}$ représente un atome d'hydrogène ou un groupe méthyle,

$R^{2a}$ représente un radical alkylène à chaîne droite ou ramifiée contenant de 1 à 18 atomes de carbone,

Y représente un atome d'hydrogène ou le groupe $-OR^{5a}$, et

Z représente un groupe -OH ou un groupe $-NR^{3a}R^{4a}$, $R^{3a}$, $R^{4a}$ et $R^{5a}$ représentant un atome d'hydrogène ou un radical alkyle contenant de 1 à 4 atomes de carbone et la somme a) + b) + c) s'élevant à 100% en poids,

ou

(M) un polyisocyanate (PI) tel qu'indiqué ci-dessus,

(N) un polymère naturel (NP) tel qu'indiqué ci-dessus,

et au moins un membre choisi parmi le groupe constitué par (P), (Q) et (R) respectivement comme indiqué ci-dessus,
les composants individuels pouvant être ajoutés de manière dosée indépendamment l'un de l'autre.

**8.** Procédé selon la revendication 7, caractérisé en ce que l'agent contient:

(M) un polyisocyanate (PI) comprenant des groupes isocyanate liés à un ou plusieurs radicaux (cyclo)aliphatiques et des groupes ioniques et/ou des groupes polyéther,

et au moins un membre choisi parmi les groupes constitués par

(N) un polymère naturel (NP) choisi parmi le groupe des polysaccharides,

(P) un copolymère greffé à base de polysiloxane (SP 1),

(Q) un copolymère synthétique de composés à insaturation oléfinique, apte à se diluer dans l'eau, possédant

a) une teneur totale en groupes COOH incorporés, neutralisés jusqu'à concurrence de 10 à 100%, de 60 à 250 milliéquivalents par 100 g de substance solide et

b) une teneur en radicaux de formule -OR incorporés par voie chimique, formant une partie d'un groupe ester, de 15 à 20% en poids, R représentant un radical d'hydrocarbure aliphatique comportant une ou plusieurs insaturations oléfiniques, contenant de 12 à 22 atomes de carbone, et

(R) un polymère vinylique (SP 3) contenant des groupes hydroxyle, que l'on obtient par polymérisation de mélanges de monomères constitués par

a) à concurrence d'au moins 5% en poids, du styrène et/ou de l'α-méthylstyrène, du méthacrylonitrile, de l'acrylonitrile, respectivement des mélanges de ces monomères,

b) à concurrence d'au moins 5% en poids, des esters (méth)acryliques d'alcools monofonctionnels contenant de 1 à 12 atomes de carbone,

c) à concurrence de 0,1 à 35% en poids, un ou plusieurs monomères vinyliques répondant aux formules:

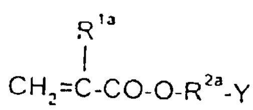

et/ou

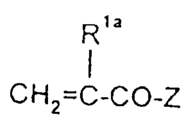

dans lesquelles

$R^{1a}$ représente un atome d'hydrogène ou un groupe méthyle,

$R^{2a}$ représente un radical alkylène à chaîne droite ou ramifiée contenant de 1 à 18 atomes de carbone,

Y représente un atome d'hydrogène ou le groupe $-OR^{5a}$, et

Z représente un groupe -OH ou un groupe $-NR^{3a}R^{4a}$, $R^{3a}$, $R^{4a}$ et $R^{5a}$ représentant un atome d'hydrogène ou un radical alkyle contenant de 1 à 4 atomes de carbone et la somme a) + b) + c) s'élevant à 100% en poids,

ou

(M) un polyisocyanate (PI) tel qu'indiqué ci-dessus,

(N) un polymère naturel (NP) tel qu'indiqué ci-dessus,

et au moins un membre choisi parmi le groupe constitué par (P), (Q) et (R) respectivement comme indiqué ci-dessus.

**9.** Papier façonné conformément au procédé selon la revendication 7.